(19) Europäisches Patentamt / European Patent Office / Office européen des brevets

(11) **EP 2 600 186 A1**

(12) **EUROPEAN PATENT APPLICATION**
published in accordance with Art. 153(4) EPC

(43) Date of publication:
05.06.2013 Bulletin 2013/23

(51) Int Cl.:
*G02C 13/00* (2006.01)     *G02C 7/02* (2006.01)

(21) Application number: 11812400.7

(22) Date of filing: 22.07.2011

(86) International application number:
PCT/JP2011/066715

(87) International publication number:
WO 2012/014810 (02.02.2012 Gazette 2012/05)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 27.07.2010 JP 2010167752

(71) Applicant: HOYA Corporation
Tokyo 161-8525 (JP)

(72) Inventor: YAMAKAJI, Tetsuma
Tokyo 161-8525 (JP)

(74) Representative: Betten & Resch
Patentanwälte
Theatinerstrasse 8
(Fünf Höfe)
80333 München (DE)

(54) **EYEGLASS LENS EVALUATION METHOD, EYEGLASS LENS DESIGN METHOD, EYEGLASS LENS MANUFACTURING METHOD, EYEGLASS LENS MANUFACTURING SYSTEM, AND EYEGLASS LENS**

(57)     For evaluating custom made eyeglass lenses using a visual fatigue function, the visual fatigue function includes at least one of or both of a positive relative convergence and a negative relative convergence of the positive relative convergence, the negative relative convergence, a positive relative accommodation, a negative relative accommodation and a vertical fusional vergence.

FIG. 3

EP 2 600 186 A1

**Description**

TECHNICAL FIELD

The present invention relates to a method of evaluating eyeglass lenses, the method being used for evaluating performance when the eyeglass lenses are designed or produced, and to a method of designing eyeglass lenses and a method of manufacturing eyeglass lenses using it.

BACKGROUND

For evaluating or designing eyeglass lenses, various evaluation methods and designing methods are proposed to obtain the optimal visibility, and especially a technique is proposed which is focusing on eyesight in a state in which glass lenses are worn. For example, patent document 1 (WO2002/088828) discloses technique for designing eyeglass lenses using a visual function. Patent document 2 (WO2004/018988) describes eyeglass lenses designed by considering the chromatic aberration of the visual function. Here, the visual function is a function representing eyesight, which is normalized with optical aberrations of the lenses and characteristics of eyeballs (relative accommodation values, relative convergence values, physiological astigmatic quantities), when viewing through eyeglass lenses (normalized eyesight such that, when corrected completely, it becomes 0 in logMAR).

SUMMARY OF THE INVENTION

However, in patent documents 1 and 2, the binocular vision functionality, at a time when eyeglasses are worn, is not considered at all. For example, since in patent document 1 the design method aims to be applied to a general-purpose lens, individual elements such as a relative accommodation and a relative convergence are not considered. Therefore, it is not suitable for designing optimal eyeglass lenses, for which individual information regarding a binocular vision is taken into consideration. Since it is for general-purpose lenses, naturally, a design of eyeglass lenses for both eyes is not considered. In patent document 2, though it is considered with respect to a chromatic aberration portion of the visual function, for other portions, as with the above patent document 1, a technical content is insufficient for an individual design in which a binocular vision is considered.

On the other hand, patent document 3 (Japanese translation of PCT international application No. HEI 2-39767A (Japanese Patent Provisional Publication No. SHO 57-10113A), patent document 4 (Japanese translation of PCT international application No. 2008-511033A) and patent document 5 (Japanese translation of PCT international application No. 2000-506628A) refer to visibility by both the left and right eyes at a time when the eyeglasses are worn.

The patent document 3 describes a desired condition in which the binocular vision functionality is realized. Namely, a range of an astigmatism in a progressive band, an arrangement of the astigmatism and an alignment error in a whole of a lens, prism ranges of left and right eyeglass lenses, and a condition on directions of skews induced by the prisms are described. However, from reevaluation of patent document 3, we found that the invention described in patent document 3 includes some serious defects.

Firstly, an aberration calculation of a line of fixation emitted from a lens is performed without considering the Listing's law at one eye, which is a primary movement of the eyeball. In this case, the calculation of a residual astigmatism becomes uncertain, and it cannot say that there is the predetermined effect described in the document. The movement of an eyeball of one eye can be considered as a rotational movement performed while centered at one point in the eyeball, that is, the center of the rotation. A frontal plane including the center of rotation at a position from where the eyeball is gazing front is called a Listing's surface. It is the law of major movements of an eyeball that the rotational axis of the eyeball lies within a Listing's surface, and it is called the Listing's law.

Secondly, it is written that progressive portions of the left and right lenses are within the predetermined prism ranges, and that almost the same astigmatisms and alignment errors are taken and defocuses are the same, therefore a stereoscopic vision (it appears that it is a binocular vision) is fine. However, in patent document 3, it is not shown that what balance of the astigmatisms and the alignment errors is fine for the stereoscopic vision, and the extent of fineness is not quantitatively shown. In this regard, it is not clear how the eyeglass lenses described in patent document 3 are configured.

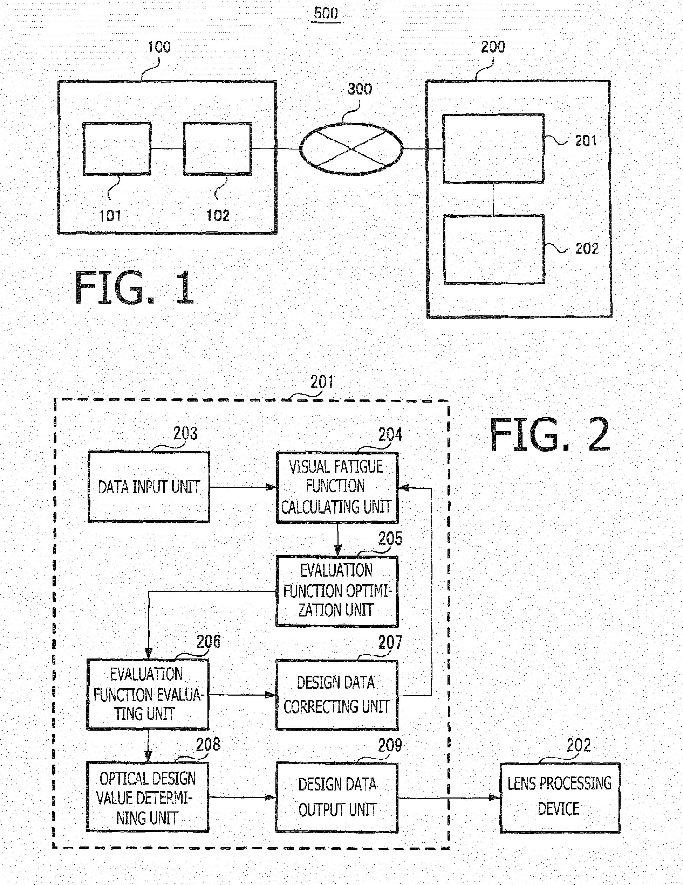

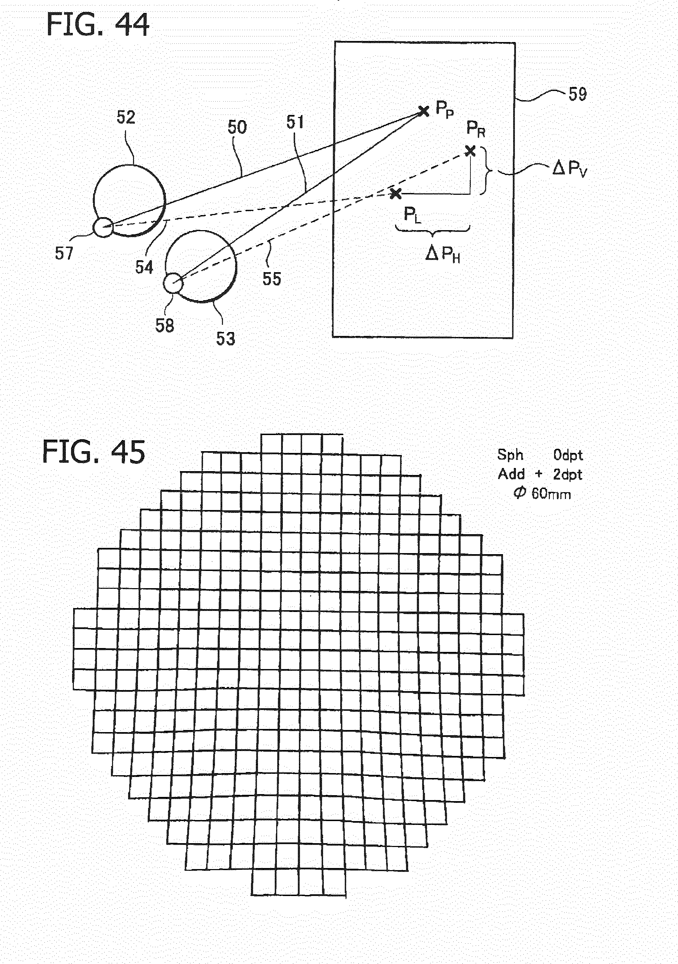

Thirdly, on page 5, lines 25 - 44 of patent document 3, the explanation of "Fig. 2" of the document is not for an optical system for a binocular vision. This figure is shown in Fig. 44. In Fig. 44, when eyeballs 57 and 58 look straight at a point $P_P$ on a subject surface 59, lines of sights 50 and 51 are directed to the point $P_P$. Eyeglass lenses 52 and 53 are arranged in front of the eyeballs 57 and 58. By the prism effect of the eyeglass lenses 52 and 53, for a left eye 57, it is seen that the point $P_P$ is placed at an intersection point $P_L$ of the line of sight 54 and the surface 59, and, for a right eye 58, it is seen that the point $P_P$ is placed at an intersection point $P_R$. It is described in lines 41-42 on the same page that the relationship between the lines of sights shown in Fig. 44 can be deemed as one eyeglass lens which is symmetrical with respect to a prime meridian. However, as it can be seen from Prentice's formula, (P = ( h $\times$ D ) / 10), a prism effect is proportional to a dioptric power. Therefore, this assertion is valid only for lenses such that the left lens and the right lens are identical.

Additionally, Prentice's formula is an approximation formula which is sufficient for ordinary use, and it means that prism P of a lens is proportional to a distance, h (in unit of mm), from the center and a diopter D. In short, since optical powers of a left lens and a right lens are generally different, the above described assertion is not obvious, and not established. Further, after the explanation of "Fig. 2" in patent document 3, the explanations are based on one of the left lens and the right lens throughout the document, without specifying a coordinate system and the origin that specify the target point $P_P$. Therefore, the configuration is not suitable for an optical system for a binocular vision functionality.

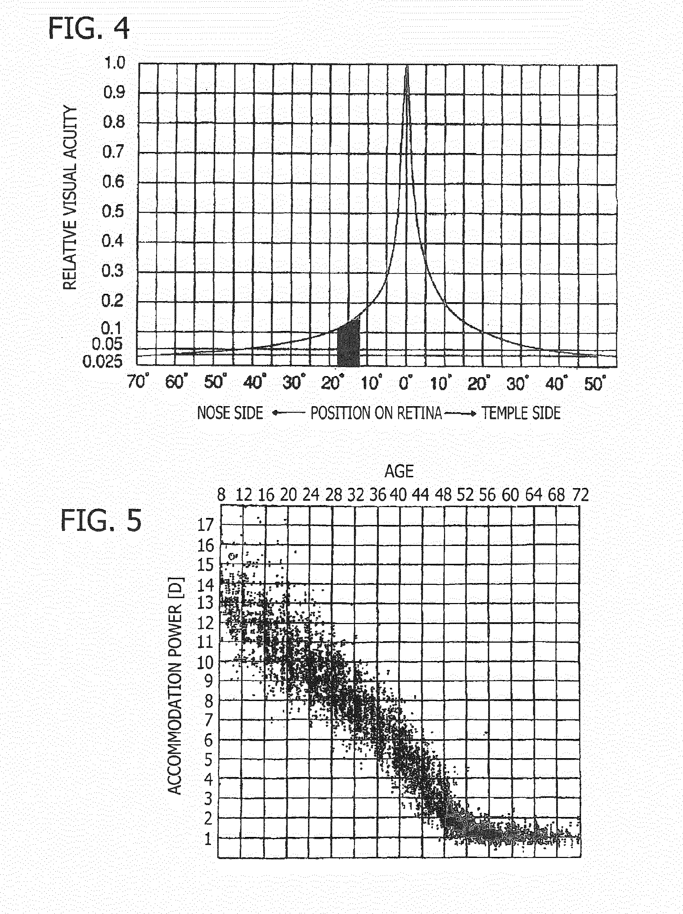

Fourth, the extent of the distortion shown in "Fig. 4" of patent document 3 is difficult to understand. This figure is shown in Fig. 45. The explanation of the figure in patent document 3 exists in line 17 on right column on page 5, where it is explained that the figure is an imaging figure of an equidistant and symmetrical lattice. "Fig. 4" of this document is a figure in which positional differences in horizontal direction are drawn from the point P, when a grid point of the lattice in the surface is set to the point P. Especially, it can be seen that it is distorted at the lower peripheral part. In lines 25-27 on the same column of patent document 3, it is explained that this is a saddle-shaped distortion or a barrel distortion. Namely, in patent document 3, it is taught that there is a relationship between the positional differences in horizontal direction, $\Delta P_H$, and the distortion. When it is assumed that there is a relationship between the positional differences in horizontal direction, $\Delta P_H$, and the distortion, the lattice is distorted when all the lines of sights 54 and 55 have intersection points other than the point $P_P$ on the surface 59. However, in this case, since the positional differences in horizontal direction are 0, a contradiction arises in that the above described "Fig. 4" becomes a figure which is not distorted. Therefore, the positional differences in horizontal direction, $\Delta P_H$, has no relationship with the distortion. Further, it is described that a distorted figure is processed as an image drawn with straight lines by a brain. However, a basis is not described regarding, to what extent the figure is distorted, the figure can be processed as lines, though it is an important matter. Therefore, it cannot be clearly understood whether the distortion shown in Fig. 45 becomes straight lines in a brain or not.

Fifth is that the target is on the surface. Basically, the target is arbitrarily determined by a designer. Therefore, in general, eyeglass lenses are designed so that performance of the eyeglass lenses becomes higher at an arbitrarily target determined by a designer. However, in patent document 3, the evaluation method is limited to candidates of the target which are adopted for eyeglass lenses for reading characters on a tight news paper or on a wall. Points within the target other than a fixation point in patent document 3 have big differences in distances from both of the eyeballs. Therefore, it becomes difficult to simultaneously adjust an error in power from the fixation point, a residual astigmatism, and prism. Consequently, the prism becomes bigger. Therefore, in a system in which the target is on a surface, it is difficult to evaluate a binocular vision.

In patent document 4, a design method for eyeglass lenses is proposed. In the design method, a state, in which a front view direction of a person wearing a pair of eyeglasses is shifted toward a side of a dominant eye, is considered. However, patent document 4 includes the problems described below.

Firstly, an object to be measured is a living body. Thus, there is a problem on accuracy of measurement. In the example described in paragraph 0030 of patent document4, it is written that the shift is 2 cm. If it is 2 cm, it is easy to measure, but if the shift is smaller, it becomes difficult to stably measure. It is described in paragraph 0063 of patent document 2 that it can be measured with "an absolute error of less than or equal to 3 mm." However, taking into consideration that an ordinary amount of an inset for near vision in a progressive power lens is 2.5 mm, the amount of the error is very large.

The second problem is that a phenomenon that "a front view direction is shifted toward a side of a dominant eye" contradicts Hering's law of equal innervations, which is the only one law regarding binocular eye movements. It is difficult to improve a binocular vision functionality by designing eyeglass lenses through a measure which is based on a phenomenon contradicting Hering's law of equal innervations. Here, an explanation of Hering's law of equal innervations can be seen in non-patent document 15 (written by Ryoji Osaka, Sachio Nakamizo, and Kazuo Koga, "Binocular Movement and Hering Theory, Experimental Psychology of eye movement", The University of Nagoya Press, (1993), Chapter 3, p.60-61, written by Sachio Nakamizo). Hering's theory regarding binocular movement consists of a hypothesis that an innervation of version (ipsilateral binocular movement), which generates binocular movement, and an innervation of vergence (contralateral binocular movement) exist, a hypothesis of equal innervations of both eyes that means amounts of innervations assigned to respective eyes are always equal (Hering's law), and a hypothesis of additivity of innervations that means additivity holds between these two types of innervations.

Further, as a different opinion, it is known that a center of rotation is not fixed and it moves as well as shifts, during ocular movement. It is known that the center of rotation is such that it does not rotate while centered by a single point and it rotates while centered by different points depending on its use. The assertion of "shift of the front view direction" in patent document 4 can be explained from the fact that a center of rotation of an eyeball itself shifts. Namely, when it is considered that centers of rotation move, a midpoint between the centers of rotation of left and right eyeballs also moves, and a front view direction also moves. In this manner, it is considered that an assumption that left and right eyeballs symmetrically move better conforms to the physiological fact than the assumption that left and right eyeballs asymmetrically move, which is insisted by patent document 4.

Thirdly, it is written in paragraph 0039 of patent document 4 that "a superior binocular fusion is brought." However, the extent is not clear. Specifically, it is written that if an occurred astigmatism (it is considered a residual astigmatism) is less than or equal to 0.5 diopter, then it is a comfortable field of vision. However, an error in power occurs depending on a target distance. Therefore, a comfortable field of vision is not realized, except for the case in which it is supposed that the target is placed at a position at which the error in power is 0. In an embodiment of patent document 4, two figures, which are a figure of errors in power and a figure of occurred astigmatisms, are shown, depending on conditions of observations. However, their balance are not mentioned. Therefore, it can be hardly understood whether comfortable fields of vision can be obtained, without showing the balance or relationship between an error in power and an occurred astigmatism.

Further, it is incorrect to insist that "a binocular fusion becomes better" by diagrammatically showing only errors in power and occurred astigmatisms. A disorder in which a binocular vision is disabled even if left and right eyes are gaining good abilities to see can be found mainly in many squint patients. In a conventional evaluation of an error in power and an astigmatism such as the evaluation in this patent document 4, the evaluation of performances specific to a binocular vision is not suitable.

Fourth, as in the case of patent document 3, the object of this patent is a surface, as it is apparent from "Fig. 1" or "Fig. 4" of patent document 4. Namely, things that are similar to the fourth indication regarding patent document 3 can be said.

In patent document 5, a technique regarding an eyeglass lens of so-called a wrap-around type, the lens being curved from its front towards an ear side, is disclosed. Further, on page 13 or page 15 of patent document 3, there are some descriptions about off-axis prismatic disparity. Here, defects regarding a binocular vision, the binocular vision being the thesis in patent document 5, are mainly described.

Firstly, it is written that techniques disclosed in patent document 5 are a technique about an eyeglass lens of a wrap-around type or an eyeglass lens of a protective eyewear. However, their configurations are unclear. In the main invention described in patent document 5, it is assumed that there are a prescribed area and a peripheral temporal area. The difference between these two areas lies in shapes of surfaces, as described in pages 28-30 of patent document 5. Here, a method of explaining the difference is not based on evaluation by ray tracing calculations which are commonly used at present, but it is a simplified method which calculates from a shape of a lens surface which has been used for the explanation of a progressive lens in the past. Therefore, the refractive power and the astigmatism are derived values of a curve which are calculated from derivatives of the surface. Thus they are different from those calculated by ray tracing. Further, similarly, there is no description regarding consideration of the Listing's law of movement of an eyeball, which is usually taken into consideration for designing at present. Therefore, it is different from an evaluation or a design which is based on a physiological basis, such as the Listing's law. Further, the peripheral temporal area is so arbitrarily that the difference from the prescribed area becomes not clear. Thus the peripheral temporal area is not forming a limiting condition. Therefore, it can be considered that the description is only valid for normal design of a lens.

Secondly, regarding the definition of off-axis prismatic disparity described in a lower part of page 13 of patent document 5, it is only described that "a defect on a binocular vision arises when an astigmatism at a temporal part and an astigmatism at a nasal part are not equal." However, the description is insufficient and it cannot be understood what astigmatisms are referred to. Further, as a method of correcting the off-axis prismatic disparity, there is only a description on page 15 of patent document 5 that an aspheric surface is adopted. Thus, the description is insufficient. In addition, though it is clear that the evaluation is performed with a single eye lens, it is concluded on page 13 of patent document 5 that "there is a defect on a binocular vision." The ground of the conclusion is not clear.

Thirdly, on page 15 of patent document 5, an adjustment among a refractive power, an astigmatism, and a disparity of a prism, and a balance of elements for an optical correction are mentioned. However, the description that a defect on a binocular vision is acceptable as long as the defect is within a range of the values of the table on page 15 cannot be understood. It can be read from this table that a correction amount decreases as a prescribed lens power becomes stronger. It can be read that, "an error is sufficiently corrected with a smaller correction and the defect on the binocular vision is acceptable," mean that when the prescribed lens power becomes stronger, a patient's tolerance on a binocular vision becomes greater. This assertion is difficult to understand, since it is a description of a tolerance based on single eye evaluation. With the subject matter of patent document 5, in which even a determination method of a tolerance of a binocular vision is not disclosed, it is hard to predict whether it is possible to design so that a tolerance becomes less than or equal to this tolerance, as with a normal standard for eyeglass lenses. Namely, with a description of such a tolerance in a state in which even a binocular vision is not defined, it is not easy to apply this tolerance to a lens design of another general prescription.

Here, it seems that the evaluation of a binocular vision through the single eye evaluation is based on a reason that a temporal portion and a nasal portion must be equal, since, when looking right, a right temporal portion is used in a right lens and a nasal portion is used in a left lens. However, this is a case where there is a precondition that a left lens and a right lens are the same, for example, as addressed in third problem of patent document 1. Such a prescription is very rare. Further, suppose a case in which it is asserted that prescriptions for a left eye and a right eye are almost the same. In this case, taking into consideration that the sensitivity limit in angle of sensory fusion is about 10 seconds in angle, it is difficult to capture a binocular vision with such a rough concept. Moreover, when applying to general-purpose lenses, it is problematic to apply the evaluation and the design that are based on such a tolerance, which lacks a physiological basis, to a human body, even if left and right prescriptions are not known in advance. As a result, there is a risk that it gives discomfort or it increases tiredness.

In view of the above described problems, the object of the present invention is to propose an evaluation function taking into account an evaluation result obtained by quantitatively evaluating the binocular vision functionality based on a physiologic knowledge, and to evaluate, design and manufacture the eyeglass lenses superior in the binocular vision functionality based on the evaluation function.

To solve the above described problem, according to the method of designing eyeglass lenses according to the present invention: when a positive relative convergence, a negative relative convergence, a positive relative accommodation, a negative relative accommodation and a vertical fusional vergence, which are individual measurement values relating to binocular vision, are defined as relative measurement values, at least one of or both of the positive relative convergence and the negative relative convergence is included in an individual relative measurement value. The method comprises determining optical design values for eyeglass lenses by optimizing binocular vision while using, as an evaluation function for the optimizing, a function obtained by adding the visual fatigue functions including the relative measurement values as factors at respective evaluation points of an object.

The eyeglass lens manufacturing method according to the present invention comprises manufacturing the eyeglass lenses based on the optical design values determined by the above described eyeglass lens design method. The eyeglass lens evaluation method according to the present invention evaluates binocular vision while using, as an evaluation function for calculation of the optimizing, a function obtained by adding the above described visual fatigue functions including the relative measurement values as factors at respective evaluation points.

An eyeglass lens manufacturing system according to the invention is a system in which an ordering side computer having a function of executing a process for ordering the eyeglass and is installed on an eyeglass lens ordering side, a manufacturing side computer having a function of receiving information from the ordering side computer and executing a process necessary for receiving an order for the eyeglass lens are connected via a network. The ordering side computer transmits information necessary for designing the eyeglass lenses including at least one of or both of a positive relative convergence and a negative relative convergence, to the manufacturing side computer. The manufacturing side computer includes: a data input unit to which data including the relative measurement value transmitted from the ordering side computer is inputted; a visual fatigue function calculation unit that calculates optical performance values at a plurality of evaluation points of the eyeglass lenses based on the inputted data; an evaluation value optimization unit that optimizes the optical performance values by using, as an evaluation function, a function obtained by adding visual fatigue functions including, as factors, the relative measurement values including at least one of or both of the positive relative convergence and the negative relative convergence; an evaluation function evaluating unit that evaluates the optical performance values by comparing the evaluation function with a predetermined threshold; a design data correction unit that corrects design data when the values of the visual fatigue functions do not reach a predetermined convergence condition as a result of the evaluation by the evaluation value evaluating unit; an optical design value determination unit that determines the design data based on a result of evaluation finished for each evaluation point by the evaluation function evaluating unit; a design data output unit that supplies the final design data obtained by the optical design value determination unit, to a device for processing a lens.

The eyeglass lenses according to the invention are manufactured by the above described eyeglass lens manufacturing method and the eyeglass lens manufacturing system.

Generally explaining the visual fatigue function, first there is Percival's area of comfort in the field of eyeglass lenses. That is, the area within 1/3 of the relative convergence and 3m angle is called Percival's area of comfort. In the present invention, a corrected area which is 1/3 of each relative measurement value and has a threshold value of the angle of convergence according to the age is defined as Percival's area of comfort. As described, for example, in patent document 16 ("Relationship between visual fatigue and inconsistency between a focus adjustment and convergence of both eyes in a three-dimansional image vision", Masaki Emoto, visual science, vol. 24, No. 1 (2003) p13), and in patent document 17 ("Horizontal binocular disparity and visual fatigue during stereo display observation", VISION Vol. 17, No. 2, 101-112, 2005), the relative measurement value deeply relates to the motor fusion and the visual fatigue. Shortage of the relative measurement value causes the fatigue. The inventor of the present invention focused on this fact, and noticed that the eyeglass lenses designed such that the convergence aberration and the error in power do not exceed 1/3 of the relative measurement value. The convergence aberration is defined as the difference with respect to the convergence angle reference value which is the angle of convergence of the lines of fixation passing through the design reference points of the eyeglass lenses. therefore, in the present invention, the relative measurement values are obtained from the orderer in accordance with the lens to be designed. If the relative measurement value is one of or both of the positive relative convergence and the negative relative convergence, the other values can be calculated form one of or both of the positive relative convergence and the negative relative convergence. If the relative measurement value cannot be obtained from the orderer, the relative measurement value may be approximated by calculation from the age as described later, and using the approximated value as the relative measurement value is also within the scope of the present invention. By executing the evaluation and design by taking the relative measurement value obtained as described above in the evaluation function, the binocular vision of the eyeglass lenses can be enhanced.

In the present invention, the classification into the comfortable area and the visual fatigue are is made by using 1/3 of the relative measurement value as a threshold value. Since the visual fatigue does not have a unit, it is preferable that the visual fatigue function is normalized to be a increasing function which is zero when both of the convergence aberration and the error in power are zero and approaches 1 as the convergence aberration and the error in power increases in the comfortable area , and the visual fatigue function becomes 1 in the visual fatigue area.

When considering a three-dimensional space having the horizontal axis as the angle of convergence, the vertical axis as the vertica fusional vergence of the motor fusion, and the depth axis as the accommodation for classification into the comfortable area and the visual fatigue area, it is preferable that the classification into the comfortable area and the visual fatigue area is made by using the judgment criterion as to whether it is the inside or the outside of the closed surfaces whose threshold value is 1/3 of the relative measurement value.

Furthermore, it is preferable to obtain the angle of convergence and the convergence aberration at the evaluation point while defining 1/3 of the positive relative convergence or the negative relative convergence of the relative measurement values as the threshold value, along the axis of the above described angle of convergence. It is preferable that, for the convergence aberration, the plane parallel component which is a projected component of the median line of the lines of fixation for which the angle of convergence at the evaluation point is obtained, with respect to the plane perpendicular to the median plane, and the classification into the comfortable area and the visual fatigue area is made while using the difference between the value of the plane parallel component of the convergence aberration and the above described threshold value. The median line as used herein means a straight line which, when a straight line is expressed by a direction cosine, has an average of the direction cosines of the left and right lines of fixation, and which passes through a center (origin) of the rotation centers of the left and right eyeballs on the image side, and passes through the evaluation point of the object on the object side.

On the above described axis of the accommodation, the classification into the comfortable area and the visual fatigue area may be made by defining, as the threshold value, 1/3 of the positive relative accommodation or the negative relative accommodation of the relative measurement values, and by using the difference between the error in power obtained at the evaluation point and the threshold value, as the judgment criterion of the relative accommodation.

Furthermore, it is preferable, on the axis of the vertical fusional vergence of the motor fusion, to define 1/3 of the vertical fusional vergence of the relative measurement values as the threshold; to determine the convergence aberration defining the difference with respect to the convergence angle reference values being the angle of convergence at the design reference point; to determine the plane perpendicular component which includes a median line of the lines of fixation for which the angle of convergence at the evaluation point is obtained and which is a projected component to a plane parallel with the median plane; and to classify into the comfortable area and the visual fatigue area by using the difference between the value of the plane perpendicular component of the convergence aberration and the threshold value. It is preferable that the classification into the comfortable area and the visual fatigue area is made with reference to whether it is the inside or the outside of the closed surface having a predetermined relationship whose threshold values are 1/3 of the relative convergence, the relative accommodation and the vertical fusional vergence.

Furthermore, the definition of the visual fatigue function including the sensory fusion described below is preferable. As opposed to the motor fusion area measured by the relative measurement value, the fusion not accompanied by motion of eyes and accommodation is called the sensory fusion. Regarding the relative convergence, the relative accommodation and the vertical fusional vergence, the measurement values are called the horizontal component of the Panum's fusional area, the focal depth (or the depth of field) and the vertical component of Panum's fusional area, respectively. The sensory fusion area is an area in which the visual fatigue can be neglected. Therefore, in the sensory fusion area, the visual fatigue function is defined as 0. Then, since the sensory fusion area is included in the comfortable area, the visual fatigue function which takes values of 0 to 1 can be defined within this range. In this case, the sensory fusion area, the motor comfortable area and the visual fatigue areas are obtained, the comfortable area is an area including the sensory fusion area and the motor comfortable area.

As described above, in the present invention, we proposes the visual fatigue function which, when the measurement value of the binocular vision during the wearing as the above described "relative measurement value" includes one of or both of the positive relative convergence and the negative relative convergence as the relative measurement values, and which includes the relative measurement values as factors. According to the invention, by executing the optimization using the evaluation function obtained by adding the visual fatigue function at the respective evaluation points of the object, the evaluation and design of the eyeglass lenses are performed.

Advantages of the Invention

According to the invention, by using the visual fatigue function which takes into consideration the relative measurement values which is the measurement value relating to the binocular vision, it becomes possible to provide the eyeglass lenses whose binocular vision is enhanced.

BRIEF DESCRIPTION OF THE DRAWINGS

Fig. 1 is a schematic diagram of a manufacturing system according to an embodiment of an eyeglass lens manufacturing method of the present invention.

Fig. 2 is a functional block diagram showing a function of a manufacturing side computer in the manufacturing system according to the embodiment of the eyeglass lens manufacturing method of the present invention.

Fig. 3 is a diagram showing a flowchart according to the embodiment of the eyeglass lens manufacturing method.

Fig. 4 is a diagram showing a relative eyesight with respect to a position on a retina.

Fig. 5 is a diagram (a Duane diagram) showing a relationship between an age and an accommodation by Duane.

Fig. 6 is a diagram showing an area of comfort derived from a Peters diagram for 5-15 year-old.

Fig. 7 is a diagram showing an area of comfort derived from a Peters diagram for 25-35 year-old.

Fig. 8 is a diagram showing an area of comfort derived from a Peters diagram for 45- 55 year-old.

Fig. 9 is a diagram showing an area of comfort derived from a Peters diagram for 75 year-old.

Fig. 10 is a diagram showing an Object-Eyeglass Lens-Eyeball System for explaining "an object" used in an embodiment of an eyeglass lens evaluation method of the present invention.

Fig. 11 is a diagram showing a reference value of an angle of convergence on an image side in the Object-Eyeglass Lens-Eyeball System used in the embodiment of the eyeglass lens evaluation method of the present invention.

Fig. 12 is a diagram showing a reference value of the angle of convergence on an object side in the Object-Eyeglass Lens-Eyeball System used in the embodiment of the eyeglass lens evaluation method of the present invention.

Fig. 13 is an explanatory diagram of a surface perpendicular direction of a convergence aberration defined on the image side, the explanatory diagram viewing the Object-Eyeglass Lens-Eyeball System shown in Fig. 11, which is used for the embodiment of the eyeglass lens evaluation method of the present invention, from a perpendicular direction with respect to a median plane.

Fig. 14 is an explanatory diagram of a surface perpendicular direction of a convergence aberration defined on the object side, the explanatory diagram viewing the Object-Eyeglass Lens-Eyeball System shown in Fig. 12, which is used for the embodiment of the eyeglass lens evaluation method of the present invention, from the perpendicular direction with respect to the median plane.

Fig. 15 is a diagram showing an angle of convergence on the image side at an evaluation point of the Object-Eyeglass Lens-Eyeball System used in the embodiment of the eyeglass lens evaluation method of the present invention.

Fig. 16 is a diagram showing an angle of convergence on the object side at the evaluation point of the Object-Eyeglass Lens-Eyeball System used in the embodiment of the eyeglass lens evaluation method of the present invention.

Fig. 17 is a diagram showing a configuration of the Object-Eyeglass Lens-Eyeball System in a comparison example.

Fig. 18 is a diagram showing a surface parallel component of a convergence aberration of example 1 in the eyeglass lens evaluation method of the present invention.

Fig. 19 is a diagram showing a surface perpendicular component of the convergence aberration of example 1 in the eyeglass lens evaluation method of the present invention.

Fig. 20 is a diagram showing a fusion state through eyeglass lenses for both eyes of example 1 in the eyeglass lens evaluation method of the present invention.

Fig. 21 is a diagram showing values of visual fatigue functions of example 1 in the eyeglass lens evaluation method of the present invention.

Fig. 22 is a diagram showing a surface parallel component of a convergence aberration of example 2 in the eyeglass lens evaluation method of the present invention.

Fig. 23 is a diagram showing a surface perpendicular component of the convergence aberration of example 2 in the eyeglass lens evaluation method of the present invention.

Fig. 24 is a diagram showing a fusion state through eyeglass lenses for both eyes of example 2 in the eyeglass lens evaluation method of the present invention.

Fig. 25 is a diagram showing values of visual fatigue functions of example 2 in the eyeglass lens evaluation method of the present invention.

Fig. 26 is a diagram showing a surface parallel component of a convergence aberration of example 3 in the eyeglass lens evaluation method of the present invention.

Fig. 27 is a diagram showing a surface perpendicular component of the convergence aberration of example 3 in the eyeglass lens evaluation method of the present invention.

Fig. 28 is a diagram showing a fusion state through eyeglass lenses for both eyes of example 3 in the eyeglass lens evaluation method of the present invention.

Fig. 29 is a diagram showing values of visual fatigue functions of example 3 in the eyeglass lens evaluation method of the present invention.

Fig. 30 is a diagram showing a surface parallel component of a convergence aberration, after being optimized, of example 4 in the eyeglass lens evaluation method of the present invention.

Fig. 31 is a diagram showing a surface perpendicular component of a convergence aberration, after being optimized, of example 4 in the eyeglass lens evaluation method of the present invention.

Fig. 32 is a diagram showing a fusion state through the eyeglass lenses for the both eyes, after being optimized, of example 4 in the eyeglass lens evaluation method of the present invention.

Fig. 33 is a diagram showing values of visual fatigue functions, after being optimized, of example 4 in the eyeglass lens evaluation method of the present invention.

Fig. 34 is a Donders diagram by Hatada.

Fig. 35A is a diagram showing a sensory fusion, and Fig. 35B is a diagram showing motor fusion.

Fig. 36A is an example of calculations of angles of convergence when a pupillary distance PD is 60 mm, and Fig. 36B is an example of calculations of angles of convergence when a pupillary distance PD is 65 mm.

Fig. 37 is a diagram showing the Panum's fusional area with respect to a spatial frequency of an object.

Fig. 38 is a diagram showing a relationship between a horizontal retinal disparity and a perceptual depth.

Fig. 39 is a diagram (Peters diagram) showing a relationship between errors in a refractive power of eyeballs and eyesight for examinees of 5-15 year-old.

Fig. 40 is a diagram (Peters diagram) showing a relationship between the errors in the refractive power of eyeballs and eyesight for examinees of 25-35 year-old.

Fig. 41 is a diagram (Peters diagram) showing a relationship between the errors in the refractive power of eyeballs and eyesight for examinees of 45-55 year-old.

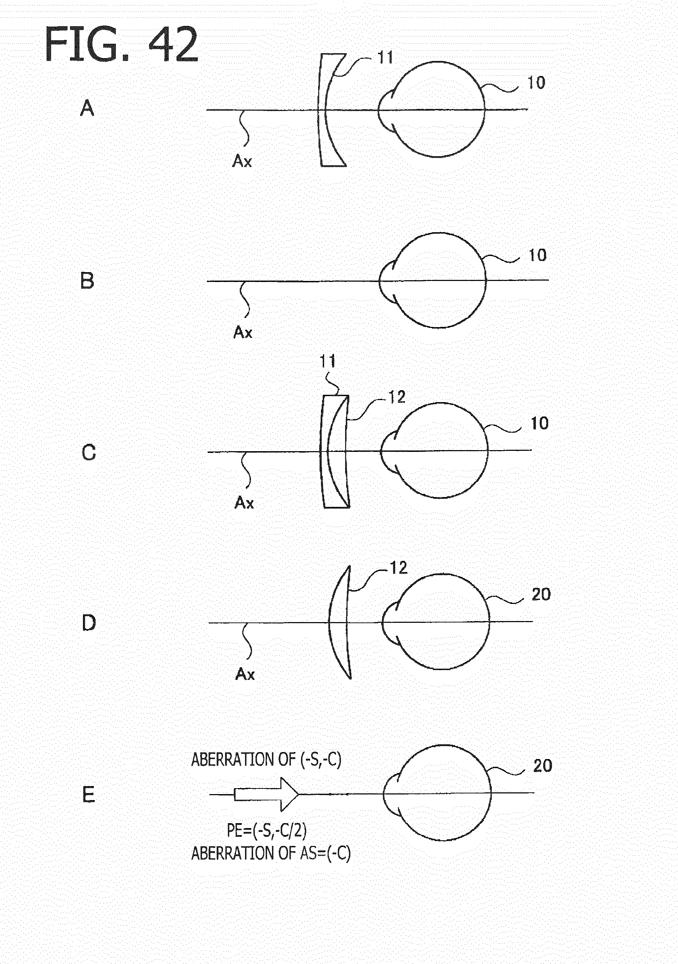

Fig. 42A through Fig. 42E are explanatory diagrams showing degradations of eyesight when an examinee, whose Peters diagram is a normal vision, wears eyeglass lenses of a reverse power.

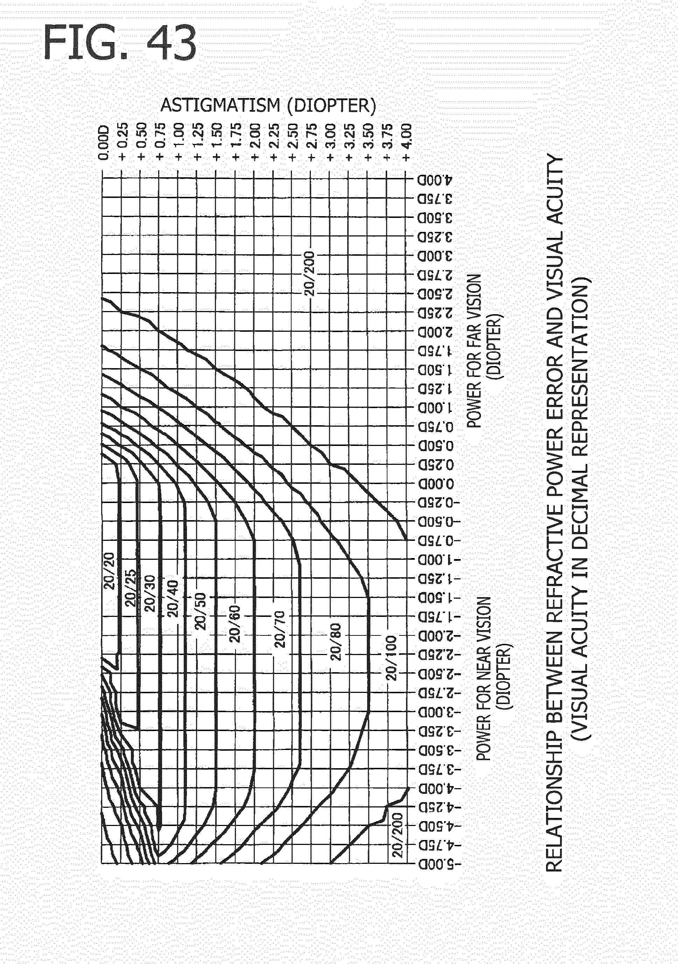

Fig. 43 is a diagram showing a visual function for a single eye which is derived from the Peters diagram for 5-15 year-old.

Fig. 44 is a diagram showing a disparity on an object surface in a conventional technique.

Fig. 45 is a diagram showing a distortion in a conventional technique.

DETAILED DESCRIPTION OF EMBODIMENTS

In the following, embodiments for carrying out the present invention are explained. However, the invention is not limited to the embodiments described below. The explanations are given in the following order.

(1) An embodiment of a manufacturing system and a manufacturing method for eyeglass lenses
(2) An embodiment of a design method for eyeglass lenses
(3) Examples

Prior to a specific explanation of an embodiment of the present invention, technical assumptions and terms used in the embodiment are explained.

In order to perform an evaluation or design an eyeglass lens, it is necessary to determine a design reference point. This design reference point slightly differs for a single focus lens and for a multifocal lens. Thus, they are separately explained. For a single focus lens, a design reference point is a position at which prescription values (a spherical diopter power, an astigmatism degree, astigmatism axes, a prism value, a prism axis) are measured, and, in addition, at which a line of fixation and a lens crosses. This point is also called as a point of view, an eye point, or an optical centration point. When there is no prism, the design reference point is treated the same as an optical center. In a normal prescription, a design reference point of a lens is matched with a pupillary distance in the horizontal direction, and is matched with slightly below a pupil (about 10 degrees while centered by a center of rotation, about 4mm) in the vertical direction, then it is put into a frame. For a reading lens, no individual design is specially performed and it is substituted by a general-purpose lens. Thus, for a prescription of a reading lens, a design reference point is provided at a position where a line of fixation from an object distance (25 cm - 50 cm) crosses with the lens, and in the horizontal direction, the design reference point is set to slightly shorter distance (by 2-5 mm) (this is called a near pupillary distance and sometimes abbreviated as NPD) than the pupillary distance. In the vertical direction, the design reference point is matched with slightly below a pupil (about 20 degrees while centered by a center of rotation, about 9 mm), and it is put into a frame. For a multifocal lens, such as a progressive lens, reference points are separately provided for points to measure prescription values for far vision (a spherical diopter power, an astigmatism degree, astigmatism axes), an eye point (a point to be matched with a pupil), a prism measurement point, prescription values for near vision (powers added to the prescription values for far vision, namely, an added power). Usually, the eye point is matched with a pupil, and the reference points are put into a frame.

In the embodiment, a lens design is performed using a generally known ray tracing method. For example, in non-patent document 1 (Written by Tomowaki Takahashi "Lens Design," Tokai University Press (1994)), techniques regarding an optimization design of a lens by a ray tracing method and a wavefront aberration are described. A wavefront aberration is described in non-patent document 2 (Takeshi Noguchi et al, "ACTIVE OPTICS EXPERRIMENTS I, SHACK-HARTMAN WAVE-FRONT ANALYZER TO MESURE F/5 MIRRORS", Publ. Natl. Astrron. Obs. Japan Vol.1, (1989), p. 49-55), etc. Additionally, in the technical field of eyeglass lenses, for a lens design, a lens measurement device which calculates an aberration (an error in power, an astigmatism, etc.) from a wavefront measurement after passing through an eyeglass lens is used.

An aberration caused by a lens along a principal ray entering a center of rotation of an eyeball from an object, when the object is viewed through an eyeglass lens, can be approximated by low-order aberrations, since an eyeball's pupil diameter is small. Here, the low-order aberrations in the technical field of eyeglass lenses are explained. The low-order aberrations include, for example, an error in power, a residual astigmatism, and a chromatic aberration.

Usually, for a distance lens, it is prescribed such that a refractive power of an eyeball is subtracted from a refractive power of a lens, so that an object in a front distant place can be clearly seen at a design reference point (usually, a position of the lens when an eyeball sees the front distant place through the lens). It can be said that an insufficient refractive power is compensated by a lens. At that time, an aberration is 0. In the prescription, when an astigmatism is at an eyeball at the design reference point, the astigmatism matches with an astigmatic axis of a lens. The astigmatic axis crosses perpendicularly with the principal ray, and, further, the astigmatic axis is a principal meridian of the refractive power. The principal meridian is, as with the eyeball, a path of a ray which is from an object and reaches to the center of rotation of the eyeball through the eyeglass lens. When the eyeball rotates in accordance with the Listing's law, unlike an ordinary coaxial optical system, the eyeglass lens is fixed and a direction of the eyeball relatively changes with respect to the eyeglass. At that time, at a point other than the design reference point, the refractive power of the lens slightly differs from the refractive power at the design reference point, because of the property of the lens. Even at that time, the refractive power of the eyeball is subtracted from the refractive power of the lens. The subtracted value is the aberration of the Lens - Eyeball system.

Regarding subtraction of aberrations, when rotated along an astigmatic axis of a lens in accordance with the Listing's law (there are two directions in the principal meridian direction), since the astigmatic axis of the lens coincide with an astigmatic axis of an eyeball, it suffices to merely subtract in each axis direction. Previously, the aberration at this time was called an aberration of a lens. However, if the eyeball rotates in a direction other than the astigmatic axis direction of the lens, the astigmatic axis of the lens becomes different from the astigmatic axis of the eyeball. Thus, a refractive power of a lens is decomposed in the direction of the astigmatic axis of the eyeball, and an average of quantities, the quantities being respective decomposed refractive powers subtracted by refractive powers in respective astigmatic axes directions, is becoming to be called as a power error. Since this power error is an average, it is unrelated with a difference in the astigmatic axis, and it is equivalent to a power error in a case where the astigmatic axes coincide with each other. However, an astigmatism takes a different value, that is different from the value when the axes coincide with each other.

Here, supposing that the above described values subtracted by the refractive powers in the two astigmatic axis directions of the eyeball are an aberration A and an aberration B, the power error is an average of the aberration A and the aberration B, and the residual astigmatism is a difference between the aberration A and the aberration B. When the Listing's law is not required, namely, when the eyeball rotates along with the astigmatic axis of an eyeglass, it was not called as a residual astigmatism, and it was called as an astigmatism, before. The power error in this case was called as MOE and the astigmatism was sometimes called as OAE.

Further, when an angle difference between a principal ray from a center of rotation of an eyeball to a rear surface of a lens and a principal ray from a front surface of a lens to an object is denoted by $\delta$ and an Abbe number is denoted by v, then a chroma aberration is expressed by $100 \times \tan \delta / v$.

(1) An embodiment of a manufacturing system and a manufacturing method for eyeglass lenses.

First, the embodiment of the manufacturing system and manufacturing method for eyeglass lenses according to the invention is explained. Fig. 1 generally illustrates a configuration of the manufacturing system of eyeglass lenses according to the embodiment. As shown in Fig. 1, in a system 500, an eyeglass store 100 includes a measuring device 101 which measures the eyesight and the relative measurement value of an orderer of the eyeglass lenses, and an ordering-side computer 102 having the function of inputting various types of information including the measured value by the measuring device and of executing a process required for ordering of eyeglass lenses.

On the other hand, on a lens maker 200 which is an order-receiving side, a manufacturer-side computer 201 connected to a communication line 200, such as the Internet, is provided. The manufacturer-side computer 201 has the function of executing processes required for order-receiving of eyeglass lenses as well as the function of executing an eyeglass lens design method described later. That is, information required for design of eyeglass lenses ordered from the ordering-side computer 102 includes the measured values regarding the eyesight as well as one or both of the positive relative convergence and the negative relative convergence of the relative measurement values. If the relative measurement values are not included, information concerning the orderer, such as age, by which the relative measurement values can be generally calculated is included. The manufacturer-side computer 201 executes the optimizing calculation by using a function obtained by adding together the visual fatigue function containing the relative measurement values as factors at evaluation points. As result, the optical design values are determined, and the manufacturing information for manufacturing the eyeglass lenses based on the optical design values is outputted to a lens processing device 202.

The information inputted to the manufacturer-side computer 201 may be considered in calculating the visual fatigue function by inputting another information in addition to the information concerning the orderer, such as the measured value or the age. Although the eyeglass lenses are manufactured by processing lenses based on the determined optical design values, maker's own shape parameters or shape parameters defined by a factory (a manufacturing device), such as a correction factor may be considered.

A lens shape design by a general optimizing calculation which is also used in the embodiment will now be generally explained. In general, regarding a lens shape and an object, a surface is expressed by a general free-form surface such as BS (Non-Uniform Rational B-Spline) or a known expression. The thickness and position are expressed by appropriate coefficients. In this case, the lens shape and the object are defined by coefficients which are constituent elements. At the first step, known parameters are inputted. The known parameters include the object, the positional relationship of object-lens-eyeball, constraints (e.g., having a predetermined prescription value at a design reference point or the thickness does not take a negative value), and the evaluation function having the aberration of the lens as a factor. At the next optimizing calculation step, a combination of coefficients of constituent elements of the lent at which the evaluation function obtained from the evaluation points on the object decreases are searched for. As a convergence condition, the convergence calculation is repeated until the minimum evaluation value or the combination of coefficients at which the evaluation function substantially decreases cannot be found. When the repetitive calculation is finished by satisfying the convergence condition, the coefficients of the lens constituent elements are determined. The above described all steps are called lens shape determination or lens design. In the know optimizing calculation of this type, the lens design, the known object, the arrangement relationship, the constraints and the evaluation function have an equivalent relationship. That is, when the object, the arrangement relationship, the constraints and the evaluation function are determined, the lens design is unambiguously determined.

Next, before explaining in detail the visual fatigue function, which are used as the evaluation functions of the optimization calculation, a binocular vision is explained.

First, a binocular vision functionality and a linkage between a convergence and an accommodation are explained. The binocular vision functionalitys are classified into a simultaneous viewing, a fusion, a stereoscopic vision, and a binocular visual acuity, in a large way. As documents disclosing these, non-patent document 3 (Written by Masato Wakakura, Osamu Mimura, "All of the vision and eyeball movement," Medical View Co. (2007), p. 147-148, p.140-143) and non-patent document 4 (Howard, I. P. and Roger, B. J., "Binocular vision and stereopsis," Chapter 2, New York Oxford Press, (1995), p.1-736) can be considered. It is disclosed on page 142 of non-patent document 3 that fusions are classified into motor fusions and sensory fusions. In non-patent document 4, there are detailed explanations across the board.

In non-patent document 3, it is categorized in a structure such that the fusion is enabled when the simultaneous vision is enabled, and the stereoscopic vision is enabled when the fusion is enabled. In the present invention, the fusion is focused, and explanations of other functions are omitted. However, it is explicitly stated that without the fusion, the stereoscopic vision, which is the highest function of the binocular vision, is not realized. The fusion is visual performance which integrates pieces of visual information separately input to the respective eyes into one. It is the sensory fusion that integrate objects into one, without moving the eyeballs.

A convergence, a divergence movement, and vertical fusional vergence for obtaining the sensory fusion are called motor fusions. The relationships between the convergence or the divergence movement of an eyeball and an accommodation are linked. The linkage has been described as the Donders diagram. Regarding the Donders diagram, there are descriptions in non-patent document 5 (Written by Shinobu Ishihara and Revised by Shinichi Shikano,"Little pupil science," 17th revised version, Kanehara & Co., Ltd., (1925), p.50) and in non-patent document 6 (Written by Toyohiko Hatada, "Depth information and a characteristic of a vision," Visual Information Research Group, April 23, 1974, p. 12). The straight line of 45 degrees from the origin in the Donders diagram is called the Donders line. The straight line represents the linkage between the accommodation and the convergence, when an examinee who does not have a squint nor a heterophoria is viewing an object with naked eyes. The limit values of the convergence are called the Donders curve. For a value between one point on the Donders line and the left or right Donders curve, the right side (the side on which the angle of convergence becomes large) is classified as a negative relative convergence, and the left side (the side on which the angle of convergence becomes small) is classified as a positive relative convergence. Further, explanations that it can be a cause of a visual fatigue that relative measurement values are significantly smaller than the standard values, that a convergence is easier to measure than an accommodation, and that the Donders line is not true in a precise sense and its gradient is about 0.8, explanations of a lead of an accommodation and a lag of an accommodation are described, in detail, in non-patent document 7 (Written by Kazuhiko Ukai, "Influence of a stereoscopic image on a biological body: What will happen when a stimulation of an accommodation contradicts a stimulation of a convergence" vision, vol. 17, No. 2, p.113 - 122), etc.

In general, a positive relative convergence and a negative relative convergence are expressed in terms of prism diopter. On the other hand, when the definitions are in accordance with the definitions of Donders, they are expressed in terms of diopter values. Therefore, sometimes they are called as a positive relative convergence power and a negative relative convergence power. There are no essential difference in these expressions. Thus, for the present invention, they are unified and expressed as a positive relative convergence and a negative relative convergence. Similarly, for a relative accommodation, when the definition is in accordance with the definition of Donders, it is expressed in terms of a diopter value. Therefore, sometimes they are called as a positive relative accommodation power and a negative relative accommodation power. There are also no essential difference in these expressions. Thus, for the present invention, they are unified and expressed as a positive relative accommodation and a negative relative accommodation.

The above described relative accommodations are described in the specification of PCT/JP2008/069791 by the present applicant. In the specification, a method is described in which the relative accommodation, that is an individual element, and an approximated value of the relative accommodation are obtained from an age, and they are set as visual functions. The relative accommodation is a kind of an accommodation, and it has a characteristic similar to that of the accommodation. Regarding the accommodation, the matters described below are known. It is not true that the accommodation works precisely until a limit, and the accommodation does not work at all when it exceeds the limit. For example, in areas close to an accommodation far point and an accommodation near point, accuracies are degraded. Further, it is ambiguous that where the limit point is. Therefore, when viewing far, the focus often matches a point little closer to a target. Conversely, for a close view, the focus matches a point slightly distant from an object. Regarding this incompleteness, the former is called a lead of the accommodation and the latter is called a lag of the accommodation. Since there is the lead of the accommodation, even with a normal vision, the eyesight in far vision is slightly decreased. Conversely, when very good eyesight appears in far vision, then hyperopia is suspected. When such a condition is realized by correcting nearsightedness, then an over correction is suspected. In this way, the major problem for correcting a refraction anomaly is in that an amount of the refraction anomaly depends on a concept of the accommodation far point that includes ambiguity on actual measurements.

Additionally, on pages 147-148 of non-patent document 3, it is described that in a near response, a convergence, an accommodation, and a pupil are closely coordinated. Specifically, there are the following descriptions: "Among the three elements, for the convergence, an amount of a binocular disparity is accurately detected (an error in the convergence is at the extent of 1-2 minutes), and a directionality is clear, as it is a crossed disparity or an uncrossed disparity. Thus, a quick and a highly accurate control is possible. On the other hand, for the accommodation, since a near and far direction is not known only from visual information of blur, the control is difficult. Further, necessity of a response is small corresponding to an amount of a focal depth. Thus it can be said that the accommodation is a relatively rough response with respect to quantity." Thus, the relative accommodation is a measurement value for which it is difficult to maintain accuracy as an individual element of the binocular vision in comparison with the relative convergence. Further, in the above described specification PCT/JP2008/069791, only the eyesight with a single eye is explained. In addition, a compensation of the relative accommodation is performed through an adjustment effect of the eyeglass lens, however, in the example of the above described PCT/JP2008/069791, the compensation is necessary when calculating the relative accommodation for a case in which a pair of eyeglass lenses is wore, from values obtained from the Donders diagram in a state in which no eyeglass lens is wore. Here, for the relative accommodation, it is assumed that a pair of eyeglass lenses, which are corrected so that an object can be clearly seen, is wore. Therefore, the compensation is unnecessary.

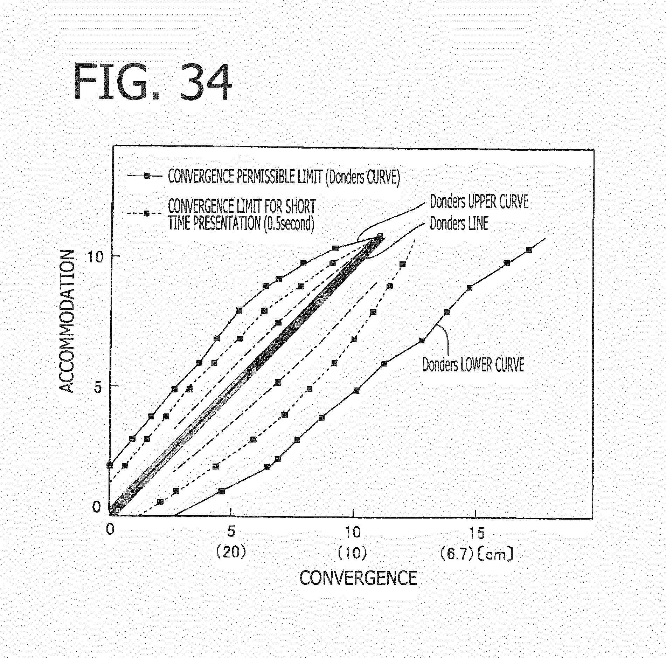

Here, an example, in which the motor fusion and the sensory fusion are expressed in the Donders diagram, is shown. Fig. 34 is the Donders diagram by Hatada, which is described in non-patent document 6. In Fig. 34, the horizontal axis shows the convergence (unit: meter angle MA), and the vertical axis shows the accommodation (unit: diopter D). In Fig. 34, the motor fusion is shown by the Donders curve and the sensory fusion is shown by a gray area close to the Donders line, on the one Donders diagram.

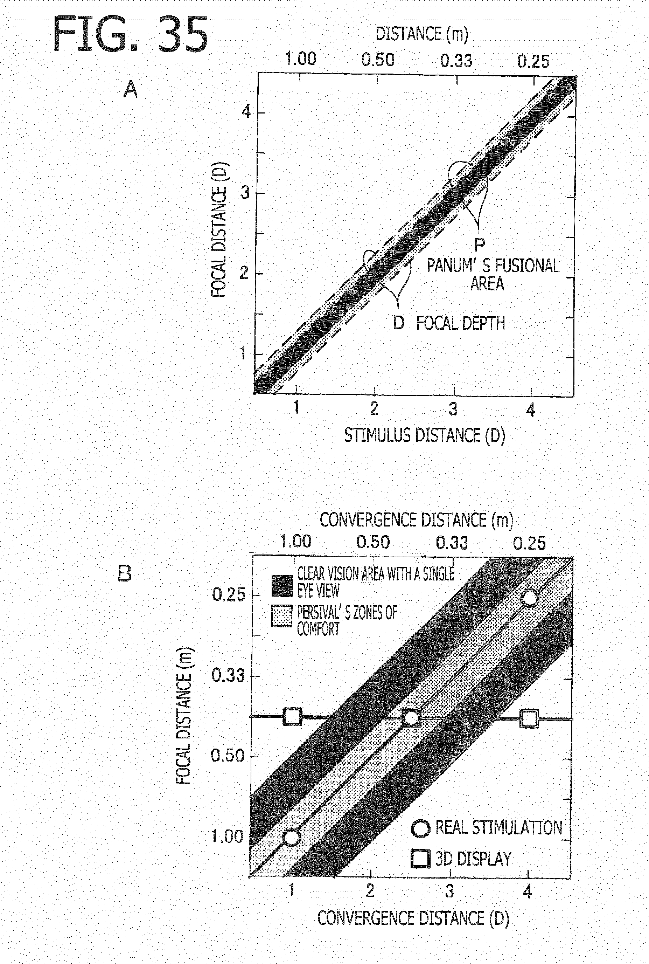

Further, in Fig. 2 of non-patent document 8 (David M. Hoffman, Ahana R. Girshick, Kurt Akeley, Martin S. Banks, "Vergence-accommodation conflicts hinder visual performance and cause visual fatigue," journal of vision, Vol. 8, No. 3, 33, (2008)), the motor fusion and the sensory fusion are separately drawn on two pieces of the Donders diagrams. These are shown in Fig. 35A and Fig. 35B. Fig. 35A shows the sensory fusion, and Fig. 35B shows the motor fusion. As it can be understood from Fig. 35A and Fig. 35B, for the motor fusion, the relative convergence and the relative accommodation are coordinated, and for the sensory fusion, the Panum's fusional area and the area of the focal depth are narrower in comparison with Fig. 35B.

Additionally, a measurement method and standard values for the motor fusion are described, for example, in non-patent document 9 (Written by Yukio Izumi, Toshinari Kazami, "Examination of Binocular vision functionality," Revised Version, Waseda Optometry College (1985) p. 5). Further, on p.288 in non-patent document 12 (written by Setsuya Tsuda, "Introduction to the American 21-item inspection- Examination and analysis of visual performance," Kindai Kougaku Publishing Co. (1983)), Morgan's standard value is described.

A method of expressing the angle of convergence is explained. By setting a meter angle to MA, a minutes of arc to $\theta$, a prism diopter to P, and a pupillary distance to PD (unit: mm), the equations shown in Expression 1 - Expression 3 are satisfied for respective relationships. Here, a is a derived value of PD and MA.

(Expression 1)

$$a = \frac{PD \times MA}{2000}$$

(Expression 2)

$$\sin\left(\frac{\pi}{180} \times \frac{1}{60} \times \frac{\theta}{2}\right) = a$$

(Expression 3)

$$P = 100 \times \frac{2 \times a}{\sqrt{1 - a^2}}$$

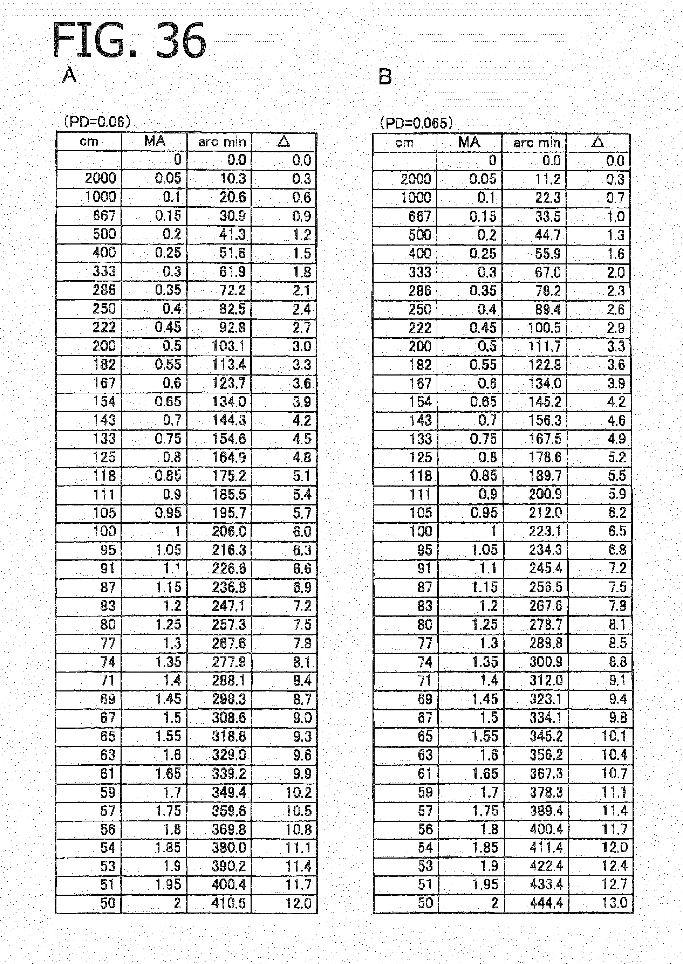

Reference examples of numerical computations are shown in Fig. 36A and Fig. 36B. In Fig. 36A, a pupillary distance is PD = 0.06 m, and, in Fig. 36B, PD = 0.065 m. In each of the numerical examples Fig. 36A and Fig. 36B, as parameters, a distance (cm), a meter angle MA, a minutes of arc (arc min), $\Delta$ (diopter) are listed.

Next, explanations are added regarding the sensory fusion and the motor fusion. The sensory fusion is a fusion in which there is no eyeball movement, and the motor fusion is a fusion with eyeball movements. These are different with each other. The sensory fusion is explained in accordance with p.131-132 of non-patent document 10 (Edited by Keiji Uchikawa, Satoshi Shioiri, "Vision II," Asakura Publishing Co., Ltd. (2007), p. 131-132). In non-patent document 10, the following are described: "In order that two retinal images having binocular disparities are perceived as one, it is necessary that sizes of the disparities are within a certain range. This area is called the Panum's fusional area (or image fusion area), since Panum, for the first time, measured this area through systematic experiments. The fusional area depends on a stimulation condition (such as a spatiotemporal frequency, a position of a retina, existence or non-existence of a peripheral stimulus, a measurement method, or a criterion of determination), and it varies greatly, from a few minutes to a few degrees. Therefore, it cannot be represented by a specific result of an experiment."

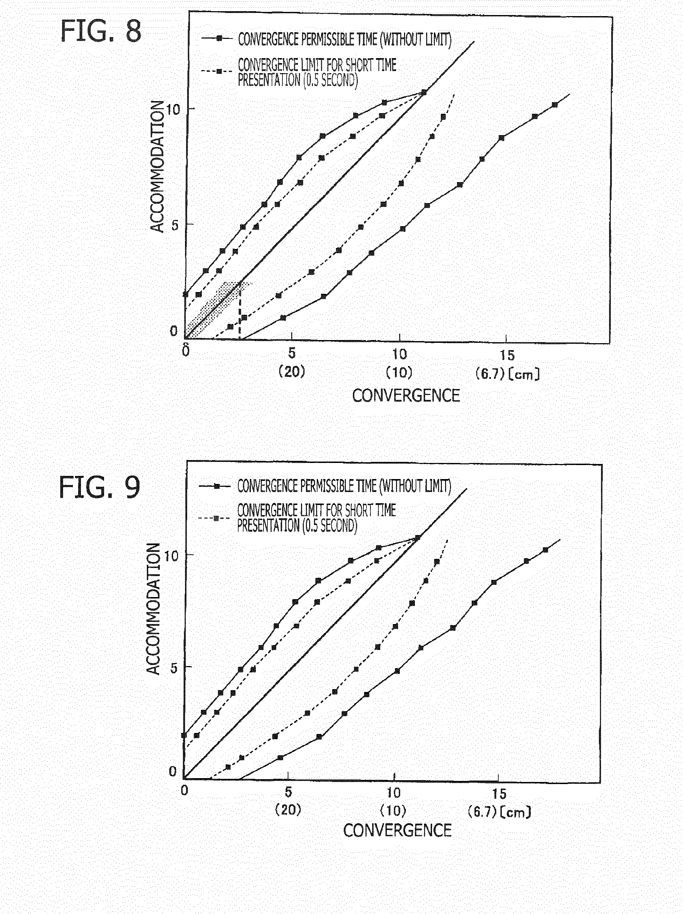

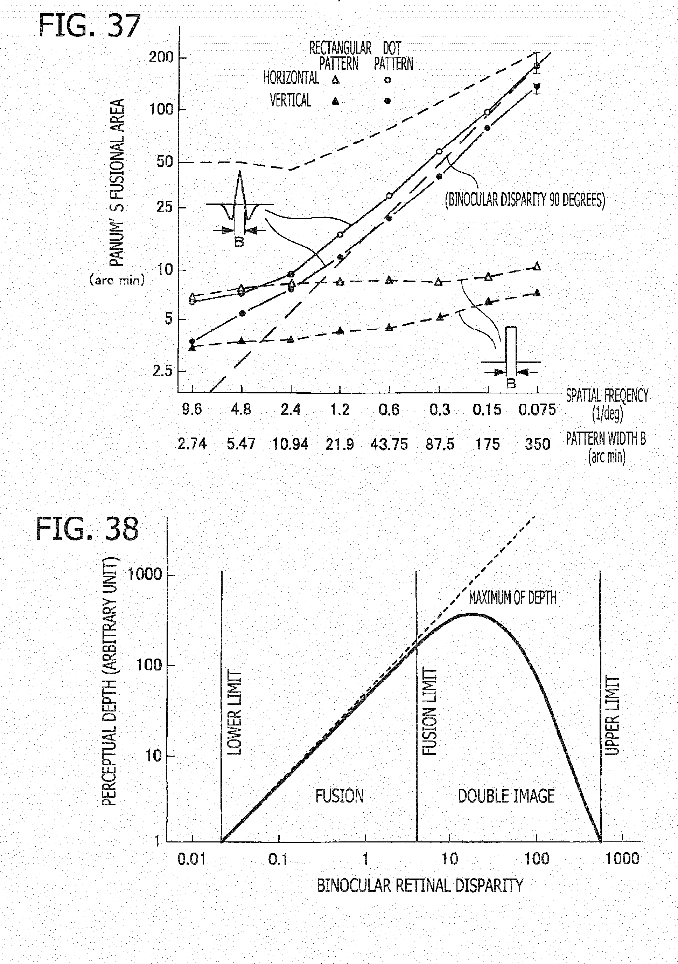

Here, the binocular disparity is a difference between lines of sights pinching nodal points of left and right eyeballs and a fixation point. For a simplified case, a nodal point and a center of rotation may not be distinguished, since the difference between the nodal point and the center of rotation are very small in comparison with a distance in the external world. Though it is in a specific experiment, but with respect to the range of the sensory fusion, it has been measured that it depends on a spatial frequency, that is, it depends on a shape or size of a visual object. The way how it depends is described, for example, in non-patent document 11 (Schor, C. Wood, I. Ogawa J. "Binocular sensory fusion is limited by spatial resolution," Vision Research, 24(7), (1984), p. 661-665). Fig. 37 shows the figure on page 584 of non-patent document 11. This figure is widely used, and it is described on Fig. 8.2 on page 316 of non-patent document 4. In Fig. 37, the horizontal axis shows a special frequency (that is, an inverse of a width of a pattern), and the vertical axis shows the Panum's fusional area. Fig. 37 compares a result where an object is a rectangular pattern and a result where an object is a random-dot pattern.

As shown in Fig. 37, in a state in which an eyesight is strong and the special frequency is high, the fusional area is relatively narrow and almost constant. Further, the fusional area differs in the horizontal direction and in the vertical direction, and there exists a special anisotropy. Where the special frequency is high, namely, viewing at a central fovea, the fusional area in the vertical direction is less than or equal to a half of the fusional area in the horizontal direction. It is known that the Panum's fusional area differs depending on a presentation state of the object. It is widely known that, for example, the Panum's fusional area is wider for the rectangular pattern that appears in daily life than for the dotted pattern.

As for an explanation of a range of disparity in the horizontal direction, a relationship between a horizontal retinal disparity and a perceptual depth is shown in Fig. 38 (page 86 of non-patent document 10). In Fig. 38, the horizontal axis shows a binocular retinal disparity that is a difference between disparities of both eyes in the horizontal direction, and the vertical axis shows a perceptual depth with respect to the binocular retinal disparity. According to Fig. 38, it can be understood that an amount of the depth increases in proportion to an increase in the binocular retinal disparity, but after passing through a fusion limit, they are no longer proportional, and after the depth reaching to its maximum, the depth decreases. In this manner, since the maximum of the depth and the fusion limit are different values, it can be said that a fusion and a stereoscopic vision are different physiological phenomena. There are individual differences in values of the maximum of the depth and the fusion limit, and they vary depending on a condition, such as a spatial frequency or a presenting time. Therefore, a binocular retinal disparity corresponding to a range from the fusion limit to the maximum of the depth can be approximately treated as "the Panum's fusional area."

Next, an explanation regarding a measurement method of the individual relative measurement values is added. A measurement of the relative convergence is often performed at an eye clinic or an eyeglass shop. For example, on pages 49-51 of non-patent document 5, measured values and a measurement method of the relative convergence are described. In non-patent document 5, a Haploscope is used to measure the relative convergence. The unit is meter angle (it is shown with MA, and it may be denoted by MW). The measurement method of non-patent document 5 is as follows. First, in a state in which an object is gazed with both eyes, the state is changed to be a state in which the both eyes are looking outward, using reflective mirrors to the both eyes. Then, the extent of the outward is gradually increased and a meter angle at which the object becomes blurry is set as a positive relative convergence (blur), and a meter angle at which the object is separated into two pieces is set as a positive relative convergence (separation). The measured value of the positive relative convergence (separation) is a limit value of the relative convergence, and in this specification, hereafter, it is called merely as the positive relative convergence. Further, a time when the object is seen as one again, when the outward state is reduced from the state, is called as the positive relative convergence (return). Similarly, when an extent of inward is gradually increased using reflective mirrors to the both eyes, as a state in which the both eyes are looking inward, a meter angle at which the object becomes blurry is set as a negative relative convergence (blur), and a meter angle at which the object is separated into two pieces is set as a negative relative convergence (separation). In addition, a meter angle at which the object is seen as one again, when the extent of the inward is reduced, is called as a negative relative convergence (return). Here, the negative relative convergence (separation) is merely called as the negative relative convergence, in this specification. In an eye clinic, it is possible to measure using a major amblyoscope (synoptophore) which is a similar measurement device as the measurement device described in non-patent document 5, etc.

Further, in non-patent document 12 (written by Setsuya Tsuda, "Introduction to the American 21-item inspection-Examination and analysis of visual performance," Kindai Kougaku Publishing Co. (1983)), test items regarding the above described respective relative convergences are described. Namely, as an item #9, an item #10, and an item #11 of non-patent document 12, measurement methods using an ophthalmometer for measuring the positive relative convergence (blur), the positive relative convergence (separation), the positive relative convergence (return), the negative relative convergence (blur), and the negative relative convergence (return) at a time of distant vision are described. Similarly, as an item #16A, an item #16B, an item #17A, and an item #17B, measurement methods for measuring the positive relative convergence (blur), the positive relative convergence (separation), the positive relative convergence (return), the negative relative convergence (blur), and the negative relative convergence (return) at a time of near vision (40 cm) are described. In a specific measurement method, outward prisms for both eyes are wore, while in a state of gazing an object when the both eyes are under correction. Then, as with the above described method, an extent of outward is varied through gradually increasing the prism values, and the respective values of the positive relative convergences of the blur, the separation, and the return are measured. Additionally, prisms are wore for inward, and similarly, the prism values are gradually increased, and the respective values of the negative relative convergences of the blur, the separation, and the return are measured.

In non-patent document 13 (Masaki Emoto, Sumio Yano, Shojiro Nagata, "Thesis: Distributions of fusional convergence limits, when a stereoscopic image system is observed," Journal of the institute of image information and television engineers, Vol. 55, No. 5, (2001), p.703-710), a simplified measurement device for the relative convergence of 60 cm in front of eyes is described. The positive relative convergence (separation) and the negative relative convergence (separation) are measured through determining whether a stereoscopic vision is possible, when an image, which includes disparities for the left and right eyes, is shown with a display device. It is a useful method for measuring many people.

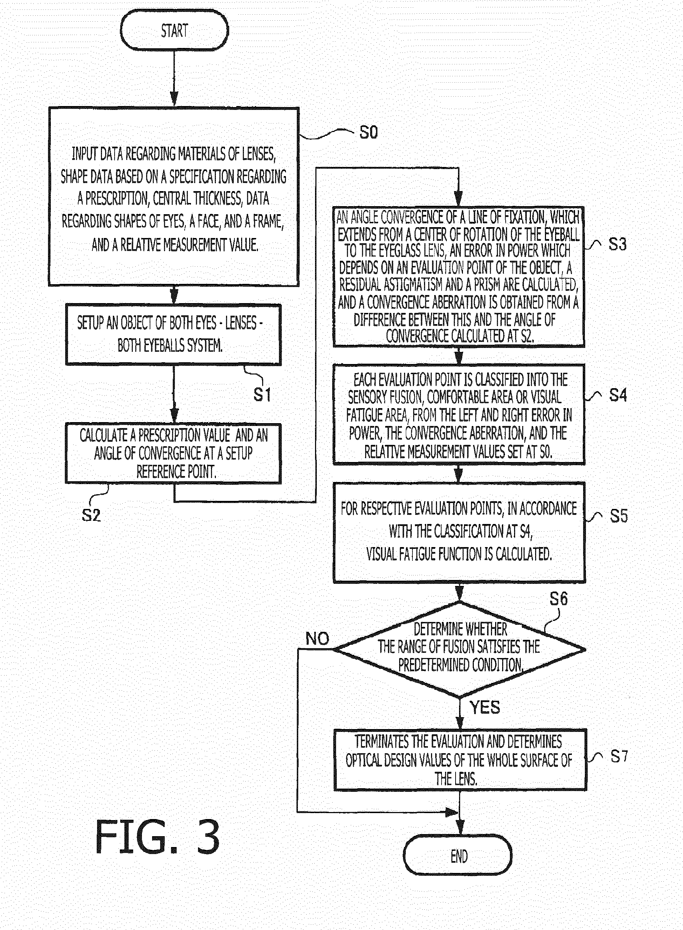

Further, the measurement device shown in Fig. 3 of non-patent document 8 measures the relative measurement values at three points in front (distances of 31.9 cm, 39.4 cm, and 56.3 cm). Further, in non-patent document 6, the positive relative convergence and the negative relative convergence are measured with an experimental device, which is converted from a stereoscopic scope described in Fig. 1 on page 12 of the document. The actual measured data is Fig. 34 of the present invention. On the other hand, for the relative accommodation, as described below, the measurement accuracy is bad, and there are few examples for which it is directly measured. As one example, a measurement method and standard values are disclosed on page 41 of non-patent document 5. The accommodation has a close relationship with the convergence, and the relative accommodation can be calculated from the relative convergence.

Further, there are very few measurement examples of a vertical fusional vergence, and a measurement method and standard values are only disclosed on page 5 of non-patent document 9. What should be confirmed here is that the relative measurement values should be measured when a corrected pair of eyeglasses is wore. The relative measurement values measured at a time when a pair of eyeglasses is worn are different from the relative measurement values measured at a time of naked eyes. Besides the above, there are some documents describing measurement values of the motor fusion and the sensory fusion. The data is summarized and shown in the table 1 and table 2 described below. Comparing the values of the motor fusion and the values of the sensory fusion, the sensory fusion is about a fraction of the motor fusion. Here, these results are obtained mainly through psychological measurements.

(Table 1)

| Standard values of the motor fusion | | | | | | | |
|---|---|---|---|---|---|---|---|
| | Inspection Distance | Fusional Convergence | | Fusion Dissolution | | Vertical Fusionel Vergence | Remarks |
| | | Separation | Recover | Separation | Recover | | |
| Parks | 6 m | 15△ | 12△ | 8△ | 6△ | 3-6△ | Relative vertical fusional vergence |
| | 1.3 m | 20-25△ | 18-22△ | 12△ | 9△ | | |
| Costenbarder | 6m | 15△ | 12△ | 14△ | 8-10△ | - | Relative vertical fusional vergence for a child |
| | 1/3 m | 28△ | 22-25△ | 12△ | 9△ | - | |
| Duke-Elder | - | 25-30△ | - | - | - | - | Absolute vertical fusional vergence |
| Lancaster | - | 25-50△ | 2-4△ from separation | - | - | - | |
| Shirai | | 12.38° | - | 2.93° | - | - | Normal Adult (synoptophore) |

(continued)

| Standard values of the motor fusion | | | | | | | |
|---|---|---|---|---|---|---|---|
| | Inspection Distance | Fusional Convergence | | Fusion Dissolution | | Vertical Fusionel Vergence | Remarks |
| | | Separation | Recover | Separation | Recover | | |
| Inoue | 5 m | 20-30 △ | | 5-8 △ | | 3-4 △ | Relative vertical fusional vergence |
| | 1/3 m | Greater than or equal to 30 △ | | 15-20 △ | | - | |
| US-style examination of items Standard values of Morgan | Far vision | 19 △ | 10 △ | 7 △ | 4 △ | - | Horopter |
| | Near vision 40 cm | 21 △ | 11 △ | 21 △ | 13 △ | - | |
| Nagata | 60 cm | 4.72° | - | 3.34° | - | - | Stereographic image display device of NHK 392 people |
| Hatada | 0D | 2.6MA | - | - | - | - | Doders Diagram |

(Table 2)

| Measured values of the sensory fusion | | | | |
|---|---|---|---|---|
| | | Horizontal Direction | Vertical Direction | |
| Yasuda | 200 cm | 40' | 5' | Random dots |
| | | 80' | 10' | Rectangular pattern |
| Hasse | - | 60' | 30' | |
| Yano | 100 cm | 100" - 960" | 120" | Random dots |
| Ogel Schor, Wood, Ogawa | | 15'- 30' | | |
| | - | | - | |
| Hadada | - | 15-20' | | |
| Tsou | - | 10' | 4' | Rotational direction 6' |

The above described are the explanations related to the binocular vision and the related techniques. Hereinafter, further explanations are added to the embodiment based on the technological matters explained so far. Here, it is added that, excepting the non-patent document 12, none of the non-patent documents 1-15, which have been cited as the references in the specification, consider the binocular visual performance at a time when a pair of eyeglasses are worn.

The measuring device 101 of the eyeglass store 100 shown in Fig. 1 measures the eyesight and relative measurement values of an orderer of eyeglass lenses, or subjects information of an orderer, by which the relative measurement values can be calculated, to a predetermined process on the ordering-side computer 102, and transmits the information to the lens maker 200 via the communication line 300. The computer 201 (the manufacturer-side computer) of the lens maker 200 inputs the shape data based on data and specifications concerning material of a lens and data concerning the shapes of eyes and a face as well as the relative measurement values.

Fig. 2 is a functional block diagram for explaining the outline of the function of the manufacturer-side computer 201, which is the core of the eyeglass lens manufacturing system, according to the embodiment. As shown in Fig. 2, the manufacturing-side computer 201 includes a data input unit 203 for inputting various types of data transmitted from the ordering side computer 102, a visual fatigue function calculating unit 204 for calculating a visual fatigue function, which includes the relative measurement values as factors, based on the input data, an evaluation function optimizing unit 205 for calculating optimization of a function, for which the visual fatigue function are added at respective evaluation points, as an evaluation function, and an evaluation function evaluating unit 206 for evaluation whether a convergence condition by the evaluation function holds or not. The manufacturer-side computer 201 further includes a design data correcting unit 207 for correcting the design data, for example, the lens shape data, when it is necessary to correct the optical performance as a result of the evaluation at the evaluation function evaluating unit 206, an optical design value determining unit 208 for determining optical design values, when the evaluation at each of the evaluation points are terminated, and a design data output unit 209 for outputting the design data based on the optical design values to the lens processing device 202.

The visual fatigue function calculating unit 204 calculates the monocular visual function of each of left and right eyes at each evaluation point of a target. The visual fatigue function calculating unit 204 determines optical performance values such as an error in power and a residual astigmatism, and the convergence aberration which is described later. The visual fatigue function calculating unit 204 calculates the visual fatigue function by substituting the calculated data and the input data received by the data input unit 203 to the equation of the visual fatigue function which is described later. The evaluation function optimizing unit 205 determined an optimum optical performance value at each evaluation point from the evaluation function, while obtaining the evaluation function by adding the calculate visual fatigue function.

When the calculation of the optimum optical performance value is executed by the evaluation function optimizing unit 205, the evaluation function evaluating unit 206 evaluates whether a convergence condition by the evaluation function after optimization holds or not. The shape data and is corrected or determined based on the evaluation result by the evaluation function evaluating unit 206. Specifically, when the convergence condition does not holds, the design data correcting unit 207 corrects the shape data of the eyeglass lenses so that the desired evaluation function is obtained. When the convergence condition holds, the optical design value determining unit 208 determines the design value at the evaluation point. When the convergence condition holds at all the evaluation points, the determined optical design values of the whole lens surface are transmitted from the design data output unit 209 to the lens processing device 202 shown in Fig. 1.

As the lens processing device 202, a typical eyeglass lens manufacturing device which, for example, automatically performs a cutting process and a polishing process for the shape of a front surface of a lens, the shape of a rear surface of a lens or the shapes of both surfaces of a lens, based on the input data, is used. Since the lens processing device 202 has a know configuration as a eyeglass lens manufacturing device, explanation of the details of the lens processing device 202 is omitted.

[2] Embodiment of design method of eyeglass lenses

Next, the data input unit, the visual fatigue function calculating unit, and the evaluation function optimizing unit in the manufacturing-side computer 201 are explained in detail. Among the above functions, since the optimization, such as the ray tracing in communication, or in calculation, has been described. Thus a new explanation is omitted.

(1) Outline of each step of the design method

One example of a flowchart for implementing the eyeglass lens design method according to the embodiment is shown in Fig. 3. First, at 0th step S0, inputting of various types of data is performed with the data input unit 203. Namely, data regarding materials of a lens, shape data based on a specification regarding a prescription, a central thickness, data regarding shapes of eyes, a face, and a flame, and relative measurement values are input.

Speaking in the broad sense, all the measurement values for designing an eyeglass for a person who has ordered the eyeglass can be said to be individual elements. For example, conventional individual elements includes, spherical diopter powers of left and right eyes, the astigmatism degree, the astigmatic axis, the prism, the prism axis, the progressive lens, individual elements specific to a multifocal lens (for example, an added power), the pupillary distance, a distance from an apex on rear of an eyeglass to an apex of a cornea (usually about 14 mm, it is also called a coroneal vertex distance), a distance from an apex of a cornea to a center of rotation of an eyeball (usually about 13.5 mm), a lens front tilting angle (usually approximated with a frame front tilting angle), and a lens elevation angle (usually approximated with a frame elevation angle). Here, in the present invention, the above described "relative measurement values" are newly added to the individual elements. The relative measurement values are obtained from a person who has ordered, in accordance with a lens to be designed. If the relative measurement values are a part of the relative measurement values, then the remaining relative measurement values are calculated from a method described below. Even when the relative measurement values cannot be measured at all, the relative measurement values are calculated from an age, etc.

Next, as a first step S1, the visual fatigue function calculating unit 204 setups an Object of both eyes - Lenses - Both Eyeballs System. This system includes an object to be seen, eyeglass lenses, and left and right eyeballs, for optical calculations. In this system, it is not necessary that the centers of rotations of the eyeballs are fixed points in movements of the eyeballs in the system.

As a second step S2, the visual fatigue function calculating unit 204 setups a lens shape so that predetermined prescription values can be obtained at design reference points, in order to set the design reference points (usually, positions at which lens powers are obtained) of the eyeglass of the Object of the both eyes - Lenses - Both Eyeballs System to be references, which are described below. At the design reference points, the prescription values and the angles of convergence from the centers of rotations of the eyeballs to the eyeglass lenses are calculated. These values are reference values of the angles of convergence.

Further, as a third step S3, the visual fatigue function calculating unit 204 calculates the average refractive powers, the residual astigmatisms, the prisms, the angles of convergence from the centers of rotations of the eyeballs to the eyeglass lenses, which depend on the evaluation points of the object in the Object - Lens - Both Eyeballs System. Next, the visual fatigue function calculating unit 204 obtains differences between the reference values of the angles of convergence and the angles of convergence at the evaluation points, as convergence aberrations.

Next, as a fourth step S4, the visual fatigue function calculating unit 204 classifies the respective evaluation points into the sensory fusion, the motor fusion, and out of the fusion, from left and right errors in power, the above described convergence aberrations, and the relative measurement values which have been set at the 0th step S0.

Further, at the fifth step S5, the visual fatigue function calculating unit 204 calculates the visual functions for the left and right single eyes at the respective evaluation points through a calculating process including the relative measurement values for the left and right eyes. The visual fatigue function calculating unit 204 further calculates the binocular visual acuity function from the visual functions for the left and right single eyes, in accordance with the branches of the fourth step S4. The visual fatigue function calculating unit 204 further modifies the binocular visual acuity function by subtracting the minimum value of the binocular visual acuity function from the binocular visual acuity function, which includes the relative measurement values as the factors on all the lens surface, so that the binocular visual acuity function becomes positive values. And the binocular visual acuity function calculating unit squares the binocular visual acuity function and adds it to the binocular visual acuity function at the respective evaluation points. If necessary, the binocular visual acuity function is multiplied by a weighting factor and added over all the lens surface. The result of the addition is the evaluation function of the present invention.

At the fifth step S5, the evaluation function optimizing unit 206 evaluates whether a convergence condition for the evaluation function, the evaluation function at the time of the optimization calculation being the optimization function of the present invention, holds or not. When the convergence condition does not holds at the evaluation point, for which the calculation is being performed, the design data correcting unit 207 slightly corrects shapes of the left and right lenses so as to compensate optical aberrations including the above described convergence aberrations and values of the binocular visual acuity function, and repeats the second step S2 - the fifth step S5. On the other hand, when the convergence condition holds, the optical design value determining unit 208 determined the design values at the evaluation point. Then, the calculation is performed for the next evaluation point. When the calculation has been performed for all the evaluation points, the process proceeds to a sixth step S6.

At the sixth step S6, the optical design value determining unit 208 determines whether a range of the sensory fusion in a neighborhood of the lens design reference point satisfies a predetermined condition or not, based on the determined optical design values for all the lens surface. When the predetermined condition is not satisfied (when the determination at the sixth step S6 is "NO"), it is not suitable for the eyeglass lenses and the design is impossible. Thus, the flowchart is terminated after executing a predetermined error process. When the predetermined condition is satisfied (when the determination at the sixth step S6 is "YES"), the process proceeds to a seventh step S7.

At the seventh step S7, the optical design value determining unit 208 determines the evaluation of the eyeglass lenses with the binocular visual acuity function and shapes of the eyeglass lenses. It is explained that, through the above steps, it becomes possible to improve the binocular visual acuity. The simultaneous viewing, the fusion, and the stereoscopic vision in the binocular visual performance and the binocular visual acuity have a configuration such that the fusion becomes possible when the simultaneous viewing becomes possible, and the stereoscopic vision becomes possible when the fusion becomes possible. Further, the fusion has a configuration such that the sensory fusion becomes possible when the motor fusion is possible. Here, it is not necessarily clear how the binocular visual acuity and the simultaneous viewing, the fusion, and the stereoscopic vision are related. This relationship is explained with Fig. 4 which shows a relationship between an eccentricity and a relative visual acuity, the relationship being known to the eyeglass industry with respect to the property of the normal visual acuity. In Fig. 4, the horizontal axis is the eccentricity, that is, a position on the retina, and the vertical axis is the relative visual acuity. The eccentricity is said to be an angle spanned by an object other than a fixation point from nodal points of the eyeballs, when the fixation images are placed at central foveae of the eyeballs at a time when the eyeballs are not rotated, namely when fixating somewhere. Further, the relative visual acuity is said to be a normalized visual acuity, since visual acuities differ from person to person. In Fig. 4, the visual acuity expressed in the decimal point representation is used, and the visual acuity at the fixation point is set to 1.0. Further, the blackened portion in the figure is a blind spot. As it is clear from Fig. 4, the relative acuity with respect to the eccentricity forms a very sharp curve. From Fig. 4, a range where the visual acuity expressed in the decimal point representation is 0.7, which is a boundary of an area of clear vision, is about 1°. According to another expression, the visual acuity expressed in the decimal point representation becomes 0.7, when it is separated from the fixation point by 1°. To supplement the explanation, the relative visual acuity becomes 1.0, when the eyeball is rotated by 1° ° toward an object, the object separating from the nodal point of the eyeball by 1 °.

Here, it can be understood that threshold values of a state in which the both eyes are simultaneously gazing at a fixation point resemble the threshold values of the sensory fusion. Further, when an eyeball of a single eye is rotated only by 1° from that state, the visual acuity expressed in the decimal point representation of the single eye is significantly degraded to 0.7. In this case, the visual acuities of the left and right eyes differ, and it follows that the increase by about 10% of the binocular visual acuity does not occur. Further, when the sensory fusion is established and a condition for enabling the binocular visual acuity of the binocular visual performance is satisfied, a condition for enabling the stereoscopic vision is satisfied, at the same time. Namely, the binocular visual acuity is a function in a category of the stereoscopic view, which is the highest function of the binocular vision functionalities. Here, the optimization steps for improving the evaluation function with the binocular visual acuity function have effects such that it expands areas of the motor fusion and the sensory fusion, it improves the binocular visual acuity which is the highest function of the binocular vision functionalities, and at the same time, it improves the stereoscopic view, according to the reason described above. Namely, through the above steps, the relative measurement values, which have been adopted while focusing on the above described binocular vision functionalities, can be reflected in the binocular visual acuity. With this, it becomes possible to obtain the superior optical design values for the eyeglass lenses, which quantitatively evaluates and improves ease of the fusion with the both eyes, and which improves the binocular visual acuity, which is the highest function of the binocular vision functionalities, and at the same time, improves the stereoscopic view, and which helps reducing the visual fatigue described above.

Next, more detailed design contents of the above described 0h - sixth steps are described in detail.

(2) Detailed explanation of the 0th step S0 (calculation process of the relative measurement values)

The relative measurement values obtained from the person who has ordered are further explained. Now, when a pair of eyeglasses is wore, a space between the pair of eyeglasses and the centers of rotations of the eyeballs is called an image side, and a space between the pair of eyeglasses and the object is called an object side. Regarding the relative measurement values at the image side and at the object side, since the relative measurement values are having proportional relationships such that their respective proportionality coefficients are approximately proportional to a lens power, the values at the object side vary depending on the shapes of the lenses. Therefore, for the present invention, the relative measurement values by lines of fixations at the image side are more preferable. Since the normal measurement is performed under the corrected condition, the measurement has dependency of eyeglasses. In order to obtain more precise measurement values, "method of correction by Fry" which has already been described can be used.

Further, it is the same for the sensory fusion. The method of compensating the differences between the relative measurement values at the position of the pair of eyeglasses and the relative measurement values at the centers of rotations of the eyeballs is described in the above described specification of PCT/JP2008/069791 by the present applicant. Namely, for the purpose of comparing the values of the Peters diagram, which are originally values at the positions of the pair of eyeglasses, it discloses a method of compensating the values of the Donders diagram obtained at the centers of rotations of the eyeballs to obtain the values at the positions of the pair of eyeglasses. In the present invention, both of the relative measurement values can be used, but in the embodiment, it is explained mainly with the lines of fixations on the image side. Further, it is not mentioned that, even if the values are values at the centers of rotations of the eyeballs, the values are compensated to be values at the positions of the pair of eyeglasses, and the explanations are omitted.

When the relative measurement values are measured on almost entire area, as with non-patent document 5 and non-patent document 6, since the relative measurement values have been directly obtained, the process proceeds to the second step S2. As with non-patent document 13 and non-patent document 8, when only one of or both of the positive relative convergence or the negative relative convergence are measured at an arbitrary distance, if it is measured at one point at the arbitrary distance, then, in general terms, a curve is estimated under a certain assumption, such that another curved portion is a line. In the present invention, accurate measurement values are obtained with one prescribed angle of convergence, if it is a single focus lens, and accurate measurement values are obtained with, preferably, at two distances (for example, when the angles of convergence are 0, 40 cm, then the angle of convergence is 1/0.4), if it is a progressive lens, etc. Here, the reason for the "preferably" is that for a progressive lens, when it is a single relative measurement value at a distant point, an age is estimated from an added power to a certain extent, and the measurement values for closer points than that point are calculated with an estimate calculation of the relative measurement values through age, which is described below. When the information from the person who has ordered is information which does not include all the measured values among the relative measurement values, other relative measurement values are calculated from one or both of the positive relative convergence and the negative relative convergence under an assumption such as the following. For example, using the values of the positive relative convergence of the Donders diagram by Hatada, which is shown in Fig. 34, these can be calculated by prorating from the real relative convergence received from the person who has ordered. Namely, data of the negative relative convergence, data of the positive relative convergence, and data of the negative relative accommodation are extracted from Fig. 34, and they are calculated through multiplying these values by "ratio" = (the positive relative convergence of the person who has ordered/the positive relative convergence of Fig. 34). Further, when the angle of convergence is 0, then the negative relative convergence is almost 0, and the negative relative convergence is not adoptable. When the angle of convergence is not 0, the negative relative convergence is adoptable, and they can be calculated through multiplying these values by "ratio" = (the negative relative convergence of the person who has ordered/the negative relative convergence of Fig. 34). Further, the data from which the ratio is calculated is not limited to the Donders diagram by Hatada, which is shown in Fig. 34. When there is more accurate data, for example, when there is data which is measured through narrowing the condition, such as the age and the usage condition of the examinee, then that data may be adopted.

Further, when there is no relative measurement value of the person who has ordered, which is directly measured, it is possible to estimate the positive relative convergence and the negative relative convergence, or the positive relative accommodation and the negative relative accommodation from the age, and it is the second best method of the present invention. As it is described in "Fig. 3" on page 242 of "Distributions of "Vergence Fusional Stereoscopic Limit (VFSL)" of Disparity in a Stereoscopic Display," (written by Shojiro Nagata, TVRSV, Vol.7, No.2, (2000), p.239-246), it is because of the very large individual differences. There, variations for 392 examinees with a visual distance of 60 cm are such that, from 0 to -27.6 degrees for CROSS (the positive relative convergence), and from 0 to 13.9 degrees for UNCROSS (the negative relative convergence). It can be seen from this data that how large the individual differences are. The average for CROSS is - 4.72 degrees and the average for UNCROSS is 3.34 degrees. Conversely from these facts, it can be said that the relative measurement values are suitable as individual elements.

A method of obtaining convergence-accommodation information from an age, namely, a method of obtaining the positive relative accommodation and the negative relative accommodation at an arbitrary angle of convergence has been described in detail in the specification of PCT/JP2008/069791, but it is described here once again. Here, if there exists statistically sufficient measured data to show the relationship among the age - the positive relative accommodation and the negative relative accommodation, then it is not necessary to produce the below. However, it is considered that such data does not exist at the time of the present application. In this regard, qualitatively, it is known that for the relative convergence and the relative accommodation, self-adjustments easily occur dynamically or statically, and that there is a tendency that the Donders line descends as age rises. The positive relative accommodation and the negative relative accommodation obtained by the method described in the specification of PCT/JP2008/069791 are, of course, the average values for ages, and they are not for limiting the individual elements. First, a method of obtaining averages of the positive relative convergence and the negative relative convergence through an age is described. It is described according to the specification of PCT/JP2008/069791.

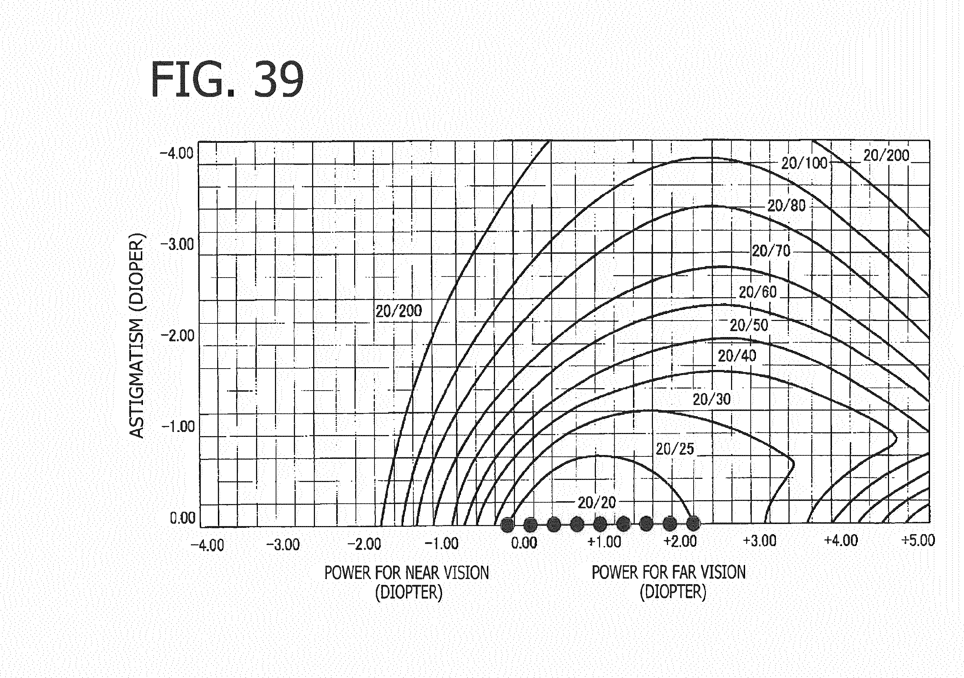

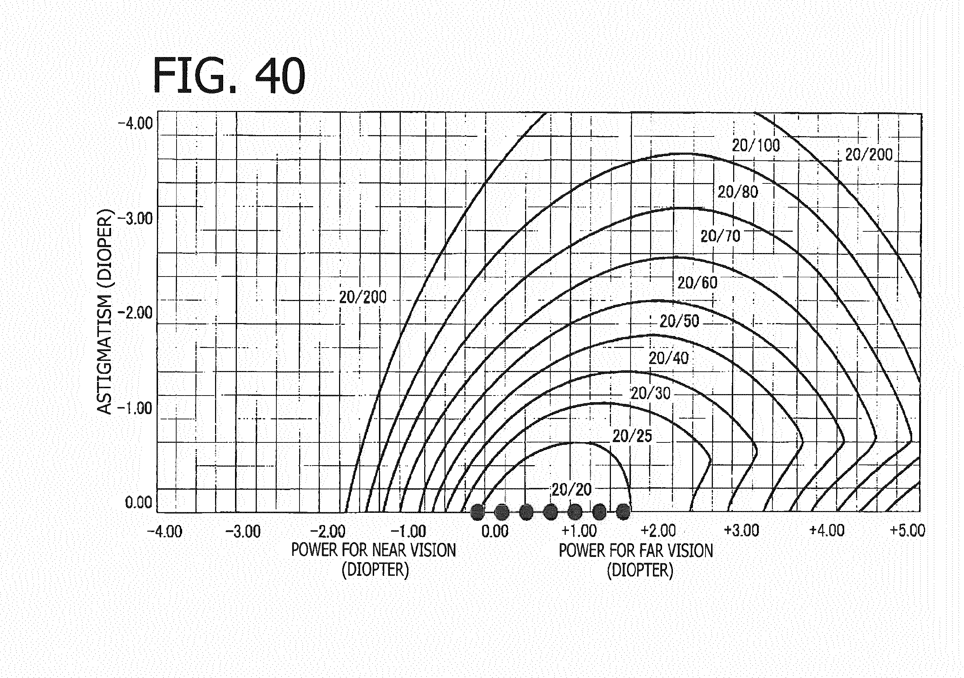

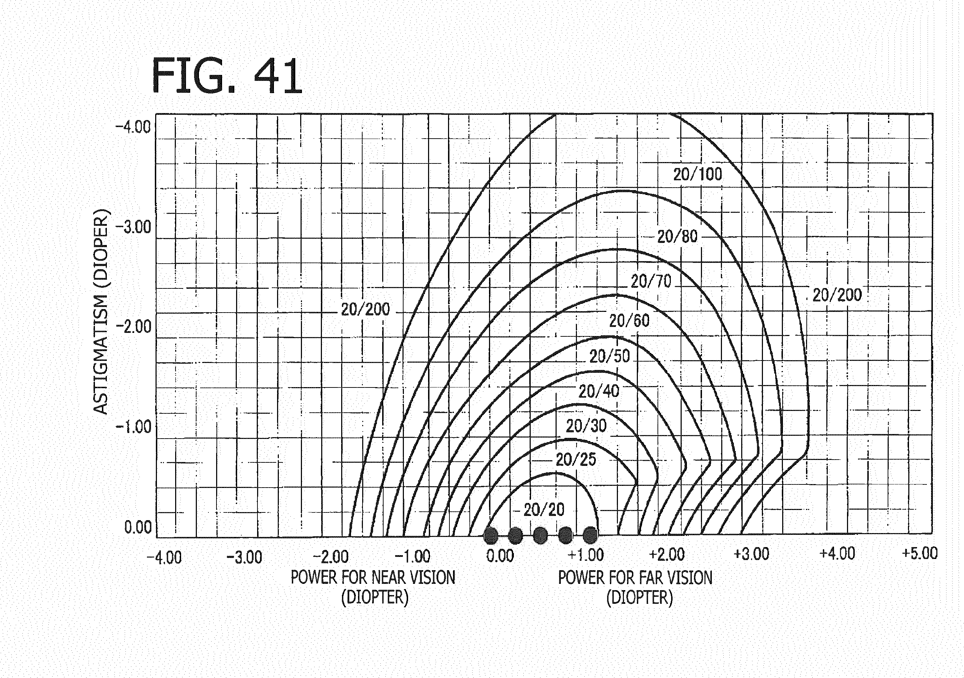

The method of generating the age - positive relative accommodation, which is suitable for using the embodiment, is as follows. First, the horizontal axes of the Peters diagrams according to ages shown in Fig. 39-41 which are graphs in the non-patent document 14 (H.B. Peters "THE RELATIONSHIP BETWEEN REFRACTIVE ERROR AND VISUAL ACUITY AT THREE AGE LEVELS", Am. J. Optom. Physiol. Opt., 38(4), (1961) p194-198), namely, ranges on the right side of the origin of the spherical diopter power having a value of 20/20 are focused. These ranges are values of the positive relative accommodations, based on the measurement method. Then, from the three pieces of graphs, the positive relative accommodations for 5-15 year-old, 25-35 year-old, and 45-55 year-old are obtained. These are supposed to be the positive relative accommodations for central ages, namely, for 10 year-old, 30 year-old, and 50 year-old. Further, it is supposed that the positive relative accommodation shows the similar behavior as that of the known age-accommodation relationship. One example of this is shown in Fig. 5 (for example, "History of eyesight. Transition of age and adjustment curve," written by Tadao Tsuruta, Japanese journal of visual science, Vol.19, No.3, p.103). Fig. 5 is the result of the measurements by Duane, and the result is such that the degrees (coefficient) of the descending of the amplitude of accommodation differ between a range of from 0 to 53.3 year-old and a subsequent range. Further, in the above document by Tsuruta, the similar results are obtained through measurement results with a figure produced by Hofstetter (the same, p.101) and a figure produced by Landolt (the same, p.102), etc. Further, it is assumed that the positive relative accommodation becomes 0 at the age of 75. Even if it is different, this assumption approximately holds.

Then, the age-positive relative accommodation relationship, such that there is a linear variation from 0 to 53.5 year-old and there is a linear variation from 53.5 to 75 year-old, is obtained. Since this relationship is the measured values for which the rear apex of a lens is the reference, a compensation is performed to adjust the reference to a reference of the center of rotation of the eyeball, which is a reference of data described below. The compensation is tiny. Further, a prescription distance and a positive relative accommodation at a prescription angle of convergence for each age are produced using the above described age-positive relative accommodation relationship. Measured value of the positive relative accommodation at each angle of convergence for each age does not exist so far.

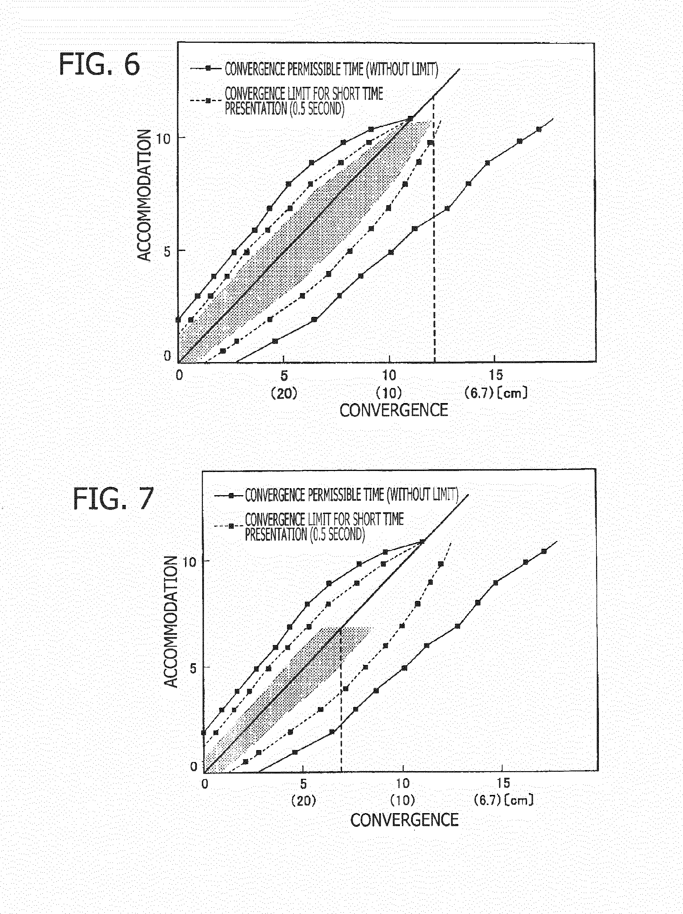

Therefore, first, the actual measured data of the Donders diagram by Hatada, which is shown in Fig. 34 is set as a reference. The positive relative accommodation at the angle of convergence of 0 in Fig. 34 is about -2 D (diopter). Here, the positive relative accommodation is calculated from a given arbitrary age, based on the above described age-positive relative accommodation relationship. This is the positive relative accommodation for the arbitrary age, the each of the relative measurement values in Fig. 34 is prorated with -2D, which is the positive relative accommodation in Fig. 34. Specifically, each of the positive relative accommodation and the negative relative accommodation in Fig. 34 is multiplied by a ratio = (the above calculated positive relative accommodation) / (-2). Further, upper limits of the Donders line and the Donders curve are determined through the previously described known age-accommodation relationship. The calculated Donders curves, which are separated by respective ages, are shown in Fig. 6 - Fig. 9. Fig. 6 shows a case for 5-15 year-old, Fig. 7 shows a case for 25-35 year-old, Fig. 8 shows a case for 45-55 year-old, and Fig. 9 shows a case for 75 year-old. Each of them is an area which is one third of a range in which the relative accommodation is enabled, and the Percival's area of comfort, which is suitable for a fusion, is calculated, and shown as gray area in the figure. Here, for 75 year old, there is almost no area of comfort, and the result is such that it almost does not appear with the scale size of the figure. It means that the amplitude of the accommodation becomes 0, and the visual function in the present invention and the visual function described in patent document 2 become equivalent. Even in this case, the design of the present invention is performed through the binocular visual acuity function, and it is not limited by patent document 2. Further, the ranges of 15-25 year-old, 35-45 year-old, 55-75 year-old maybe calculated from the averages of Fig. 5 and Fig. 6, Fig. 6 and Fig.7, and Fig.7 and Fig.8. The Donders curves for arbitrary ages obtained so far are convergence-relative accommodation relationships. These relationships are also convergence-relative convergence relationships for arbitrary ages. From these relationships, the positive relative convergence, the negative relative convergence, positive relative accommodation, and the negative relative accommodation at an arbitrary angle of convergence for an arbitrary age can be obtained. Since basically the relative measurement values are measured in the corrected state even for the heterotropia, the above described present invention can also be applied thereto.

For other input data, threshold values for evaluating the sensory fusion are required, but for these the Panum's fusional area and the focal depths of eyeballs can be considered. However, as it has already been described, their quantitative measurements require precise and careful measurements, depending on a fusion stimulating condition. In addition, since their nature is such that they cannot be represented by a specific measurement, they are set without depending on a measurement. As a setting method, they can be arbitrarily selected from known measured values through designer's discretion, while considering a condition of use of the eyeglass lens. Specifically, for the values of the fusional area in the horizontal and vertical directions are listed in Table 1. As described on p316 - 322 of the non-patent document 4, 10 minutes in the horizontal direction and 3.5 minutes in the vertical direction which are the measured values at a central fovea (a half of the normal fusional area) are used. As for the focal depth, the power interval of the power range of the normal manufacture in the eyeglass industry is 0.25D. According to Westheimer's formula and Southall's formula which are the formulas of the depth of field (focal depth) described on pages 2251 and 252 of the non-patent document 6, the depth of field is 0.1D to 0.5D. Therefore, 0.2D is employed.

(3) Detailed explanation of the first step S1 (a setting step of an Object - Eyeglass Lens - Binocular Eyeball System)

Next, as the first step S1, the Object - Eyeglass Lens - Binocular Eyeball System is set. Basically, the object is arbitrarily determined by a designer. Therefore, the eyeglass lens is designed so that performance of the eyeglass lens becomes higher at the arbitrary object determined by the designer. The present invention is not limited by any object. In order to clarify a feature of the present invention, the object is described in detail.

Here, the object in Fig. 44 which is "Fig. 2" of patent document 1 or the object in "Fig. 1" of patent document 2 lie on a flat surface. The eyeglass design for which the object is a flat surface is one of candidates of objects which are adopted for an eyeglass lens for reading character on a tight news paper or on a wall. As it has already been described, the object is arbitrarily selected by the designer. However, in a case where the object is like a flat surface, the points within the object other than the fixation point have big differences in distances from both of the eyeballs. Therefore, it has a disadvantage such that it becomes difficult to simultaneously adjust an error in power from the fixation point, a residual astigmatism, and a prism. Consequently, the prism becomes bigger. This does not bring a good result for the binocular vision functionalities.

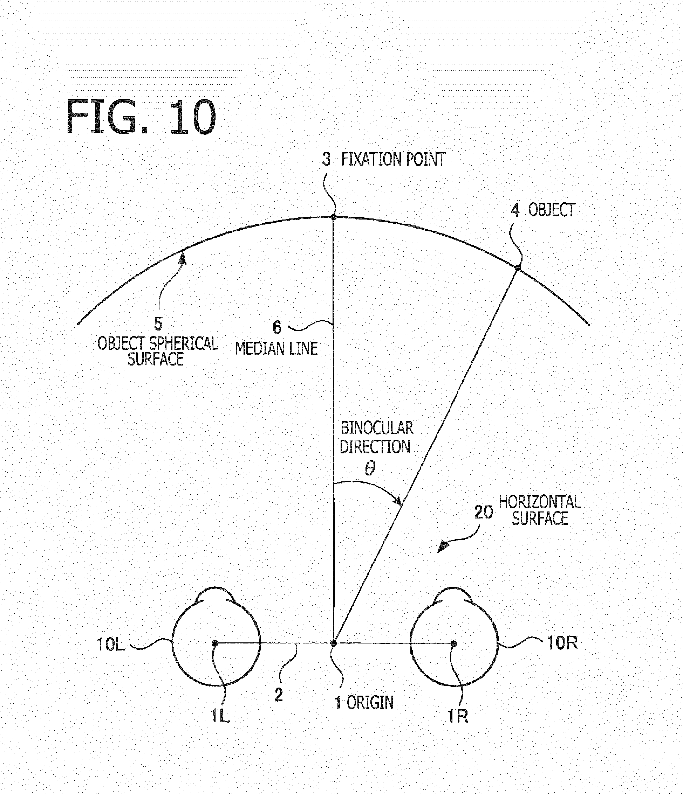

A preferable object as an object used for the eyeglass lens evaluation method of the present invention is shown in Fig. 10. The explanation below is an explanation based on a line of fixation at a side of an image, and since everything are the same except for an explanatory diagram, an explanation based on a line of fixation at a side of an object is omitted. As shown in Fig. 10, firstly, a center of rotation of a right eyeball 1R and a center of rotation of a left eyeball 1L are set. In Fig. 10, an arrangement on a horizontal surface 20 which includes both the centers of rotations of the eyeballs 1L and 1R is shown. In Fig. 10, a middle point of both the centers of rotations of the eyeballs 1L and 1 R is set to an origin 1 in a coordinate system in the Object - Eyeglass Lenses - Binocular Eyeball System. Then, an object 4 is defined on an object spherical surface 5 which is a hemisphere of the front eye centered by the origin 1 with a radius defined by a distance from the origin 1 to a fixation point 3. The centers of rotations of both the eyeballs 1L and 1R are placed within a frontal plane. When an object 4 is placed at infinity, it is considered as a limit where a radius of an object spherical surface 5 is enlarged. Further, a location of the object 4 is defined using an angle from a middle line 6, the middle line 6 passing through the origin 1, as a variable, instead of a view angle at a side of an image extending from the centers of rotations of both the eyeballs 1L and 1R to the eyeglass lenses, or a view angle at a side of the object extending from the eyeglass lenses to the object, as with a conventional optical system. Namely, an arbitrary position of the object 4 is defined as a function of an angle, the angle being based on the middle line 6 from the origin 1 of the system. This angle θ is defined to be a direction of a binocular vision. Further, the direction of the binocular vision θ may be divided into a horizontal direction and a vertical direction. Additionally, a straight line connecting the centers of rotations of both the eyeballs is set as a line segment between eyeballs 2.

Next, a position of the eyeglass lenses is explained. The eyeglass lenses are placed between a fixation point of a prescription value for a far point and the respective centers of rotations of the eyeballs 1L and 1R at that time. The eyeglass lenses have a prescription value at a lens design reference point, and they have arbitrary tilts with respect to a horizontal surface and a frontal plane (a front tilt angle, an elevation angle), and eccentricities (an eccentricity in a vertical direction, an eccentricity in a horizontal direction). A distance from a rear apex of a lens to the center of rotation of the eyeball is usually 27 mm, or 24-36 mm as described in lines 4-5 from the bottom in the right column on page 2 of Japanese Published Examined Application No. 42-9416. It is better to design as an individual element for a case where the distance is greater than or equal to z 1 mm.

Next, with respect to an eyeball movement, it is assumed that a single eye obeys the Listing's law and binocular eyes obey the Hering's law of equal innervations. The centers of rotations of the eyeballs 1L and 1R move when rotate in up and down or in right and left, so that distances from the centers of rotations to apexes of corneas vary. Namely, when the left and right eyeballs view a near point, they converges because of an accommodation-convergence relation, however, it is known that the centers of rotations 1 L and 1R moves at that time. Further, as a phenomenon which is different from the Hering's law but similar to that law, there is a property such that, as with the light reflex, the same amounts of the accommodation responses are performed, even if the refractive powers of the left and right eyes are different. This property does not contradict the definition that the relative convergence is one value for the both eyes, and it is very convenient for calculating the left and right visual acuities with the relative accommodation. Since there is no problem in approximate sense, in the present invention, it is explained with a system for which the centers of rotations of the eyeballs 1L and 1R are fixed.


(4) Detailed explanation of the second step S2 (a process of calculating a reference aberration)


In the second step, in order to make design reference points of a pair of eyeglasses of an Object of both eyes - Lenses - Binocular Eyeball System as references of calculating aberrations as described below, lens shapes are set so that they provide predetermined prescription values at the design reference points. Further, in general, the design reference points indicate points where the prescribed values are obtained. They are placed in front surfaces of the eyeglass lenses, but they may be placed in rear surfaces. In a progressive lens, the design reference points are usually separated at different lens positions such as a far vision power measuring point, a near vision power measuring pint, and a prism measuring point. Further, for a single focus lens that is a near vision lens, in principle, various quantities for optical calculations are calculated along a principal ray extending from the fixation point on the object to the center of rotation the eyeball and passing through the near vision power measuring point. On the other hand, there is a case in which it is prescribed by defining a near vision PD by simply subtracting 2 mm from a pupillary distance (it is called PD) and setting it as a view point.

In any case, the lens shapes are formed so that the prescribed values are provided at the design reference points. The lens shapes are formed when they converge to the prescribed values, during the process of an optimization calculation. Additionally, for cases of evaluations in which a pair of eyeglass lenses, that are general-purpose lenses, are wore, there are some cases in which the eyeglass lenses and lines of sights passing through the design reference points are not perpendicular. In these cases, slight aberrations occur at the design reference points because of the tilts, but the prescription values are attained in an approximation sense.

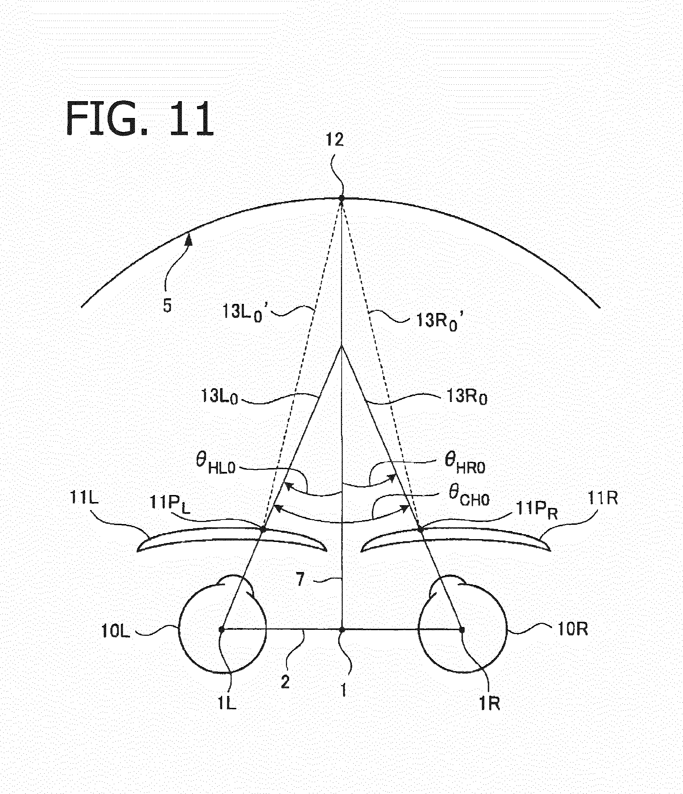

Here, the prescription values are, a spherical diopter power, an astigmatism degree, an astigmatic axis, a prism, a prism axis, and an added power. Since an aberration is defined to be a difference from a reference, these prescription values become references. Fig. 11 shows a states in which both eyeballs 10L and 10R are viewed from above. In Fig. 11, portions corresponding to Fig. 10 are provided with the same reference numerals, and an overlapped explanations are omitted. Lines of fixations 13L0 and 13R0 which pass through respective reference points of a left eyeglass lens 11L and a right eyeglass lens 11R from a left eye 10L and a right eye 10R, respectively, are refracted by the eyeglass lenses 11L and 11R, become eye directions 13L0' and 13R0', and intersect with each other on an object 12 on a median plane 7 on the object spherical surface 5. Namely, it is configured so that the object 12 (an object disposed at a position where the lines of fixations 13R0 and 13L0, from the respective centers of rotations of eyeballs 1 L and 1R and passing through the design reference points 11 PL and 11PR, intersect on the object spherical surface 5 after passing through the lenses, by use of a normal ray tracing method) is disposed on the median plane 7. Even if it is not disposed on the median plane 7, it is attained while converging during an optimization calculation process. Here, the reason why the object 4 in Fig. 10 and the object 12 in Fig. 11 are assigned the different reference numerals is that, in general, the design reference points 11 PL and 11 PR are not on the horizontal surface 20 shown in Fig. 10.

Here, in order to define an angle of convergence, for convenience of a later explanation, a projection component in a direction perpendicular to the median plane of a median line of the lines of fixations 13L0 and 13R0 of the left and right eyes 10L and 10R is defined to be "a plane parallel component," and a component in a direction parallel to the median plane is defined to be "a plane perpendicular component." Further, plane parallel components of angles between the left and right lines of fixations 13L0, 13R0 and the median lines of the lines of fixations 13L0, 13R0 are defined to be $\theta_{HL0}$ and $\theta_{HR0}$, respectively. Additionally, plane perpendicular components of angles between the left and right lines of fixations 13L0, 13R0 and the median lines of the lines of fixations 13L0 and 13R0 are set to be $\theta_{VL0}$ and $\theta_{VR0}$, respectively. Then, an angle of convergence in the plane parallel direction $\theta_{CH0}$ is defined to be the sum of $\theta_{HR0}$ and $\theta_{HL0}$. Signs of $\theta_{CH0}$, $\theta_{HR0}$, and $\theta_{HL0}$ are arbitrary as long as they have consistency, but in the present invention, when the eyeballs are in a convergent state, all of them are set to positive values. Positive and negative are reversed, when the eyeballs are in a diverged state. Similarly, the plane perpendicular component is denoted by $\theta_{CV0}$, and it is defined to be the sum of $\theta_{VR0}$ and $\theta_{VL0}$. Usually, the centers of rotations of the left and right eyeballs are almost on the same horizontal surface, but there are some cases in which there are slight deviations. Therefore, as with the surface horizontal direction, $\theta_{CV0}$ is set to a positive value during in a convergent state, and it is set to a negative value during a diverged state. Representing with formulas, the surface horizontal component $\theta_{CH0}$ and the plane perpendicular component $\theta_{CV0}$ of the angle of convergence which is to be a reference (a reference value of the angle of convergence) become as follows:

$$\theta_{CH0} = \theta_{HR0} + \theta_{HL0}$$

$$\theta_{CV0} = \theta_{VR0} + \theta_{VL0}$$

In general $\theta_{CV0}$ is 0 and the lens shape and the reference point are set so that it becomes 0.

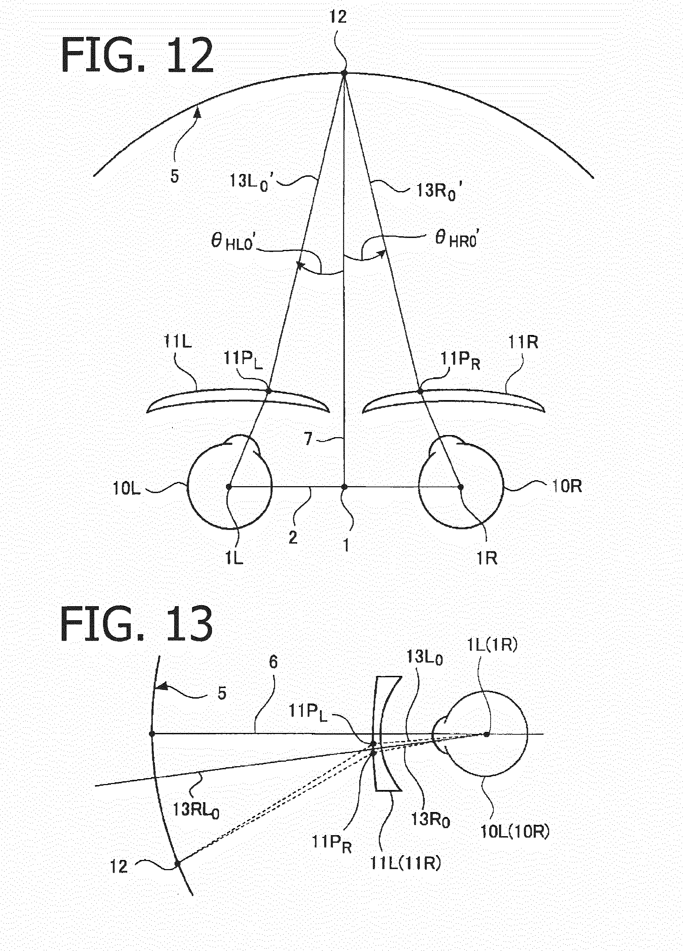

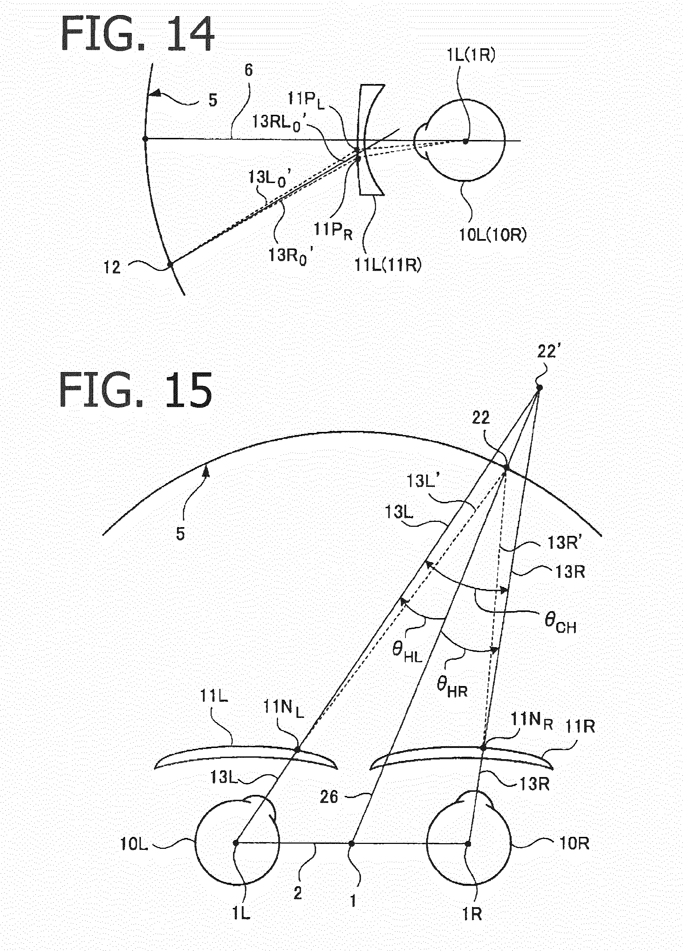

Fig. 12 is a figure which shows that the angle of sights $\theta_{HL0}$ and $\theta_{HR0}$ defined on the side of the image in Fig. 11 are set to angles of sights $\theta_{HL0}'$ and $\theta_{HR0}'$ by the lines of fixations 13L0' and 13R0' on the side of the object. Fig. 13 and Fig. 14 are figures viewing Fig. 11 and Fig. 12 from the side, respectively. It can be seen that the median line 13RL0 of the lines of fixations 13L0 and 13R0 on the side of the image and the median line 13RL0' of the lines of fixations 13L0' and 13R0' on the side of the object pass through the origin 1 and incline from the median line 6 that extends to the object 12. Additionally, as with the definition on the side of the image, the following are obtained on the side of the object

$$\theta_{CH0}' = \theta_{HR0}' + \theta_{HL0}'$$

$$\theta_{CV0}' = \theta_{VR0}' + \theta_{VL0}'$$

Here, signs of the relative measurement values, the errors in power, and the convergence aberrations are explained. Firstly, the signs are not directly related to the present invention, even if the signs are assigned in any way, they are within the scope of the present invention, as long as they have a logical consistency. Next, a usual way of assigning the signs and the explanation in the present invention are described. The normal signs of the relative measurement values assumes a state in which the object is fixated. The sign of the relative accommodation is indicated depending on the positive or negative power of the inserted lens, and the sign of the motor fusion is indicated depending on the direction of the inserted prism and the measured value of the prism diopter.

For example, when a spherical negative lens is inserted and an accommodation limit value is measured, the positive relative accommodation is indicated in a value corresponding to the power of the lens, namely, in a negative value. For the positive relative convergence, a prism is inserted in a base-out direction and a convergence limit value is measured and a prism degree and a direction are indicated, namely, the unit is in prism diopter and indicated by base-out. For the relative convergence, there is no sign and directional indication only. To summarize, the signs are convenient for the side of a measurer. Further, a vertical fusional convergence is an ability to cross the eyeballs in the vertical direction, and conversely, an extending direction is not observed. For the measurement of the vertical fusional convergence, there are few examples in the past, and there is no standard value for the measurement value. The measurement results are merely called as the vertical fusional convergence, and they are indicated in positive values. On the other hand, in the Donders diagram, the positive accommodation and the positive convergence are placed in a mathematically positive direction from the Donders line, but their usual display method is based on negative values, or based on a base-out indication. The relative measurement values do not match well with the Donders diagram, and they are not expressed mathematically.

In the present invention, the following explanation is added so that the signs of the relative measurement values are consistent with the signs of the average refractive power and the convergence aberration. Firstly, the state in which the plane parallel component of the convergence aberration is a negative value is a state where an outward prism is wore in front of an eye. This is the same state as the measurement method of the positive relative convergence. Therefore, in the present invention, the positive relative convergence is treated as a synonym for the outward prism and the negative value. Further, the negative relative convergence is treated as a synonym for an inward prism and a positive value. Next, the state in which the average refractive power is negative is a state where a spherical negative lens is wore in front of an eye. This is the same state as the measurement method of the positive relative accommodation. The positive relative accommodation is expressed in a negative value, but, this agrees to the definition of the average refractive power. Similarly, when the average refractive power is a positive value, its sign agrees to the sign of the negative relative accommodation. For the vertical fusional vergence, since there is no sign for conventional measured values, a sign is assigned arbitrarily. It is preferable that the vertical fusional vergence is matched with, for example, the definition of the plane perpendicular direction of the convergence aberration. In general, the centers of rotations of the left and right eyeballs are on the same horizontal plane. In this case, the changes of the lines of fixations by anisotropic rotations in the vertical direction of the left and right eyes are always in extending directions. However, there is a case where the left and right eyeballs are slightly deviated in the vertical direction. In this case, the changes of the lines of fixations by the anisotropic rotations in the vertical direction of the left and right eyes can be not only in the extending directions, but also in the narrowing directions. The plane perpendicular component of the convergence aberration is expressed with a positive value in the directions in which the eyeballs are narrowing, and is expressed with a negative value in the directions in which the eyeballs are expanding. Therefore, it is preferable that the sign of the vertical fusional vergence is negative, when it is compared with the plane perpendicular component of the convergence aberration. Of course, the anisotropic rotations, with which the eyeballs expand in the vertical direction, is not observed. Thus, it should not be a positive value, and it is preferable that a threshold value in that direction is always 0.

(5) Detailed explanation of the third step S3 (an aberration calculating process at an arbitrary object evaluation point)

The definitions of the optical calculations, etc., of the binocular system explained in the second step S2 are further described in detail, and an optical evaluation is performed at an arbitrary lens evaluation point. In the present invention, the binocular system for which the object distance is infinite is defined to be a binocular system for near view in which the object distance is set to infinite. Therefore, it can be shown in a figure. A schematic configuration of a binocular system in an arbitrary binocular direction is shown in Fig. 15. Details of the optical calculation are explained with reference to Fig. 15. An arbitrary position of an object in an arbitrary binocular direction from the origin 1 of the binocular system is set to an evaluation point 22. Among the lines of fixations starting from the centers of rotations of the left and right eyes 1L and 1R, passing through evaluation points 11NL and 11NR of the left and right eyeglass lens 11L and 11R, refracting and passing through the evaluation point 22, by using the ray tracing method, the extension lines on the side of the image of the lines of fixations are set to 13L and 13R. Here, in the example shown in the figure, the case is shown in which the intersection point 22' of the lines of fixations 13L and 13 R are disposed outside of the object sphere 5. Even if the intersection of the lines of fixations 13L' and 13R' are not able to pass through the evaluation point 22 with a single trial, the optical rays which converges at the evaluation point 22 can be calculated with a required precision by gradually changing the angles of the rays emitted from the centers of the rotations of the eyeballs 1L and 1R.

Here, as a surface horizontal component of an angle of convergence $\theta_{CH}$ at the evaluation point 22 is defined as below:

$$\theta_{CH} = \theta_{HR} + \theta_{HL}$$

Similarly, the surface vertical component of the angle of convergence $\theta_{CV}$ at the point 22 can be defined as below:

$$\theta_{CV} = \theta_{VR} + \theta_{VL}$$

Here, plane parallel components of the angles pinched by the median line 26 of the lines of fixations 13L and 13R and the lines of fixations 13L and 13R, that include the median line 26 of the lines of fixations 13L and 13R, and that are parallel to a surface perpendicular to the median surface, are set to $\theta_{HL}$ and $\theta_{HR}$, and similarly, in the vertical direction, plane perpendicular components, that include the median line 26, and that are parallel to a surface parallel to the median surface are set to $\theta_{VL}$ and $\theta_{VR}$.

Namely, a plane parallel component and a plane perpendicular components of a convergence aberration at the evaluation point 22 are represented as follows:

(the plane parallel component of the convergence aberration): $\theta_{CH} - \theta_{CH0}$
(the plane perpendicular component of the convergence aberration): $\theta_{CV} - \theta_{CV0}$

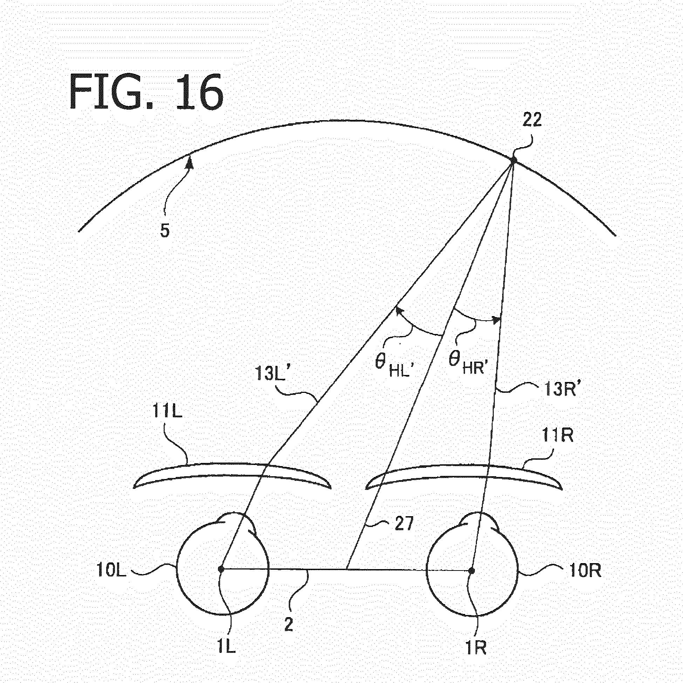

Fig. 16 is a diagram showing angles of convergence $\theta_{HL}$' and $\theta_{HR}$', when they are defined be the lines of fixations 13L' and 13R' at the side of the image. In this case, plane parallel components of the angles pinched by the median line 27 of the lines of fixations 13L' and 13R' and the lines of fixations 13L' and 13R', that include the median line 27 of the lines of fixations 13L' and 13R', and that are parallel to a surface perpendicular to the median surface, are set to $\theta_{HL}$' and $\theta_{HR}$', and similarly, in the vertical direction, plane perpendicular components, that include the above described median line 27, and that are parallel to a surface parallel to the median surface are set to $\theta_{VL}$' and $\theta_{VR}$'. At this time, as with the above described definitions on the side of the image, a plane parallel component and a plane perpendicular component of a convergence aberration defined at the side of the object at the evaluation point 22 are, based on the following:

$$\theta_{CH}' = \theta_{HR}' + \theta_{HL}'$$

$$\theta_{CV}' = \theta_{CV}' + \theta_{VL}',$$

represented as follows:

(the plane parallel component of the convergence aberration): $\theta_{CH}'- \theta_{CH0}'$
(the plane perpendicular component of the convergence aberration): $\theta_{CV}' - \theta_{CV0}'$

Differences of optical values along the lines of fixations 13L and 13R shown in Fig. 15, with reference to optical values along the lines of fixations 13L0 and 13R0 described in Fig. 11, are aberrations. Namely, the spherical diopter power, the astigmatism degree, the astigmatism axes, and the angle of convergence, that are calculated at the second step S2, are set as references, and at the third step S3, an error in power and a residual astigmatism are calculated from differences of the spherical diopter power, the astigmatism degree, and the astigmatism axes. With respect to the angle of convergence, when the reference value of the angle of convergence obtained at the second step S2 is set as a reference as described above, the convergence aberration is defined to be a difference between the reference and the angle of convergence (the plane parallel component is $\theta_{CH}$ which is the sum of $\theta_{HR}$ and $\theta_{HL}$ of Fig. 15) which is the angle between the lines of fixations 13L and 13R from the both eyeballs 10L and 10R. To define further in detail, the convergence aberration is a difference in the angle of convergence, when setting an optical quantity along the principal ray, the principal ray extending from an object to a center of rotation of an eyeball and passing through a design reference point, as a reference.

The convergence aberration defined in the present invention is different from an ordinary binocular retinal image disparity. Specifically, the convergence aberrations are measured values of the relative measurement values which are measured in front of the eyes, when correcting glasses are worn. Therefore, a convergence aberration is different from an ordinary binocular retinal image disparity in a point that it is an aberration in an angle of convergence in a state in which left and right correcting glasses are worn in accordance with a state of the measurement, in a point that it is an aberration when an object defined in a binocular direction (the arbitrary evaluation point 22 on the object spherical surface 5 including the median surface is viewed) is viewed, and in a point that it is defined, not with nodal points, but with the lines of fixation passing through the centers of rotations of the eyeballs. Further, it is different from the binocular retinal image disparity in a point that there are movements of the eyeballs. For the terms of the binocular retinal image disparity, "Handbook of Visual Information Processing," Edited by The Vision Society of Japan, (Asakura Publishing Co., Ltd (2000), p.283-287) is referenced.

Further, the convergence aberration defined in the present invention is further different from an angle of convergence, which is appeared in psychology. Regarding the "angle of convergence" defined in psychology, there is a description, for example, in "Vergent Movement and Binocular Stereopsis" (Optical Review, Vol. 23, No. 1 (January 1994), p. 17-22). In this description, it is said that "an angle between a fixation point (an intersection point of visual axes) and a point of rotation of each of eyes (the centers of rotations)." Differences between the convergence aberration and the angle of convergence are in a point that it is an aberration of an angle of convergence in a state in which left and right correcting lenses are wore, in a point that it is an aberration when an object, which is defined in a binocular vision direction, is viewed, and in a point that an angle between lines of fixations passing through left and right reference points of a pair of eyeglasses is set to a reference value for obtaining a difference in aberrations. It can be seen that the value is completely different from the convergence aberration of the present invention which is defined from viewing angles of the lines of fixations which pass through the pair of eyeglasses and reach to the evaluation point.

Here, the differences between a difference in the horizontal direction or a difference in the vertical direction described in patent document 3 and the convergence aberration defined in the present invention are considered again. The following 5 points are considered as the differences of the convergence aberration:

a. The definition is based on a vergence (contralateral binocular movement) of the Hering's law of equal innervations that is a law of motion of a binocular vision, namely, the definition is based on a physiological knowledge derived from a convergent movement.
b. It is possible to use an arbitrary object defined with a binocular vision direction.
c. Evaluations based on a same basis can be performed throughout the whole field of vision, since there is one basis for evaluations.
d. By inventions of the plane parallel component and the plane perpendicular component, it is physiologically an appropriate definition when it is divided into components and when it displaces from a horizontal surface.
e. A position of an object is not defined on a surface, but it is defined stereoscopically.

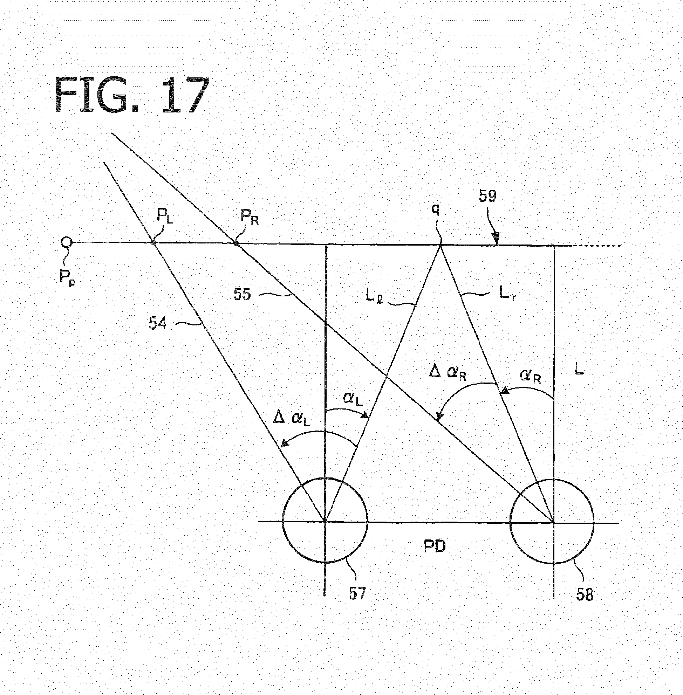

Here, the difference in the horizontal direction and the difference in the vertical direction described in patent document 3 are analyzed in detail. The horizontal component in "Fig. 2" of patent document 3 is shown in Fig. 17. Since the vertical direction is similar, only a position difference $\Delta P_H$ in the horizontal direction described on page 5, line 35 of patent document 3 is explained below. As shown in Fig. 17, a distance between the centers of rotations of both the eyeballs is set to PD and a distance from the centers of rotations of both the eyeballs to the surface 59 including a point P is set to L. Further, it is not shown in figures in patent document 3, but an equal dividing point of the centers of rotations of both the eyeballs, which also is a point on the object surface 59, is set to a point q. The point q is defined to be an intersection point where lines of fixations Lr, Ll from the centers of rotations of both the eyeballs in a front direction and the surface 59 cross. Viewing angles of the lines of fixations Lr and Ll are set to $\alpha_R$ and $\alpha_L$, and viewing angles of lines of fixations 54 and 55, from the lines of fixations Lr and L1, are set to $\Delta\alpha_R$ and $\Delta\alpha_L$, respectively.

Then, the position difference $\Delta P_H$ in the horizontal direction is expressed as follow:

$$\Delta P_H = L \times \tan(\alpha_R + \Delta\alpha_R) - L \times \tan(\alpha_L + \Delta\alpha_L) - PD$$

Further, a distance between the centers of rotations of both the eyeballs PD has the following relation, when using $(\alpha_R)$, $(\alpha_L)$, and L:

$$PD = L \times \tan(\alpha_R) - L \times \tan(\alpha_L)$$

The difference in the horizontal direction is described as dividing the positional difference in the horizontal direction by an object distance L. Thus the following formula is established:

$$\text{The difference in the horizontal direction} = \tan(\alpha_R + \Delta\alpha_R) - \tan(\alpha_L + \Delta\alpha_L) - PD / L$$

By substituting PD, the following is obtained:

$$\text{The difference in the horizontal direction} = \tan(\alpha_R + \Delta\alpha_R) - \tan(\alpha_L + \Delta\alpha_L) - (\tan(\alpha_R) - \tan(\alpha_L))$$

Here, only when $\Delta\alpha_R$ and $\Delta\alpha_L$ are sufficiently small at a center portion of the field of vision, the following approximation formula is established:

$$\text{The difference in the horizontal direction} \approx \Delta\alpha_R - \Delta\alpha_L$$

Therefore, "the difference in the horizontal direction" in patent document 3 represents, in a very limited narrow area of the center portion of the field of vision, a difference in an angle of convergence when the point P on the same surface 59 is viewed while making the angle between the lines of fixations Lr and Ll as a reference. However, this becomes a quantity which has no relationship with the angle of convergence in an area other than the center portion where $\Delta\alpha_R$ and $\Delta\alpha_L$ are large, and this becomes a value which has no basis in physiology.

If the difference in horizontal direction, which has no physiological basis, is used as-is as an evaluation function, it can be understood that it has the following problems for an evaluation of a performance of a pair of eyeglasses.

1. The point P and the point q must be on the same object surface 59 as with the explanation figure of Zeiss. Therefore, except for a surface for which the object surface is parallel to the frontal plane, for the difference in the horizontal direction, the reference point changes for each of the distances to the object and it cannot be an evaluation method for a whole of the lens. Namely, it does not have a property as an aberration.

2. When the object is the same object surface 59 as with the Zeiss patent, it becomes a single basis, and it has a property as an aberration. However, when $(a_R)$, $(a_L)$, $(\Delta\alpha_R)$, and $(\Delta\alpha_L)$ become large, since the tangent has a non-linearity with respect to an angle, it does not match with the angle of vergence that is represented by the difference of the angles $\Delta\alpha_R - \Delta\alpha_L$. Therefore, the difference in the horizontal direction does not have a physiological basis in a periphery of the visual field.

3. Similarly, when the lines of fixations 14 and 15 shift from the horizontal surface, it becomes different from the original angle of convergence.

According to the above explained definition of patent document 3, it cannot be a single uniform definition throughout the whole of the object surface, and it becomes an evaluation function having no physiological basis around the periphery of the visual field. It is improper to evaluate a binocular vision using an unclear definition which does not have any basis.

Next, differences between a fixation line according to the ray tracing method in the present invention and an actual fixation line are explained in detail. With respect to the plane parallel direction, there is an arbitrary correspondence relationship within divergence boundaries and convergence boundaries of eyeballs. Therefore, it is possible that, in the plane parallel direction of the lines of fixations 13L0' and 13R0' in Fig. 11 and Fig. 12, they always pass through the evaluation point 12. Here, it is explained in accordance with non-patent document 15. When setting an ipsilateral binocular movement to $\theta$, a contralateral binocular movement to $\mu$, a momentum of the right eye to $M_R$, a momentum of the left eye to $M_L$, the Hering's law of equal innervations can be expressed by the following formulas:

$$\theta + \mu / 2 = M_R$$

$$\theta - \mu / 2 = M_L$$

Then, within the divergence boundaries and the convergence boundaries of the eye balls, arbitrary $M_R$ and $M_L$ can be expressed in terms of $\theta$ and $\mu$. Namely, by arbitrarily moving the left and right eyeballs through the ipsilateral binocular movement and the contralateral binocular movement, in the plane parallel direction, it is possible to pass through the evaluation point 22.

However, in the plane perpendicular direction, actually, the left and right eyeballs cannot rotate independently. Therefore, it seems that the eyeballs cannot rotate in accordance with the calculation method of the lines of fixations according to the present invention, at a glance. However, a vertical fusional vergence of a motor fusion is possible through a motion, and it is possible through a sense in the plane perpendicular direction in the Panum's fusional area. A fusion in the surface vertical direction has a threshold value, but it is possible, if it is involuntary. Therefore, by the lines of fixation through the ray tracing method, a convergence aberration in the plane perpendicular direction does not contradict with the actual lines of fixations. However, if the vertical fusional vergence that is greater than or equal to the threshold value becomes the plane perpendicular component, then of course, it cannot be realized. The calculation method by the lines of fixations with the ray tracing method in the present invention is a means to determine whether it is possible or not.

In this embodiment, the above error in power, the residual astigmatism, the convergence aberration and the prism value as a scalar quantity that does not include a vector as a direction are calculated as aberrations belonging to the evaluation point (usually every pitch of 1-10 degrees in the binocular vision direction in the whole lens surface, and there are some cases in which the lines of fixations exist only one of the left direction and the right direction, but the points are also reference points) of the object in the binocular vision direction in the Object - Eyeglass Lenses - Binocular Eyeballs System. For the prism, since a degradation of the visual acuity by a chromatic aberration is in proportion to an amount of the prism, not to a difference of the prism, it is not regarded as an aberration and it is used as-is.

The convergence aberration is considered from a functional aspect of living systems, for example, from the facts that a vergence latency is 150 - 200 ms, an impulsive eyeball movement is for 200 ms and about 800 times/sec, a movement control is 350 - 400 ms, and a pupillary near response is 400 - 450 ms. In this case, among the movements of lines of fixations of an object, during a disparity-induced convergence movement which is a combination of the convergence and the impulsive eyeball movement, the control and the pupillary near response are constant or almost do not change in comparison with the convergence and the impulsive movement. Therefore, the convergence aberration is considered as an aberration having a higher priority than other aberrations, the error in power, and the residual astigmatism, except in a line of intersection which passes through a reference point, namely, at an arbitrary lens evaluation point. Regarding the disparity-induced convergence movement, it is described in detail in "Adaptive change in dynamic properties of human disparity-induced vergence," Takagi M, et al., Invest Ophthalmol. Vis Sci, 42, (2001), P.1479-1486. Namely, during a time between the object 12 in Fig. 11 and the object 22 in Fig. 15, a suppression during jumping works and it is a state in which it is not possible to see. Therefore, these are related in a short time difference with each other, and the relation of the aberration holds.

(6) Detailed explanation of the fourth step S4 (categorization of the visual fatigue state based on the convergence aberration and the error in power). As to the classification for judging whether it is in the comfortable area or in the visual fatigue area is determined by the fact that the error in power or and the convergence aberration is within 1/3 of the relative accommodation, the relative convergence and the vertical fusional vergence. Further, as a unit of the error in power, diopter is used. Additionally, the convergence aberration defined in the present invention is in unit of the angle of convergence, and a meter angle (M.A.), a unit in minute (arcmin), or prism diopter ($\Delta$ in symbol) is used. However, when the values of the relative convergence and the vertical fusional vergence are to be uniformized with the value of the relative accommodation, the meter angle (M.A.) is used for each of the relative convergence and the vertical fusional vergence. Silimarly, whether it is the sensory fusion is judged by whether the error in power and the converence aberration are respectively within the Panum's fusional area and the focal depth.

Here, the relative measurement values are affected by many factors. The relative measurement values may vary depending on, for example, brightness, the convergence, static or dynamic self-adjustment of the accommodation, and a spatial frequency of the object to be measured. Therefore, they should be measured under a condition which is equivalent to a main environment of usage of the eyeglasses.

Further, the motor fusion and the sensory fusion have spatial anisotropies. Therefore, they are different depending on a position of the eyes, namely, among a first position of the eyes, a second position of the eyes, and a third position of the eyes. Especially, at the third position of the eyes, when the eyeballs move according to the Listing's law, horizontal axes of the eyeballs are not parallel to a surface including a middle line between the lines of fixations 13R and 13L and a line segment 2 between the eyeballs. Therefore, for the motor fusion and the sensory fusion, which are properties of the binocular vision, the relative convergence, the vertical fusional vergence, and the shape of the Panum's fusional area become slightly different, logically and mathematically. Further, it is logically and mathematically predicted that, at the third position of the eyes, they become different between an ipsilateral binocular eyeball movement and a contralateral binocular eyeball movement. However, when the rotational movements of the eyeballs occur concurrently with the movements according to the Listing's law, then the logical and mathematical conclusion described above does not hold. The above measurement of the change in the shape of the area is not performed at the time of the present application. Therefore, in the present invention, the relative measurement values at the other positions are represented by the relative measurement values at the first position of the eyes.

Furthermore, at the third position of the eyes, there is an element of an eyeball rotation. Presently, quantitative understanding of this effect is insufficient. However, it is observed that it rotates so that the motor fusion becomes easy. Naturally, as an effect of the rotation, the Listing's law itself does not change (the Listing's law has nothing to do with the eyeball rotation, in the first place), but it affects the subsequent calculations of the residual astigmatism and the calculations of the values of the relative convergence and the relative accommodation, and the calculation of the visual acuity described below. In the present invention, the effect of the rotation is not explained. In the present invention, individual relative measurement values may be used, but a standard motor fusion and a standard sensory fusion may be utilized.

An area of the motor fusion and an area of the sensory fusion have been measured by many researchers, and they are as the Table 1 and the Table 2. Further, these results depend on the spatial frequency of the object, the object distance, the age, and the position of the eyes. Since the individual difference is very large, they are reference values. However, from these results, it can be understood that the motor fusion and the sensory fusion differ about 10 times in the horizontal direction and about 5 times in the vertical direction.

Specifically, for classification as to whether it is in the comfortable area or in the visual fatigue area, a three dimensional space is considered while defining the horizontal axis as the relative convergence (or the angle of convergence), defining the vertical axis as the vertical fusional vergence of the motor fusion, defining the depth axis as the relative accommodation (or simply accommodation angle). At this time, for the relative convergence, 1/3 of the positive relative convergence and 1/3 of the negative relative convergence are defined as threshold values, and these values are compared with the plane parallel component of the convergence aberration. When the plane parallel component of the convergence aberration is within threshold values of 1/3 of the positive relative convergence and 1/3 of the negative relative convergence, the plane parallel component is within the motor comfortable area on the horizontal axis. At the same time, for the vertical fusional vergence, the plane perpendicular component of the convergence aberration is compared with the vertical fusional vergence as a threshold value. When the plane perpendicular component of the convergence aberration is within the threshold value of 1/3 of the vertical fusional vergence, the plane perpendicular component is within the motor comfortable area on the vertical axis. Concurrently, as for the relative accommodation, the error in power is compared with the positive relative accommodation and the negative relative accommodation defined as threshold values. When the error in power is within the threshold values of 1/3 of the positive relative accommodation and 1/3 of the negative relative accommodation, the error in power is within the motor comfortable area in the depth axis. That is, when the error in power and the convergence aberration simultaneously fall within the three relative measurement values, it is determined as the motor comfortable area. On the other hand, if at least one of the relative measurement values is not satisfied, it is determined as the fusion-impossible area. By giving relationships between the axes, for example, an area surrounded by a polyhedron having vertexes equal to the relative measurement values means the relative comfortable area. Due to the nature of the vertical fusional vergence, a phenomenon that the eyeballs diverge in the vertical direction has not been observed. Therefore, the relative measurement values become five in total, and the space surrender by the closed surface of the pentahedron is the motor comfortable area. The vertex do not precisely form a polyhedron, but is an elliptic cylinder.

For example, the closed surface is specifically expressed by an expression. When symbols COMH, CONV, COMR, COML and COMD are defined as coefficients for the convergence aberration and the error in power is defined as a coefficient for the relative measurement value, it is classified into the comfortable area and the visual fatigue area between the closed surface by AREA1.

COMH when the plane horizontal component of the convergence aberration is positive
COMH=plane parallel component of the convergence aberration / (1/3 of negative relative convergence
COMH when the plane horizontal component of the convergence aberration is negative
COMH=plane parallel component of the convergence aberration / (1/3 of positive relative convergence
COMV=plane perpendicular component of the convergence aberration / (1/3 of the vertical fusional vergence)
COMR when the error in power is positive
COMR=error in power of the right eye / (1/3 of the negative relative accommodation)
COMR when the error in power is negative
COMR=error in power of the right eye / (1/3 of the positive relative accommodation)
COML when the error in power is positive
COML=error in power of the left eye / (1/3 of the negative relative accommodation)
COML when the error in power is negative
COML=error in power of the left eye / (1/3 of the positive relative accommodation)
COMD=larger one of COMR, COML
AREA1=root of sum of squares having COMH, COMV, COMD as factors

When the AREA1 is smaller than 1, it is classified into the comfortable area. When the AREA1 is larger than 1, it is classified into the visual fatigue area.

When the three dimensional space is considered similarly, the classification as to whether it is the sensory fusional area is judged based on the following conditions. That is, when the plane parallel component of the convergence aberration is within the plane parallel component of the Panum's fusional area and the plane perpendicular component of the convergene aberration is within the Panum's fusional area and concurrently the error in power is within the focal depth, it is judged to be the sensory fusion area. It is also possible to judge that it is the motor fusion area when at least one of the above described threshold values is not satisfied. In the sensory fusion area, there is no motion of the eyeball from the definition. Therefore, the sensory fusion area does not have asymmetry in the horizontal direction, the vertical direction and the depth direction, and forms an octahedral shape or a closed surface which can be viewed as an elliptical shape when viewed from each of the axes.

More specifically, along the axis of the angle of convergence, 1/2 of the plane parallel component perpendicular to the median plane of the Panum's fusional area is defined as the threshold value of the sensory fusion area. For the convergence aberration, the plane parallel component which is the projected component to a plane which is perpendicular to the median plane and includes the median line of the lines of fixation by which the angle of convergence at the evaluation point is obtained. The difference between the value of the plane parallel component of the convergence aberration and the threshold of the sensory fusion of the angle of convergence is regarded as the judgment criterion. Regarding the axis of the accommodation, 1/2 of the focal depth is defined as the threshold value of the sensory fusion. The difference between the average error in power at the evaluation points and the threshold value of the sensory fusion of the accommodation is defined as the judgment criterion for the sensory fusion of the relative accommodation. Along the axis of the vertical fusional vergence of the motor fusion, 1/2 of the plane perpendicular component which is parallel with the median plane of the Panum's fusional area is defined as the threshold value of the sensory fusion of the vertical fusional vergence. For the convergence aberration, we obtains the plane perpendicular component which is a projected component to a plane which is parallel with the median plane and includes the median line of the lines of fixation for which the angle of convergence at the evaluation point is obtained. The difference between the value of the plane perpendicular component of the convergence aberration and the threshold value of the sensory fusion of the vertical fusional vergence is difined as the judgment criterion for the sneosry fusion of the vertical fusional vergence. We expresses the above described closed surface by a concrete expression. When symbols SENH, SENV, SENR, SENL and SEND are respectively defined as indicated below as coefficients for the convergence aberration and the error in power, we are able to classify into the sensory fusion area and the other area (e.g., the motor fusion area) according to whether it is the inside or the outside of the closed surface by AREA2.

SENH=Plane parallel component of the convergence aberration/PanumH
SENV=Plane perpendicular component of the convergence aberration/PanumV
SENR=Absolute value of (Error in power of right eye/PanumD)
SENL=Absolute value of 8Error in power of left eye/PanumD)
SEND=Larger one of SENR and SENL
AREA2=Square root of sum of square having SENH, SENV and SEND as factors
When AREA2 is smaller than 1, it is classified into sensory fusion area. When AREA2 is larger than 1 and is not within the visual fatigue area, it is classified into the motor comfortable area. PanumH, PanumV and PanumD respectively represent 1/2 of the plane parallel component, 1/2 of the plane perpendicular component and 1/2 of the focal depth of the Panum's fusional area at the central fovea.

(7) Explanation about step S5 (Step for calculation of evaluation function)

In step S4, we made classification for the sensory fusion area, the motor comfortable area and the visual fatigue area at the evaluation point. In step S5, we calculates the evaluation function by adding the visual fatigue function at each evaluation point in accordance with the respective classifications.

The relationship between the evaluation function and the visual fatigue function is as follows. That is, the evaluation function for optimization calculation is defined as a function obtained by squaring and adding the evaluation function including the relative measurement values as factors at the evaluation point of the object. The relationship is expressed by the following equation (1).

$$evaluation\ function = \sum_{i=1}^{n} \left[ W_i \times visual\ fatigue\ function_i \right]^2 \quad \cdots (1)$$

In the equation (1), Wi represents the weight at the i-th evaluation point of the object represented in the binocular vision direction. In the following, suffix i represents the i-th evaluation point, and n represents the number of evaluation points passing through at least one of the left and right lenses from each evaluation point. The weight varies depending on the importance of the use condition at each point (evaluation point) of the eyeglasses. As a matter of course, the weight of the design reference point is large, and the weight at the peripheral portion of the lens is small. Typically, the frame is deformed by heat or an eyeglass nipper. However, there is a frame which is not deformable, i.e., a frame which defines a lens shape. In such a case, it becomes easier to deform the lens by decreasing the weight Wi at the peripheral portion of the lens. As a matter of course, it is preferable that the weight of deformation is large at the design reference point, and is small at the peripheral portion of the lens. i of the visual fatigue function is the visual fatigue function of the i-th evaluation point.

The (visual fatigue function)$_i$ of the evaluation point i is expressed as follows in accordance with the sensory fusion area, the motor comfortable area and the visual fatigue area.

In the sensory fusion area, (visual fatigue function)$_i$ = 0.

In the motor comfortable area and the visual fatigue area, (visual fatigue function)$_i$ = common logarithm of FUNC

More specifically,

If the plane parallel component DFh of the convergence aberration is a positive value,

$$VFH = (DFh - PanumH)/(1/3 \text{ of negative relative convergence - PanumH})$$

If the plane parallel component Dh of the convergence aberration is a negative value,

$$VFH = (DFh + PanumH)/(1/3 \text{ of positive relative convergence + PanumH})$$

If the plane perpendicular component DFv of the convergence aberration is constantly negative,

$$VFV = (DFv + PanumV)/(1/3 \text{ of vertical fusional vergence + PanumV})$$

If the error in power of the right eye PowR is a positive value,

$$VFR = (PowR - PanumD)/(1/3 \text{ of negative relative accommodation - PanumD})$$

If the error in power of the right eye PowR is a negative value,

$$VFR = (PowR + PanumD)/(1/3 \text{ of positive relative accommodation + PanumD})$$

If the error in power of the left eye PowL is a positive value,

$$VFL = (PowL - PanumD)/(1/3 \text{ of negative relative accommodation - PanumD})$$

If the error in power of the left eye PowL is a negative value,

$$VFL = (PowL + PanumD)/(1/3 \text{ of positive relative accommodation + PanumD})$$

VFD = larger one of VFR and VFL
DVF = square root of sum of squares of VFH, VFV, VFD
The function FUNC is defined as follows so as to be set to 0 on the closed surface of the Panum's fusional area and to be set to 1 on the closed surface of the relative measurement value.

$$FUNC = 9 \times DVF + 1$$

According to Weber law, (visual fatigue function)$_i$ of the evaluation point i corresponding to the motor comfortable area and the visual fatigue area is expressed by the following equation. (visual fatigue function)$_i$ =common logarithm of FUNC PanumH, PanumV and PanumD represent 1/2 of the horizontal component, 1/2 of the vertical component and 1/2 of the focal depth of the Panum's fusional area at the central fovea. The visual fatigue function is calculated by the error in power and the convergence aberration from the left and right lines of fixation. However, there is a slight area with which only one fixation line exists and therefore the visual fatigue function cannot be calculated. In such a case, the visual fatigue function is substituted by the maximum visual fatigue function value obtained from the both eyes or the visual function including the visual function of the patent document 1, the remaining distortion and the chromatic aberration in the patent document which is the aberration of the single eye is used. Since the area of the single eye is excusive during the optimization calculation of the binocular vision area, there is no bad effect, such as distribution of the aberration, even if it is added to the evaluation function.

By using the equation (1) as the evaluation function, calculation of the minimum value according to the optimization calculation is executed by repeating steps S2 to S5 while slightly changing the shapes of the left and right lenses. When the desired convergence condition is satisfied as a result of the optimization calculation, the setting value of the evaluation point is determined. Then the process proceeds to step S6. When the calculation has been executed for all the evaluation points, the process proceeds to step S6.

The effect of repetition of the steps will now be explained simply. Decreasing of the evaluation function is synonymous with decreasing of the visual fatigue function by the repetition process of the steps. Decreasing of the visual fatigue function means broadening of the fusional area. That is, the equation (2) acts so that it becomes small to the extent that the binocular vision can be performed. As a result, it works so that decreasing of the visual fatigue expands the fusional area and the condition for the stereopsis can be satisfied. Therefore, the visual fatigue becomes hard to occur, and it becomes possible to recognize the object easily.

(8) Detailed explanation of the sixth step S6 (review process of the optimized solution)

Here, the lens shape obtained at the fifth step S5 is reviewed. Especially, when the range of the sensory fusion at a neighborhood of the lens design reference point is small, then the eyeballs must always be in motion and there is no rest. Therefore, the visual fatigue tends to occur, and as an eyeglass, it is not suitable. Specifically, in the binocular view direction, for example, it is greater than or equal to 5 degrees. When projecting on the lens, for example, it is about 5 mm or more in diameter with its center at a design standard point. Such an extent of breadth is necessary for a stable prescription measurement of the design standard point of the eyeglass lens. Therefore, for example, when a condition of 5 degrees or 5 mm is not satisfied (when the determination at the sixth step S6 is "NO"), then it is determined that the lens is not suitable as an eyeglass lens and it is determined that the design is not possible, and the flowchart is terminated. When the condition is satisfied (when the determination at the sixth step S6 is "YES"), the process proceeds to the seventh step S7. At the seventh step S7, the shapes of the left and right eyeglass lenses are determined.

After determining the design values in this manner, the eyeglass lens according to the embodiment of the present invention can be provided through performing normal lens processing based on the optical design values.

[3] Examples (an example of an astigmatism degree of 0D)

Next, an embodiment, for which an evaluation is performed in accordance with the eyeglass lens evaluation method according to the above embodiment, is explained.

(1) Example 1

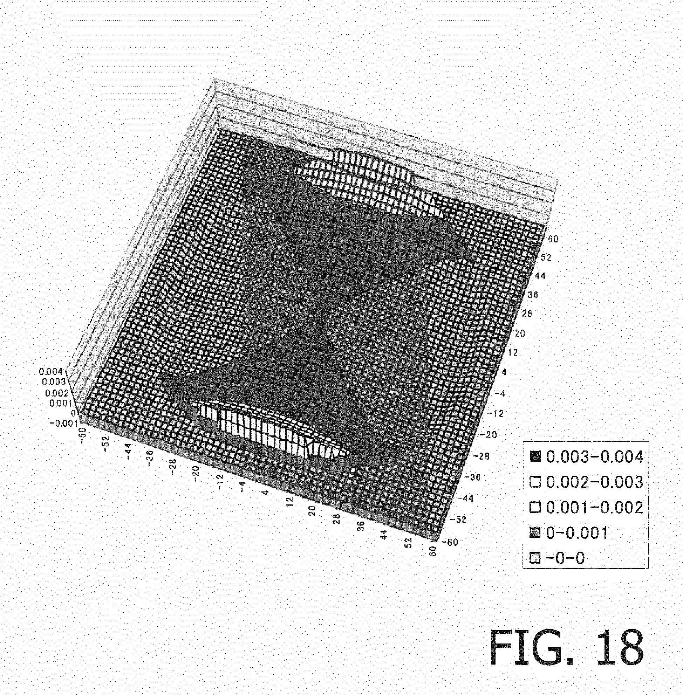

In this example, an example of a calculation of the binocular visual acuity for a case in which both left and right eyeglass lenses have the spherical diopter power of - 4D and the astigmatism degree of 0D is considered. The results of the calculation are shown in Fig. 18 - Fig. 21. This example is an example of an evaluation for a single focus eyeglass lenses, and no iteration calculation is performed for optimization. An object is set to a hemisphere surface of an infinite radius which is centered by the origin 1 in a viewing direction, in the coordinate system explained in the above described embodiment. Namely, the evaluation is performed for far view. The eyeglass lens is a general-purpose bilateral aspheric lens, and it is successfully corrected by a visual function according to patent document 2. In this example, in order to clarify the effect of the evaluation method of the present invention, a front tilt angle, an elevation angle, and an eccentricity of the lens are set to 0. The distance from the apex of a cornea to the center of rotation of the eyeball is 27.7 mm, the Abbe number is set to 32, the lens radius is set to 75 mm, and the pupillary distance is set to 62 mm. For the relative measurement values, the average value for 30 year-old is used. As the positive relative convergence, the negative relative convergence, the positive relative accommodation, the negative relative accommodation and the vertical fusional vergence for 30 year-old, -1.7MA, 0.75MA, -1.58D, 0.5D and -0.65MA are used respectively.

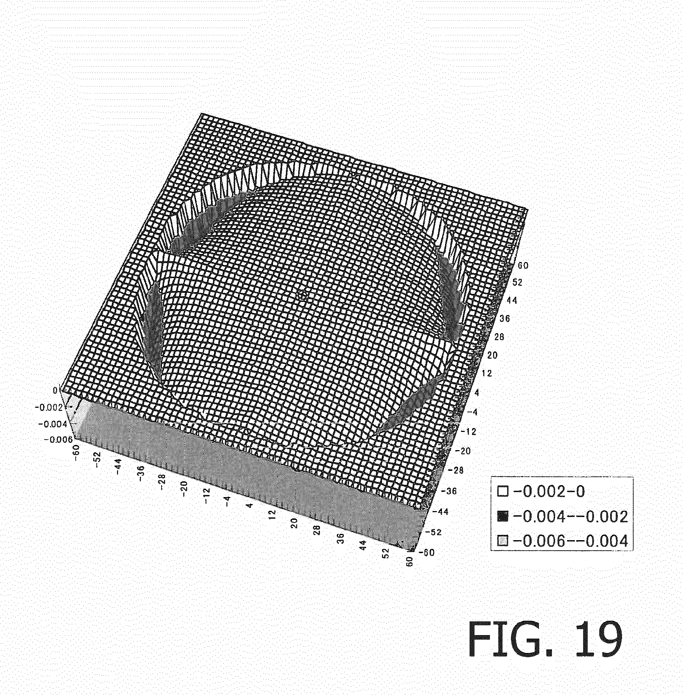

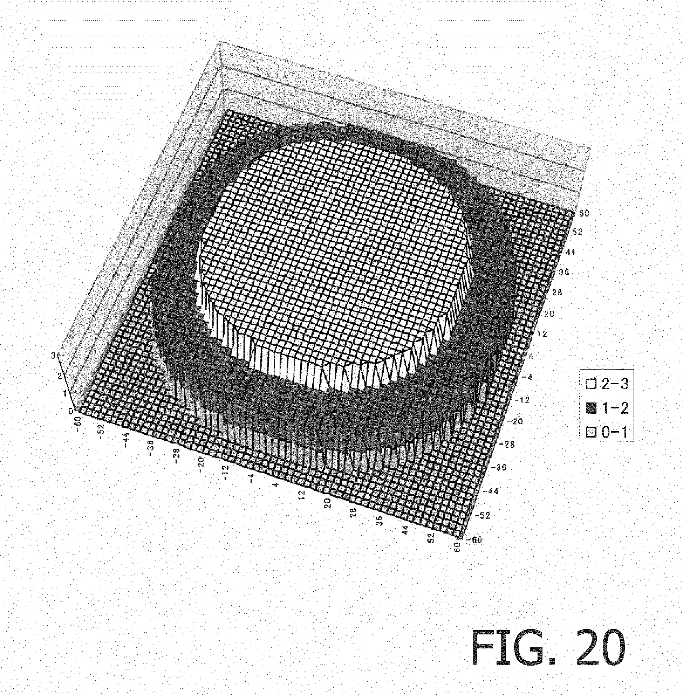

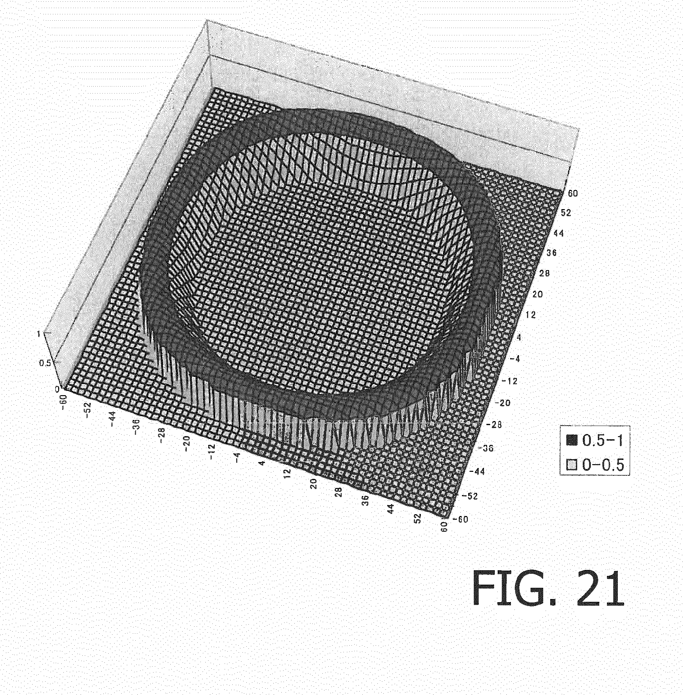

Figs. 18 to 21 are a set of four figures, and illustrate the following evaluations at each evaluation point of a lens. In these figures, both of the horizontal and vertical axes are the binocular vision directions. The horizontal axis is the horizontal direction, and the vertical axis is the vertical direction. The unit of the angle is degree. Fig. 18 illustrates the convergence aberration in the plane parallel direction. Fig. 19 illustrates the convergence aberration in the plane vertical direction. In each of Figs. 18 and 19, the unit is the prism diopter. Fig. 20 illustrates the fusion state through the eyeglass lenses of the both eyes. In Fig. 21, the highest annular area represents distribution of the visual fatigue area, the area of the slanting surface inside the gray area represents distribution of the motor comfortable area, and the flat area inside the slanting surface area represents distribution of the sensory fusion area, respectively. Fig. 21 represents the visual fatigue function value. No unit is used. From Figs. 18 and 19, each of the plane parallel component and the plane perpendicular component of the convergence aberration is extremely small, and is smaller than or equal to 0.005Δ in almost all the area. Therefore, in the fusion state shown in Fig. 20, the sensory fusion area occupies almost whole area of the binocular vision direction. Therefore, regarding the visual fatigue function shown in Fig. 21, the visual field having no visual fatigue almost in the whole area is obtained. In the central area close to the design reference point, the visual function is zero for each of the left and right eyes although it is not illustrated here, and is minus because the fusion, i.e., the condition of the binocular vision, stands.

(2) Example 2 (an example in which a difference between left and right spherical diopter powers is greater than or equal to - 2D)

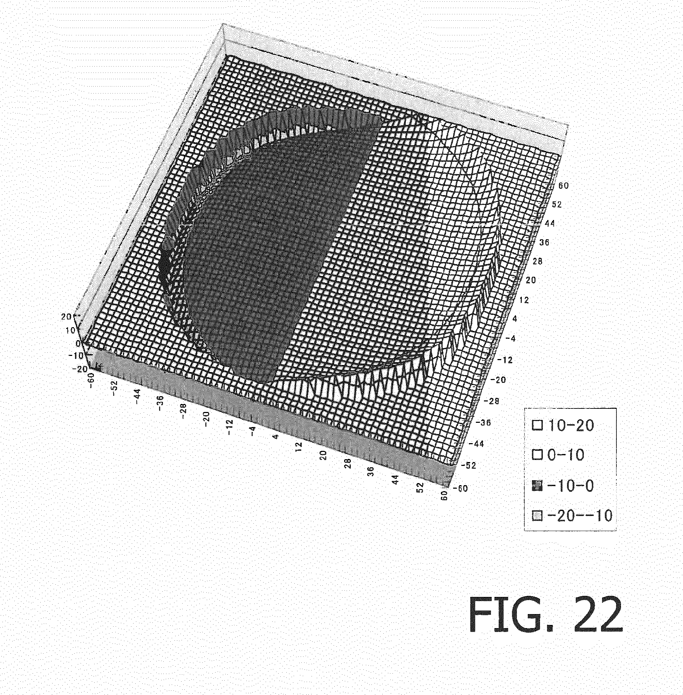

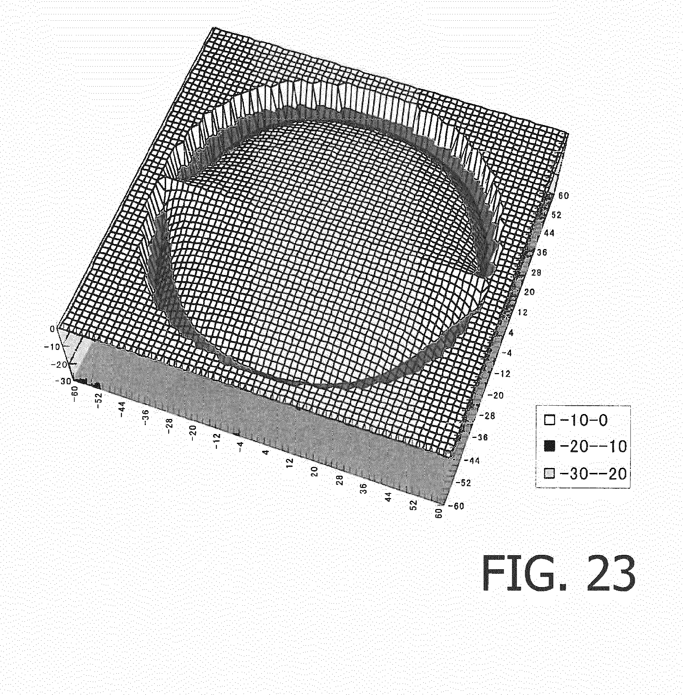

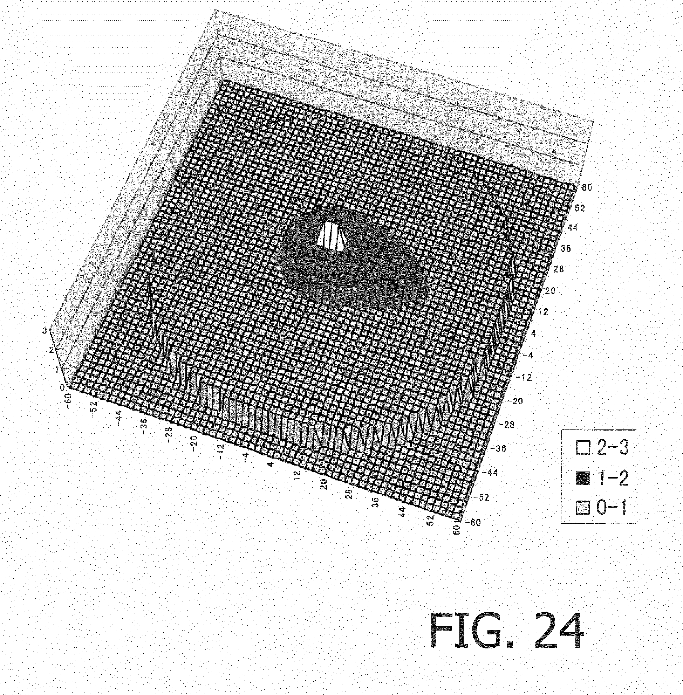

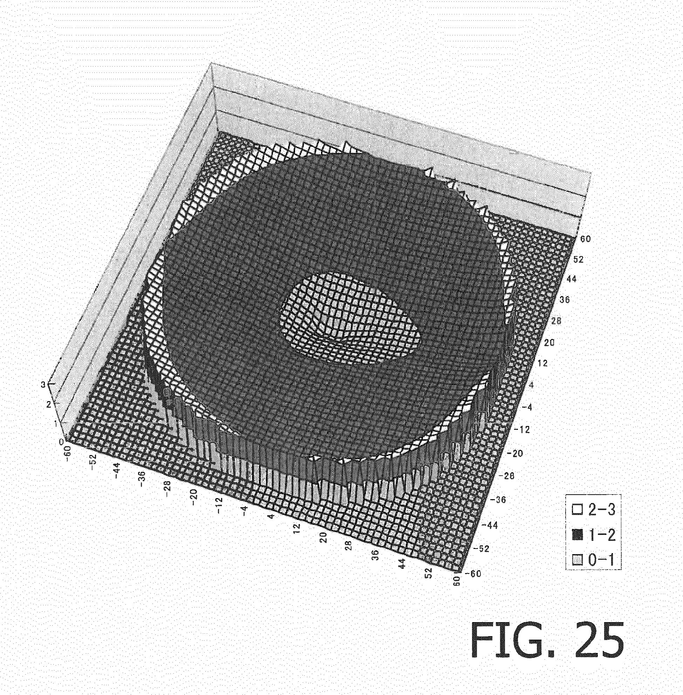

Next, as an example 2, an evaluation of eyeglass lenses, which is in general regarded as the definition of an anisometropia (greater than or equal to - 2D, in left and right), is performed. In this example, the spherical diopter power of the right eyeglass lens is set to - 4D, the astigmatism degree is set to 0D, namely, the right eyeglass lens is the same as the lens used in the above described example 1. On the other hand, for the left eyeglass lens, the spherical diopter power is set to - 6D, the astigmatism degree is set to 0D, and other conditions are set to the same as the above described example 1. This example is also an example of an evaluation of eyeglass lenses, and no iteration calculation is performed for optimization. Fig. 22 is the convergence aberration in the plane parallel direction, Fig. 23 is the convergence aberration in the plane perpendicular direction, Fig. 24 is the field of fixation through the eyeglass lenses for both eyes, the Fig. 25 is the values of the binocular visual acuity function, and the units are the same as Fig. 18 - Fig. 21, respectively.

From Figs. 22 and 23, the plane parallel component and the plane perpendicular component of the convergence aberration are large equally. Therefore, in the fusion state shown in Fig. 24, when the effective visual angle of the sensory fusion area is obtained in accordance patent No. 4158906, the angle of approximately 4 degrees is obtained, and therefore it is surely a narrow visual field. Since it is narrower than 5 degree, design cannot be realized, and it is not appropriate for normal use. It can be said that since the sensory fusion area in the central portion is small, the eyeball con not maintain the stable state. As a result, it is supported that the eyeglass lenses having the difference of -2D between the left and right tend to cause the visual fatigue. In this embodiment (2), it is classified into the classification where the sensory fusion area is small in the investigation process for the lens shape in the above described step S6. Although, conventionally, anisometropic lenses have been discussed by magnification, a problem that the visual fatigue might occur because the sensory fusion are becomes small due to the convergence aberration can be raised. Furthermore, the comfortable area represents the anisotropy by the difference between the horizontal and vertical components of the relative measurement value. For a common use lens, the visual fatigue function shown Fig. 25 is the limit becase the narrow sensory fusion area and the comfortable area. When the effective angle of the comfortable area is calculated in accordance with patent No 4158906, the effective angle is 32 degrees, and is a narrow visual field.

(3) Example 3 (Example of elevation angle of 20 degrees)

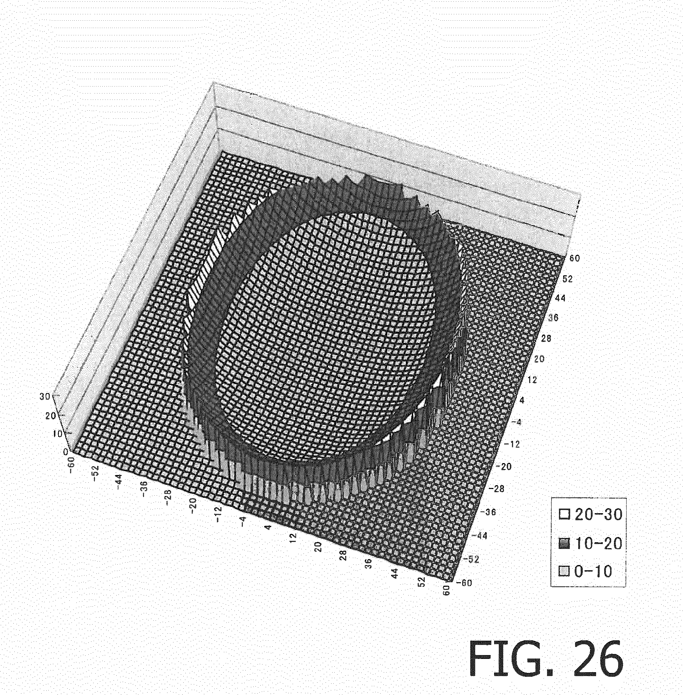

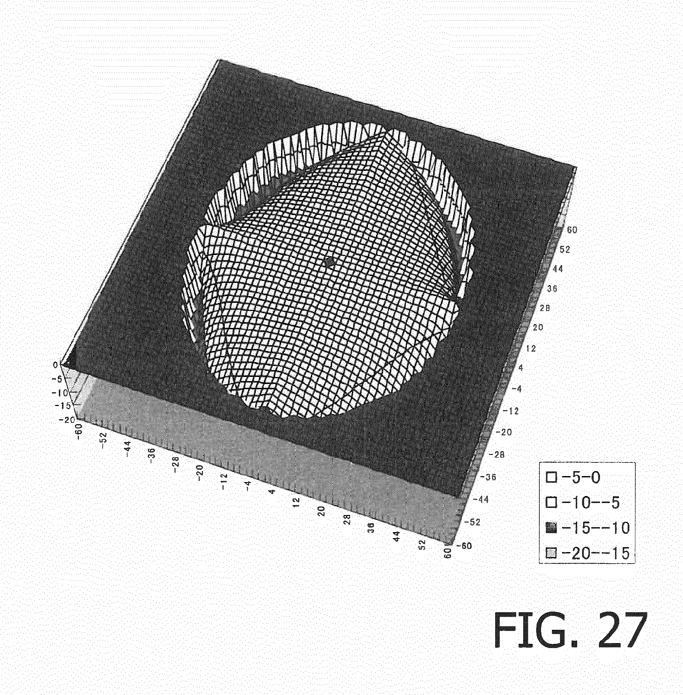

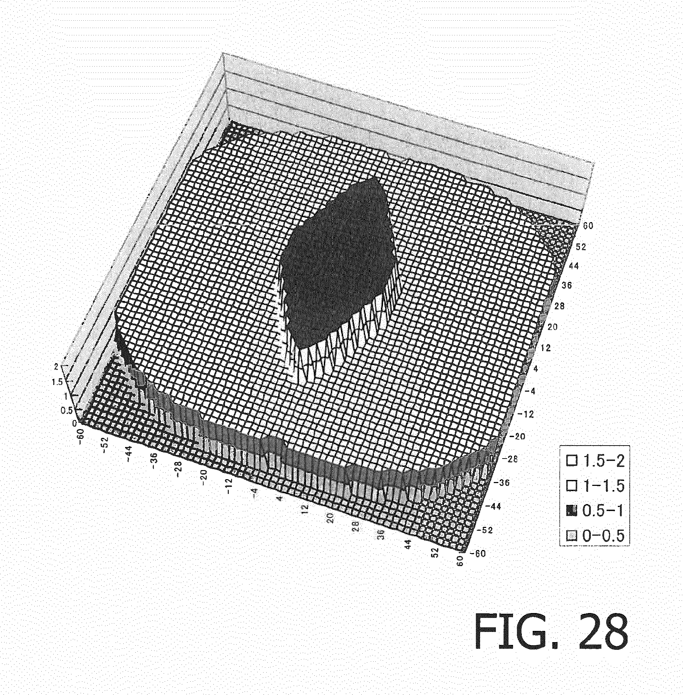

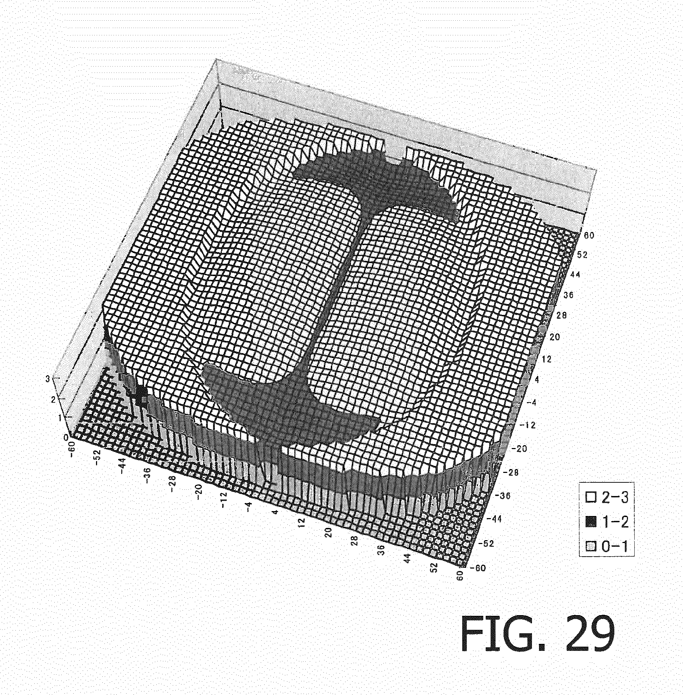

As the example 3, the convergence aberration whose frame has an elevation angle has been calculated. In this embodiment, conditions including the spherical equivalent and the cylindrical power are the same as those of the lens used in the above described embodiment 1, and the elevation angle of 20 degrees is added for evaluation as to how much the effect of the elevation angle is. This embodiment is also an embodiment for evaluation of the eyeglass lenses, and the optimized repetitive calculation is not executed, Fig. 26 illustrates the convergence aberration in the plane parallel direction, and Fig. 27 illustrates the convergence aberration in the plane vertical direction. Fig. 28 illustrates the fusion state through the eyeglass lenses of the both eyes. Fig. 29 illustrates the visual fatigue function. The units in these figures are the same as those of Figs. 18 to 21.

In this embodiment, the feature is that the lane parallel direction of th convergence aberration shown in Fig. 26 is extremely larger than the plane vertical direction shown in Fig. 27. Therefore, when the effective visual angle in the sensory fusion area in the fusion state shown in Fig. 28 is calculated, the effective visual angle is zero. It is worse than the embodiment 2, and is not appropriate for use. The comfortable area is not found. Therefore, it is not so bad when a wearer takes a still look at the front side; however, it is expected that, when the wearer walks or moves the wearer's eyeballs without moving the wearer's head, the wearer has uncomfortable feeling. This is because the range in which the wearer does not have the sense of depth in the binocular vision direction is large. As described above, according to the evaluation method of the present invention, by considering the uncomfortable feeling as the decrease of the sensory fusion area and the motor comfortable area, the quantification is made possible. Furthermore, regarding the visual fatigue function shown in Fig. 29, the visual sense of the comfortable area is 0 degree. By making a comparison with the embodiment 2, it is understood that it is a lens causing a large degree of fatigue in comparison with the embodiment 2. In particular, the visual fatigue is larger in comparison with the anisometropic lens, and the effect to the eyeglass lenses of the elevation angle is very large.

(4) Example 4 (Example in which the optimization is performed for the eyeglass lenses)

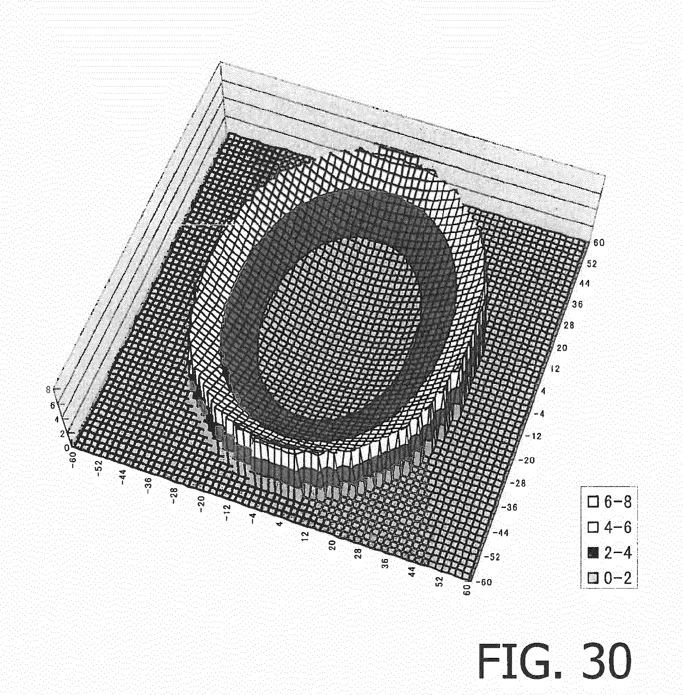

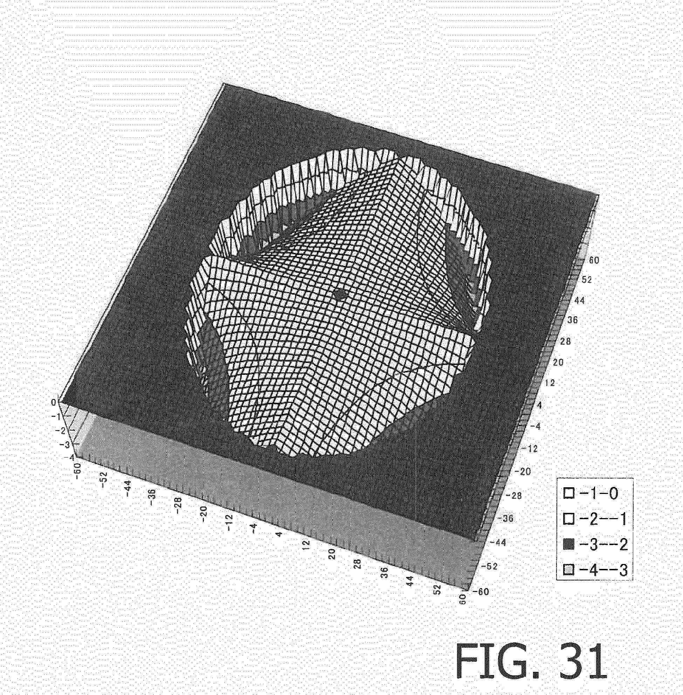

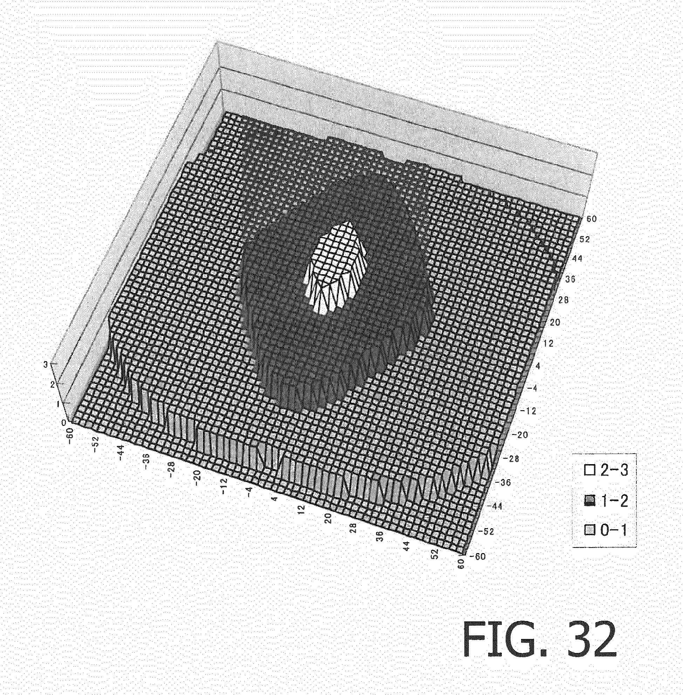

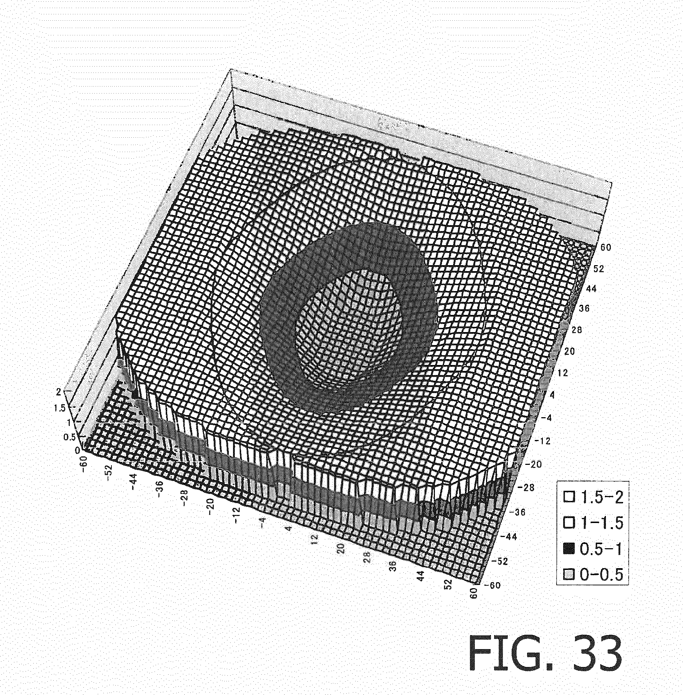

In the example 4, the conditions including the spherical equivalent, the cylindrical power and the elevation angle are the same as those of the embodiment 3. In this case, a function obtained by adding the visual fatigue function at all the lens evaluation pints is used as the evaluation function to optimize the lens shape. That is, the evaluation function is minimized by changing the convex and concave shapes of the eyeglass lens while executing the repetitive calculation of the steps S2 to S5. Figs. 30 to 33 show results. Fig. 30 illustrates the convergence aberration in the plane parallel direction, and Fig. 31 illustrates the convergence aberration in the plane vertical direction. Fig. 32 illustrates the fusion state through the eyeglass lenses of the both eyes, and Fig. 33 illustrates the values of the visual fatigue function. Units of these figures are the same as those of Figs. 17 to 20.

In comparison with the example 3, it can be seen that the both of the plane parallel component and the plane perpendicular component of the convergence aberration shown in Figs. 30 and 31 are considerably improved. Furthermore, the fusion state shown in Fig. 32 is also extremely improved, and when the effective visual angle of the sensory fusion area is calculated, the visual angle is 18 degrees. In comparison with the result of the example 3 shown in Fig. 28, both of the motor comfortable area (a black area) and the sensory fusion area (a white area) are broadened. The visual angle of the comfortable area of the visual fatigue function shown in Fig. 33 is 61 degrees. It is said that the angle at which the binocular vision can be realized for the eyeglass lens and the HMD is 55 degrees. Therefore, the binocular vision as the eyeglass lens is possible. In comparison with Fig. 29 of the example 3, the anisotropism is also moderated. That is, according to the optimization using the evaluation function proposed by the present invention, the convergence aberration is improved. As a result, the fusion state is improved considerably, and the eyeglass lenses which are suited for common use is obtained.

As described above, according to the invention, the quantitative evaluation of the binocular vision of the eyeglass lenses is made possible through use of the visual fatigue function including the relative measurement values, and the fusion performance of the binocular vision is enhanced. Furthermore, since it is possible to estimate how much the visual fatigue arises before wearing, risk of wearing can be reduced. It should be noted that the present invention is not limited to the above described embodiments, but can be varied within the scope of the present invention.

**Claims**

1.  A method for designing eyeglass lenses,
    wherein when a positive relative convergence, a negative relative convergence, a positive relative accommodation, a negative relative accommodation and a vertical fusional vergence, which are individual measurement values relating to binocular vision, are defined as relative measurement values, at least one of or both of the positive relative convergence and the negative relative convergence is included in an individual relative measurement value, the method comprising:

    determining optical design values for eyeglass lenses by optimizing binocular vision while using, as an evaluation function for the optimizing, a function obtained by adding visual fatigue functions including the relative measurement values as factors at respective evaluation points of an object.

2.  The method for designing eyeglass lenses according to claim 1, wherein the relative measurement value includes at least one of or both of the positive relative accommodation and the negative relative accommodation.

3.  The method for designing eyeglass lenses according to claim 1, wherein the relative measurement value includes the vertical fusional vergence.

4. The method for designing eyeglass lenses according to claim 1,
wherein, when considering a three-dimensional space whose horizontal axis, vertical axis and depth are respectively defined as an angle of convergence, the vertical fusional vergence of the motor fusion, and accommodation, for classification into a comfortable area and a visual fatigue area with reference to 1/3 of the relative measurement value as a threshold value of the visual fatigue function including the relative measurement value as a factor, the classification into the comfortable area and the visual fatigue function is made with reference to whether it is inside or outside of a first closed surface whose threshold is 1/3 of the relative measurement value.

5. The method for designing eyeglass lenses according to claim 4,
wherein, when considering a three-dimensional space whose horizontal axis, vertical axis and depth are respectively defined as the angle of convergence, the vertical fusional vergence of the motor fusion and the accommodation, for further classifying the comfortable area into the sensory fusion area and the motor comfortable area excepting the sensory fusion area, the classification into the sensory fusion area and the motor comfortable area is made with reference to whether it is inside or outside of a second closed surface whose threshold values are 1/2 of a horizontal component, 1/2 of a vertical component and 1/2 of a focal depth of Panum's fusional area.

6. The method for designing eyeglass lenses according to claim 5,
further comprising:

defining 1/3 of the positive relative convergence or the negative relative convergence of the relative measurement values as a threshold value of the motor comfortable area of the angle of convergence along an axis of the angle of convergence;
determining a convergence aberration defined as a difference between the angle of convergence at an evaluation point and a convergence angle reference value which is the angle of convergence of lines of fixation passing through reference points of the eyeglass lenses;
for the convergence aberration, determining a plane parallel component which is a projected component to a plane which is perpendicular to a median plane and includes a median line of the lines of fixation for which the angle of convergence of the evaluation point is obtained;
defining, as a judgment criterion of the motor comfortable area of the relative convergence, a difference between a value of the plane parallel component of the convergence aberration and a threshold value of the motor comfortable area of the angle of convergence;
defining 1/3 of the positive relative accommodation or the negative relative accommodation of the relative measurement values as a threshold value of the motor comfortable area of the accommodation, along the axis of the accommodation;
defining, a judgment criterion of the motor comfortable area of the relative accommodation, a difference between an average error in power obtained at the evaluation point and a threshold value of the motor comfortable area of the accommodation;
defining 1/3 of the vertical fusional vergence of the relative measurement values as a threshold value of the motor comforatbel area of the vertical fusional area, along an axis of the vertical fusional vergence of the motor fusion;
for the convergence aberration, determining a plane perpendicular component which is a projected component to a plane which is parallel with the median plane and includes a median line of the lines of fixation for which the angle of convergence at the evaluation point is obtained;
defining, as a judgment criterion of the motor comfortable area of the vertical fusional vergence, a difference between a value of the plane perpendicular component of the convergence aberration and the motor comfortable area of the vertical fusional vergence;
when COMH, COMV, COMR, COML and COMD represent coefficient with respect to the convergence aberration, the error in power represents a coefficient with respect to the relative measurement value, AREA1 defines the inside or the outside of the first closed surface, and it is classified as the comfortable area when AREA1 is smaller than 1, and it is classified as the visual fatigue area when AREA1 is larger than 1, (where, COMH defined when the horizontal component of the convergence aberration is positive is:

$$COMH = \text{plane parallel component of the convergence aberration} / (1/3 \text{ of the negative relative convergence}),$$

COMH defined when the horizontal component of the convergence aberration is negative is:

$$\text{COMH}=\text{plane parallel component of the convergence aberration / (1/3 of the positive relative convergence)},$$

$$\text{COMV}=\text{plane perpendicular component of the convergence aberration / (1/3 of the vertical fusional vergence)}$$

COMR defined when the error in power is positive is:

$$\text{COMR}=\text{error in power of the right eye / (1/3 of the negative relative accommodation)}$$

COMR defined when the error in power is negative is:

$$\text{COMR}=\text{error in power of the right eye/(1/3 of the positive relative accommodation)}$$

COML defined when the error in power is positive is:

$$\text{COML}=\text{error in power of the left eye / (1/3 of the negative relative accommodation)}$$

COML defined when the error in power is negative is:

$$\text{COML}=\text{error in power of the left eye / (1/3 of the positive relative accommodation)}$$

COMD=larger one of COMR and COML
AREA1=root of sum of squares having COMH, COMV, COMD as factors.

**7.** The method for designing eyeglass lenses according to claim 5,
further comprising:

defining 1/2 of the plane parallel component which is perpendicular to the median plane of Panum's fusional area as a sensory fusion threshold value of the angle of convergence;
determining the convergence aberration defined as a difference between the angle of convergence at the evaluation point and the convergence angle reference value which is the angle of convergence of the lines of fixation passing through the reference points of the eyeglass lenses;
for the convergence aberration, determining the plane parallel component which is projected component to the plane which is perpendicular to the median plane and includes the lines of fixation for which the angle of convergence at the evaluation point is obtained;
defining, as a judgment criterion of the sensory fusion of the relative convergence, a difference between a value of the plane parallel component of the convergence aberration and the sensory fusion threshold value of the angle of convergence;
defining 1/2 of the focal depth as the sensory fusion threshold value of the accommodation, along an axis of the accommodation;

defining, as a judgment criterion of the sensory fusion of the relative accommodation, a difference between an average error in power at the evaluation point and the sensory fusion threshold value of the accommodation;

defining, as the sensory fusion threshold value of the vertical fusional vergence, 1/2 of the plane perpendicular component which is parallel with the median plane of Panum's fusional area, along the axis of the vertical fusional vergence of the motor fusion;

for the convergence aberration, determining the plane perpendicular component which is a projected component to a plane which is parallel with the median plane and includes a median line of the lines of fixation for which the angle of convergence at the evaluation point is obtained;

defined, as a judgment criterion of the sensory fusion of the vertical fusional vergence, a difference between a value of the plane perpendicular component of the convergence aberration and the sensory fusinal threshold value of the vertical fusional vergence;

when SENH, SENV, SENR, SENL and SEND represent coefficients with respect to the convergence aberration, the error in power represents a coefficient with respect to the relative measurement value, AREA2 defines the inside or the outside of the second closed surface, it is classified as the sensory fusion area when AREA2 is smaller than 1, and, it is classified as the motor comfortable area when AREA2 is larger than 1 and is not the visual fatigue area, (where SENH=plane parallel component of the convergence aberration/PanumH
SENV=plane perpendicular component of the convergence aberration/Panum V
SENR=absolute value of (error in power of the right eye/PanumD)
SENL=absolute value of (error in power of the left eye/Panum D)
SEND=larger one of SENR and SENL
AREA2= root of sum of squares having SENH, SENV and SEND as factors
PanumH, PanumV and PanumD respectively represent 1/2 of the horizontal component, 1/2 of the vertical component and 1/2 of the focal depth of the Panum's fusional area at the central fovea).

8. The method for designing eyeglass lenses according to claim 1,
wherein the evaluation function and the visual fatigue function have a relationship defied by a following equation (1):

$$evaluation\ function = \sum_{i=1}^{n}\left[W_i \times visual\ fatigue\ function_i\right]^2 \qquad \cdots (1)$$

(where, in the equation (1), Wi represents a weight at i-th evaluation point of the object expressed in the binocular vision direction, the weight means a coefficient determined by importance of a wearing state in an area including i-th evaluation point of the eyeglass lens, and the (visual fatigue function)$_i$ takes a value as indicated below depending on the sensory fusion area, the motor comfortable area and the visual fatigue area,
in the sensory fusion area,
(visual fatigue function)$_i$ = 0
in the motor comfortable area and the visual fatigue area,
(visual fatigue function)$_i$ = common logarithm of FUNC
where,
when the plane parallel component DFh of the convergence aberration is positive,

$$VFH=(DFh-PanumH)/(1/3\ of\ the\ negative\ relative\ convergence - PanumH)$$

when the plane parallel component DFh of the convergence aberration is negative,

$$VFH=(DFh+PanumH)/(1/3\ of\ the\ positive\ relative\ convergence + PanumH)$$

when the plane perpendicular component of the convergence aberration is constantly negative,

$$VFV=(DFv+PanumV)/(1/3\ of\ the\ vertical\ fusional\ vergence + PanumV)$$

when the error in power of the right eye PowR is positive,

$$\text{VFR}=(\text{PowR}-\text{PanumD})/(1/3 \text{ of the negative relative accommodation} - \text{PanumD})$$

when the error in power of the right eye PowR is negative,

$$\text{VFR}=(\text{PowR}+\text{PanumD})/(1/3 \text{ of the positive relative accommodation} + \text{PanumD})$$

when the error in power of the left eye PowL is positive,

$$\text{VFL}=(\text{PowL}-\text{PanumD})/(1/3 \text{ of the negative relative accommodation} - \text{PanumD})$$

when the error in power of the left eye PowL is negative,

$$\text{VFL}=(\text{PowL}+\text{PanumD})/(1/3 \text{ of the positive relative accommodation} + \text{PanumD})$$

VFD=larger one of VFR and VFL
DVF= root of sum of squares having VFH, VFV and VFD as factors
in order to define a point of a closed surface of the Panum's fusional area as 0 and a point of a closed surface of the relative measurement value as 1, a function FUNC is defined as:

$$\text{FUNC}=9\times\text{DVF}+1$$

where PanumH, PanumV and PanumD respectively represent 1/2 of the horizontal component, 1/2 of the vertical component and 1/2 of the focal depth of the Panum's fusional area at the central fovea.

9. An eyeglass lens evaluation method, comprising:

   when a positive relative convergence, a negative relative convergence, a positive relative accommodation, a negative relative accommodation and a vertical fusional vergence, which are individual measurement values related to a binocular vision of a wearer of eyeglass, are defined as relative measurement values, measuring at least one of or both of the positive relative convergence and the negative relative convergence as the relative measurement value; and
   optimizing binocular vision while using, as an evaluation function for calculation of the optimizing, a function obtained by adding visual fatigue functions including the relative measurement values as factors at respective evaluation points.

10. An eyeglass lens manufacturing method, comprising:

   when a positive relative convergence, a negative relative convergence, a positive relative accommodation, a negative relative accommodation and a vertical fusional vergence, which are individual measurement values related to binocular vision of a wearer of eyeglass, are defined as relative measurement values, using at least one of or both of the positive relative convergence and the negative relative convergence as the relative measurement value; and
   optimizing the binocular vision while using, as an evaluation function for calculation of the optimizing, a function obtained by adding visual fatigue functions including the relative measurement values as factors at respective evaluation points.
   manufacturing eyeglass lenses based on optical design values obtained by the calculation for the optimizing.

11. An eyeglass lens manufacturing system in which an ordering side computer having a function of executing a process for ordering the eyeglass and is installed on an eyeglass lens ordering side, a manufacturing side computer having a function of receiving information from the ordering side computer and executing a process necessary for receiving an order for the eyeglass lens are connected via a network,

wherein the ordering side computer transmits information necessary for designing the eyeglass lenses including at least one of or both of a positive relative convergence and a negative relative convergence, to the manufacturing side computer;

wherein the manufacturing side computer includes:

a data input unit to which data including the relative measurement value transmitted from the ordering side computer is inputted;

a visual fatigue function calculation unit that calculates optical performance values at a plurality of evaluation points of the eyeglass lenses based on the inputted data;

an evaluation value optimization unit that optimizes the optical performance values by using, as an evaluation function, a function obtained by adding visual fatigue functions including, as factors, the relative measurement values including at least one of or both of the positive relative convergence and the negative relative convergence;

an evaluation function evaluating unit that evaluates the optical performance values by comparing the evaluation function with a predetermined threshold;

a design data correction unit that corrects design data when the values of the visual fatigue functions do not reach a predetermined convergence condition as a result of the evaluation by the evaluation value evaluating unit;

an optical design value determination unit that determines the design data based on a result of evaluation finished for each evaluation point by the evaluation function evaluating unit; and

a design data output unit that supplies the final design data obtained by the optical design value determination unit, to a device for processing a lens.

12. Eyeglass lenses manufactured by executing the steps of:

when a positive relative convergence, a negative relative convergence, a positive relative accommodation, a negative relative accommodation and a vertical fusional vergence, which are individual measurement values related to binocular vision of a wearer of eyeglass, are defined as relative measurement values, providing a relative measurement value including at least one of or both of the positive relative convergence and the negative relative convergence; and

executing optimization while using an evaluation function obtained by adding visual fatigue functions including the relative measurement values as factors at respective evaluation points; and

manufacturing the eyeglass lenses based on optical design values obtained by calculation of the optimizing.

500

100

200

300

101 102

201

202

# FIG. 1

201

## FIG. 2

203

204

| DATA INPUT UNIT |

| VISUAL FATIGUE FUNCTION CALCULATING UNIT |

205

| EVALUATION FUNCTION OPTIMI-ZATION UNIT |

206

207

| EVALUATION FUNCTION EVALUA-TING UNIT |

| DESIGN DATA CORRECTING UNIT |

208

209

202

| OPTICAL DESIGN VALUE DETERMI-NING UNIT |

| DESIGN DATA OUTPUT UNIT |

| LENS PROCESSING DEVICE |

START

INPUT DATA REGARDING MATERIALS OF LENSES, SHAPE DATA BASED ON A SPECIFICATION REGARDING A PRESCRIPTION, CENTRAL THICKNESS, DATA REGARDING SHAPES OF EYES, A FACE, AND A FRAME, AND A RELATIVE MEASUREMENT VALUE. — S0

SETUP AN OBJECT OF BOTH EYES - LENSES - BOTH EYEBALLS SYSTEM. — S1

CALCULATE A PRESCRIPTION VALUE AND AN ANGLE OF CONVERGENCE AT A SETUP REFERENCE POINT. — S2

AN ANGLE CONVERGENCE OF A LINE OF FIXATION, WHICH EXTENDS FROM A CENTER OF ROTATION OF THE EYEBALL TO THE EYEGLASS LENS, AN ERROR IN POWER WHICH DEPENDS ON AN EVALUATION POINT OF THE OBJECT, A RESIDUAL ASTIGMATISM AND A PRISM ARE CALCULATED, AND A CONVERGENCE ABERRATION IS OBTAINED FROM A DIFFERENCE BETWEEN THIS AND THE ANGLE OF CONVERGENCE CALCULATED AT S2. — S3

EACH EVALUATION POINT IS CLASSIFIED INTO THE SENSORY FUSION, COMFORTABLE AREA OR VISUAL FATIGUE AREA, FROM THE LEFT AND RIGHT ERROR IN POWER, THE CONVERGENCE ABERRATION, AND THE RELATIVE MEASUREMENT VALUES SET AT S0. — S4

FOR RESPECTIVE EVALUATION POINTS, IN ACCORDANCE WITH THE CLASSIFICATION AT S4, VISUAL FATIGUE FUNCTION IS CALCULATED. — S5

DETERMINE WHETHER THE RANGE OF FUSION SATISFIES THE PREDETERMINED CONDITION. — S6

NO

YES

TERMINATES THE EVALUATION AND DETERMINES OPTICAL DESIGN VALUES OF THE WHOLE SURFACE OF THE LENS. — S7

END

FIG. 3

40

## FIG. 4

RELATIVE VISUAL ACUITY

NOSE SIDE ◄─── POSITION ON RETINA ──► TEMPLE SIDE

## FIG. 5

AGE

ACCOMMODATION POWER [D]

**FIG. 6**

Legend:
- CONVERGENCE PERMISSIBLE TIME (WITHOUT LIMIT)
- CONVERGENCE LIMIT FOR SHORT TIME PRESENTATION (0.5 SECOND)

Y-axis: ACCOMMODATION
X-axis: CONVERGENCE — 0, 5 (20), 10 (10), 15 (6.7) [cm]

**FIG. 7**

Legend:
- CONVERGENCE PERMISSIBLE TIME (WITHOUT LIMIT)
- CONVERGENCE LIMIT FOR SHORT TIME PRESENTATION (0.5 SECOND)

Y-axis: ACCOMMODATION
X-axis: CONVERGENCE — 0, 5 (20), 10 (10), 15 (6.7) [cm]

**FIG. 8**

CONVERGENCE PERMISSIBLE TIME (WITHOUT LIMIT)
CONVERGENCE LIMIT FOR SHORT TIME PRESENTATION (0.5 SECOND)

ACCOMMODATION

CONVERGENCE

**FIG. 9**

CONVERGENCE PERMISSIBLE TIME (WITHOUT LIMIT)
CONVERGENCE LIMIT FOR SHORT TIME PRESENTATION (0.5 SECOND)

ACCOMMODATION

CONVERGENCE

# FIG. 10

# FIG. 11

FIG. 12

FIG. 13

# FIG. 14

# FIG. 15

# FIG. 16

# FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

# FIG. 34

FIG. 35

# FIG. 36

## A

(PD=0.06)

| cm | MA | arc min | △ |
|---|---|---|---|
|  | 0 | 0.0 | 0.0 |
| 2000 | 0.05 | 10.3 | 0.3 |
| 1000 | 0.1 | 20.6 | 0.6 |
| 667 | 0.15 | 30.9 | 0.9 |
| 500 | 0.2 | 41.3 | 1.2 |
| 400 | 0.25 | 51.6 | 1.5 |
| 333 | 0.3 | 61.9 | 1.8 |
| 286 | 0.35 | 72.2 | 2.1 |
| 250 | 0.4 | 82.5 | 2.4 |
| 222 | 0.45 | 92.8 | 2.7 |
| 200 | 0.5 | 103.1 | 3.0 |
| 182 | 0.55 | 113.4 | 3.3 |
| 167 | 0.6 | 123.7 | 3.6 |
| 154 | 0.65 | 134.0 | 3.9 |
| 143 | 0.7 | 144.3 | 4.2 |
| 133 | 0.75 | 154.6 | 4.5 |
| 125 | 0.8 | 164.9 | 4.8 |
| 118 | 0.85 | 175.2 | 5.1 |
| 111 | 0.9 | 185.5 | 5.4 |
| 105 | 0.95 | 195.7 | 5.7 |
| 100 | 1 | 206.0 | 6.0 |
| 95 | 1.05 | 216.3 | 6.3 |
| 91 | 1.1 | 226.6 | 6.6 |
| 87 | 1.15 | 236.8 | 6.9 |
| 83 | 1.2 | 247.1 | 7.2 |
| 80 | 1.25 | 257.3 | 7.5 |
| 77 | 1.3 | 267.6 | 7.8 |
| 74 | 1.35 | 277.9 | 8.1 |
| 71 | 1.4 | 288.1 | 8.4 |
| 69 | 1.45 | 298.3 | 8.7 |
| 67 | 1.5 | 308.6 | 9.0 |
| 65 | 1.55 | 318.8 | 9.3 |
| 63 | 1.6 | 329.0 | 9.6 |
| 61 | 1.65 | 339.2 | 9.9 |
| 59 | 1.7 | 349.4 | 10.2 |
| 57 | 1.75 | 359.6 | 10.5 |
| 56 | 1.8 | 369.8 | 10.8 |
| 54 | 1.85 | 380.0 | 11.1 |
| 53 | 1.9 | 390.2 | 11.4 |
| 51 | 1.95 | 400.4 | 11.7 |
| 50 | 2 | 410.6 | 12.0 |

## B

(PD=0.065)

| cm | MA | arc min | △ |
|---|---|---|---|
|  | 0 | 0.0 | 0.0 |
| 2000 | 0.05 | 11.2 | 0.3 |
| 1000 | 0.1 | 22.3 | 0.7 |
| 667 | 0.15 | 33.5 | 1.0 |
| 500 | 0.2 | 44.7 | 1.3 |
| 400 | 0.25 | 55.9 | 1.6 |
| 333 | 0.3 | 67.0 | 2.0 |
| 286 | 0.35 | 78.2 | 2.3 |
| 250 | 0.4 | 89.4 | 2.6 |
| 222 | 0.45 | 100.5 | 2.9 |
| 200 | 0.5 | 111.7 | 3.3 |
| 182 | 0.55 | 122.8 | 3.6 |
| 167 | 0.6 | 134.0 | 3.9 |
| 154 | 0.65 | 145.2 | 4.2 |
| 143 | 0.7 | 156.3 | 4.6 |
| 133 | 0.75 | 167.5 | 4.9 |
| 125 | 0.8 | 178.6 | 5.2 |
| 118 | 0.85 | 189.7 | 5.5 |
| 111 | 0.9 | 200.9 | 5.9 |
| 105 | 0.95 | 212.0 | 6.2 |
| 100 | 1 | 223.1 | 6.5 |
| 95 | 1.05 | 234.3 | 6.8 |
| 91 | 1.1 | 245.4 | 7.2 |
| 87 | 1.15 | 256.5 | 7.5 |
| 83 | 1.2 | 267.6 | 7.8 |
| 80 | 1.25 | 278.7 | 8.1 |
| 77 | 1.3 | 289.8 | 8.5 |
| 74 | 1.35 | 300.9 | 8.8 |
| 71 | 1.4 | 312.0 | 9.1 |
| 69 | 1.45 | 323.1 | 9.4 |
| 67 | 1.5 | 334.1 | 9.8 |
| 65 | 1.55 | 345.2 | 10.1 |
| 63 | 1.6 | 356.2 | 10.4 |
| 61 | 1.65 | 367.3 | 10.7 |
| 59 | 1.7 | 378.3 | 11.1 |
| 57 | 1.75 | 389.4 | 11.4 |
| 56 | 1.8 | 400.4 | 11.7 |
| 54 | 1.85 | 411.4 | 12.0 |
| 53 | 1.9 | 422.4 | 12.4 |
| 51 | 1.95 | 433.4 | 12.7 |
| 50 | 2 | 444.4 | 13.0 |

## FIG. 37

## FIG. 38

FIG. 39

EP 2 600 186 A1

FIG. 40

71

# FIG. 41

# FIG. 42

A

B

C

D

ABERRATION OF (-S,-C)

E

PE=(-S,-C/2)
ABERRATION OF AS=(-C)

RELATIONSHIP BETWEEN REFRACTIVE POWER ERROR AND VISUAL ACUITY
(VISUAL ACUITY IN DECIMAL REPRESENTATION)

FIG. 43

EP 2 600 186 A1

## FIG. 44

## FIG. 45

Sph    0dpt
Add  +  2dpt
$\phi$ 60mm

## INTERNATIONAL SEARCH REPORT

| | International application No. |
|---|---|
| | PCT/JP2011/066715 |

**A. CLASSIFICATION OF SUBJECT MATTER**
*G02C13/00*(2006.01)i, *G02C7/02*(2006.01)i

According to International Patent Classification (IPC) or to both national classification and IPC

**B. FIELDS SEARCHED**

Minimum documentation searched (classification system followed by classification symbols)
G02C13/00, G02C7/02

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho  1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2009/057708 A1  (Hoya Corp.),<br>07 May 2009 (07.05.2009),<br>entire text<br>& EP 2207021 A1        & CN 101842683 A | 1-12 |
| A | JP 2005-43545 A  (Pentax Corp.),<br>17 February 2005 (17.02.2005),<br>entire text<br>& US 2004/0190136 A1    & DE 102004014442 A<br>& KR 10-2004-0084750 A | 1-12 |
| A | JP 2001-198089 A  (Topcon Corp.),<br>24 July 2001 (24.07.2001),<br>entire text<br>(Family: none) | 1-12 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24 August, 2011 (24.08.11) | 06 September, 2011 (06.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/066715

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-511033 A  (Essilor International),<br>10 April 2008 (10.04.2008),<br>entire text<br>& US 2007/0058128 A1     & EP 1789836 A<br>& WO 2006/027448 A1      & FR 2874709 A<br>& FR 2874709 A1          & CA 2587479 A<br>& KR 10-2007-0050935 A   & CN 101010616 A<br>& CN 101825778 A         & AU 2005281634 B | 1-12 |

Form PCT/ISA/210 (continuation of second sheet) (July 2009)

# EP 2 600 186 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2002088828 A
- WO 2004018988 A
- JP HEI239767A PCT
- JP SHO5710113 A
- JP 2008511033A PCT
- JP 2000506628A PCT
- JP 2008069791 W
- JP 429416 B
- WO 4158906 A

### Non-patent literature cited in the description

- **RYOJI OSAKA ; SACHIO NAKAMIZO ; KAZUO KOGA.** Binocular Movement and Hering Theory, Experimental Psychology of eye movement. The University of Nagoya Press, 1993, 60-61
- **MASAKI EMOTO.** Relationship between visual fatigue and inconsistency between a focus adjustment and convergence of both eyes in a three-dimansional image vision. *visual science,* 2003, vol. 24 (1), 13
- Horizontal binocular disparity and visual fatigue during stereo display observation. *VISION,* 2005, vol. 17 (2), 101-112
- **TAKESHI NOGUCHI et al.** ACTIVE OPTICS EXPERRIMENTS I, SHACK-HARTMAN WAVEFRONT ANALYZER TO MESURE F/5 MIRRORS. *Publ. Natl. Astrron. Obs. Japan,* 1989, vol. 1, 49-55
- **MASATO WAKAKURA ; OSAMU MIMURA.** All of the vision and eyeball movement. Medical View Co, 2007, 147-148140-143
- **HOWARD, I. P. ; ROGER, B. J.** Binocular vision and stereopsis. New York Oxford Press, 1995, 1-736
- Little pupil science. **SHINOBU ISHIHARA ; SHIN-ICHI SHIKANO.** 17th revised version. Kanehara & Co., Ltd, 1925, 50
- **TOYOHIKO HATADA.** Depth information and a characteristic of a vision. Visual Information Research Group, 23 April 1974, 12
- **KAZUHIKO UKAI.** Influence of a stereoscopic image on a biological body: What will happen when a stimulation of an accommodation contradicts a stimulation of a convergence. *vision,* vol. 17 (2), 113-122
- **DAVID M. HOFFMAN ; AHANA R. GIRSHICK ; KURT AKELEY ; MARTIN S. BANKS.** Vergence-accommodation conflicts hinder visual performance and cause visual fatigue. *journal of vision,* 2008, vol. 8 (3, 33
- **YUKIO IZUMI ; TOSHINARI KAZAMI.** Examination of Binocular vision functionality. *Revised Version, Waseda Optometry College,* 1985, 5
- **SETSUYA TSUDA.** Introduction to the American 21-item inspection- Examination and analysis of visual performance. Kindai Kougaku Publishing Co, 1983
- Vision II. Asakura Publishing Co., Ltd, 2007, 131-132
- **SCHOR, C. ; WOOD, I. ; OGAWA J.** Binocular sensory fusion is limited by spatial resolution. *Vision Research,* 1984, vol. 24 (7), 661-665
- **MASAKI EMOTO ; SUMIO YANO ; SHOJIRO NAGATA.** Thesis: Distributions of fusional convergence limits, when a stereoscopic image system is observed. *Journal of the institute of image information and television engineers,* 2001, vol. 55 (5), 703-710
- **SHOJIRO NAGATA.** Distributions of ''Vergence Fusional Stereoscopic Limit (VFSL)'' of Disparity in a Stereoscopic Display. *TVRSV,* 2000, vol. 7 (2), 239-246
- **H.B. PETERS.** THE RELATIONSHIP BETWEEN REFRACTIVE ERROR AND VISUAL ACUITY AT THREE AGE LEVELS. *Am. J. Optom. Physiol. Opt.,* 1961, vol. 38 (4), 194-198
- **TADAO TSURUTA.** History of eyesight. Transition of age and adjustment curve. *Japanese journal of visual science,* vol. 19 (3), 103
- Handbook of Visual Information Processing. Asakura Publishing Co., Ltd, 2000, 283-287
- Vergent Movement and Binocular Stereopsis. *Optical Review,* January 1994, vol. 23 (1), 17-22
- **TAKAGI M et al.** Adaptive change in dynamic properties of human disparity-induced vergence. *Invest Ophthalmol. Vis Sci,* 2001, vol. 42, 1479-1486